# EUROPÄISCHE PATENTSCHRIFT

(11) **EP 3 439 850 B1**
(45) Veröffentlichungstag und Bekanntmachung des Hinweises auf die Patenterteilung: **06.05.2020**
(21) Anmeldenummer: 17716457.1
(22) Anmeldetag: 24.03.2017
(51) Int. Cl.: B29C 51/10, B29C 51/08, B29C 51/26, B29C 51/30, B29C 51/42, B29K 69/00, B29C 51/16, B29C 53/04, B29C 63/00, B29C 63/02, B29C 63/04

(54) **VERFAHREN UND FORMWERKZEUG ZUR WARMUMFORMUNG EINES EBENEN THERMOPLASTISCHEN SCHICHTSTOFFES**
METHOD AND MOLDING TOOL FOR HOT-FORMING A FLAT THERMOPLASTIC LAMINATE
PROCÉDÉ ET OUTIL DE FORMAGE POUR FORMER À CHAUD UN MATÉRIAU STRATIFIÉ THERMOPLASTIQUE PLAN

(30) Priorität: 04.04.2016 DE 102016004047
(43) Veröffentlichungstag der Anmeldung: 13.02.2019
(73) Patentinhaber: Niebling GmbH, 82377 Penzberg (DE)
(72) Erfinder: DREXLER, Christian, 82467 Garmisch-Partenkirchen (DE); NIEBLING, Curt, 82377 Penzberg (DE)
(74) Vertreter: Brehm, Hans-Peter
(86) Internationale Anmeldenummer: PCT/EP2017/000367
(87) Internationale Veröffentlichungsnummer: WO 2017/174176

(56) Entgegenhaltungen:
- EP-A1- 0 623 449
- WO-A1-97/48542
- DE-A1- 2 603 782
- DE-A1-102008 050 564
- US-A- 5 785 910

## Beschreibung

### TECHNISCHES GEBIET

Die vorliegende Erfindung betrifft ein Verfahren zur Warmumformung eines ebenen Schichtstoffes aus thermoplastischem Kunststoff. Mit Hilfe dieses Verfahrens können 3D-Formteile aus Folien oder Platten hergestellt werden. Ferner kann dieses Verfahren zur Kaschierung eines 3D-Trägerteils mit einem Schichtstoff eingesetzt werden. Die Erfindung erfasst auch die nach diesem Verfahren erhältlichen Produkte. Ferner bezieht sich die Erfindung auf ein Formwerkzeug zur Durchführung dieses Verfahrens.

"3D-Formteil" und "3D-Trägerteil" bezeichnet hier je ein festes Teil, bzw. einen Gegenstand oder Körper mit einer dreidimensional gestalteten Oberflächenkontur bzw. -gestalt bzw. -geometrie. Der Schichtstoff kann einlagig oder mehrlagig ausgebildet sein. Ein typischer bevorzugter Schichtstoff enthält wenigstens eine Folie und/oder Platte, je aus thermoplastischem Kunststoff, bei dem es sich beispielsweise um Polycarbonat (PC), Poly(meth)acrylat (PMMA), Polyester (PE), Polyamid (PA), Polyarylsulfon (PSU) oder Polyvinylchlorid (PVC) handeln kann.

Eine solche Folie und/oder Platte kann wenigstens auf Teilen einer oder beider Oberfläche(n) bedruckt, metallisiert und/oder sonst wie beschichtet sein, was dem 3D-Formteil oder dem kaschierten 3D-Trägerteil ein dekoratives Aussehen verleiht und dessen Gebrauchswert erhöht. Ein mehrlagiger Schichtstoff kann zusätzlich zu wenigstens einer Folie und/oder einer Platte je aus thermoplastischem Kunststoff wenigstens ein weiteres anderes Schichtmaterial enthalten.

Produkte des erfindungsgemäßen Verfahrens sind beispielsweise Innenausstattungsteile für Kraftfahrzeuge, hier beispielsweise das Armaturenbrett oder Teile davon, ferner Applikationen und sonstige Bestandteile von Möbeln sowie Gehäuse und/oder Bestandteile sonstiger dekorativer hochwertiger Gebrauchsgegenstände. 3D-Formteile aus Folien können bei Bedarf mit weiterem Kunststoff hinterspritzt werden. Verfahren wie Insert Moulding, Compression Moulding und weitere Verfahren dieser Art liefern hier mehrschichtige, gegebenenfalls dünnwandige 3D-Formteile, an denen sich ein Dekor innerhalb der Formteilmasse befindet und damit vor Abrieb geschützt ist.

Aus transparenten Kunststoffplatten können beispielsweise gewölbte Scheiben für Fahrzeuge einschließlich Kraftfahrzeuge, für Schiffe (Bullaugen) und für Flugzeuge, Visiere für Schutzhelme, Windschutzschirme für motorisierte Zweiräder, glasklare Abdeckungen und Verkleidungen für Maschinen sowie weitere stabile, glasklare, eher großflächige Teile mit wenigstens einer aus der ursprünglichen Ebene heraustretenden Gestalt bzw. Wölbung erhalten werden.

Mehr im Einzelnen betrifft die Erfindung ein Verfahren nach dem Oberbegriff von Anspruch 1.

### ZUM STAND DER TECHNIK

Je die Dokumente US 5 108 350 A, EP 0 371 425 B1 oder DE 38 40 542 C1 offenbaren ein Verfahren zur Herstellung eines tiefgezogenen Kunststoff-Formteils, wobei kalt-reckbares Folienmaterial bei einer Arbeitstemperatur unterhalb der Erweichungstemperatur des Folienmaterials mit Hilfe eines fluiden Druckmittels unter einem Druckmitteldruck größer 20 bar unmittelbar und direkt beaufschlagt und innerhalb einer Zeitspanne kleiner 5 Sekunden isostatisch umgeformt wird. Vorzugsweise kann unter einem Druckmitteldruck zwischen 50 und 300 bar gearbeitet werden. Eine mit einem Farbaufdruck versehene Folie kann vorzugsweise bei einer Arbeitstemperatur zwischen 80 und 130 °C umgeformt werden. Zur Umformung wird die anfänglich ebene Folie vom fluiden Druckmittel an ein Werkzeug angelegt, angepresst und angeformt, das sich innerhalb einer Formstation befindet. Im Anschluss an eine solche Hochdruckumformung kann weiteres, vorzugsweise transparentes Kunstharz an das so erhaltene Formteil oder Tiefziehteil angespritzt werden. Es werden formstabile, selbsttragende 3D-Formteile aus thermoplastischem Kunststoff erhalten. Dieses Verfahren wird in der Fachwelt auch als "Hochdruckverformung" bzw. "Hochdruckumformung" von Kunststofffolien bzw. als Höchstdruckverfahren bzw. als Kaltverformen nach dem High Pressure Forming bzw. als HPF-Verfahren (von High Pressure Forming) oder bezogen auf seinen Erfinder als Niebling-Verfahren bezeichnet und wird im Rahmen dieser Unterlagen auch als "isostatische Hochdruckumformung" bezeichnet.

Die Hochdruckumformung von Platten mit Schichtdicken von 2 bis 18 mm aus thermoplastischem Kunststoff unter HPF-Bedingungen ist im Dokument WO 2015/025285 A2 sowie im Dokument EP 2 958 733 B1 angesprochen.

Vorrichtungen zur Durchführung des HPF-Verfahrens sind beispielsweise in den Dokumenten DE 41 13 568 C1 oder DE 10 2008 050 564 A1 beschrieben.

Charakteristisch für die isostatische Hochdruckumformung bzw. für das HPF-Verfahren ist die schlagartige Umformung der Kunststofffolie mit Hilfe eines fluiden Druckmittels unter einem Druckmitteldruck größer 20 bar. Der Widerstand der noch nicht völlig erweichten Kunststofffolie gegen eine Umformung wird durch den hohen Druckmitteldruck überwunden. Hierin liegt der wesentliche Unterschied zum Thermoformen, wie es beispielsweise in dem Fachbuch "Thermoformen in der Praxis", von Peter Schwarzmann, 2. Auflage, Carl Hanser Verlag, München 2008 beschrieben ist. Beim Thermoformen wird der Widerstand der Kunststofffolie gegen eine Umformung dadurch herabgesetzt, dass die Umformung der Folie bzw. des Halbzeugs bei der Erweichungstemperatur des Folien- bzw. Halbzeug-Materials oder bei einer noch höheren Temperatur vorgenommen wird. Die erweichte, plastische bis fast schmelzflüssige Folie setzt der Umformung nur einen geringen Widerstand entgegen, so dass die Umformung bei der Vakuumformung unter einer Druckdifferenz von 1 bar gegenüber dem Umgebungsdruck, sowie bei der Druckluftformung unter einem Formdruck bis zu etwa 7,5 bar vorgenommen werden kann. Weil die Druckluftformung unter einem höheren Formdruck durchgeführt wird, als die Vakuumformung, wird die Druckluftformung typischerweise bei einer niedrigeren Umformtemperatur durchgeführt, als die Vakuumformung. Bei der Vakuumformung muss die Folie bzw. das Halbzeug noch plastischer, noch weicher und noch leichter verformbar sein, weil nur ein geringerer wirksamer Formdruck von knapp 1 bar zur Verfügung steht.

Zum "Thermoformen auf Plattenmaschinen" ist dort (vgl. "Thermoformen in der Praxis", 2. Auflage, Seite 105 und Folgende) ausgeführt:
"Der Ablauf beim Thermoformen kann in zwei Schritte unterteilt werden, das Vorformen oder Vorstrecken und das Ausformen. Weil in vielen Fällen die allein durch das Ausformen mit Vakuum oder Druckluft erreichte Wanddickenverteilung nicht zufrieden stellt, muss vorgeformt werden. Ziel des Vorformens ist es, eine Kontur zu erreichen, die der Kontur des Fertigteils möglichst nahe kommt. Die Ausformschärfe wird beim Ausformen erzeugt. Das Vorformen ist in den meisten Fällen wichtiger für die Wanddickenverteilung als das Ausformen. Das Vorformen ist immer ein Vorstrecken und kann auf unterschiedliche Weise erfolgen, beispielsweise durch
- mechanisches Vorstrecken mit dem Formwerkzeug selbst;
- mechanisches Vorstrecken mit einem Hilfsstempel;
- pneumatisches Vorstrecken durch Vorblasen oder Vorsaugen; sowie durch eine
- Kombination von mechanischem und pneumatischem Vorstrecken".

Eine entsprechende "Negativformung mit Vorstreckstempel" ist auf Seite 114 gezeigt; hier wird durch Vorblasen eine Blase erzeugt, in welche dann ein Vorstreckstempel eintaucht. Eine entsprechende "Positiv-Negativ-Formung" ist auf Seite 116 gezeigt; "hier erfolgt ein Vorformen durch Vorblasen, und die gebildete Blase wird anschließend mit Hilfe eines mechanischen Stempels zu einem Vorformling umgestülpt, d.h. zu einer Kontur, welche der Kontur des Fertigteils ähnlich ist; anschließend wird durch Einwirkung von Vakuum ausgeformt".

Es gibt keine Erwähnung von unterschiedlichen bzw. verschiedenen festen abformenden Werkzeugen oder nicht ebenen Konturen, die im Verlauf eines Umformverfahrens Formteile mit sich unterscheidenden Konturen erzeugen.

Das Dokument WO 97/48542 A1 betrifft eine Verfahren und eine Vorrichtung zum Thermoformen von Kunststoff-Schichtstoffstücken. Zunächst wird ein ebenes, aus thermoformbaren Kunststoff bestehendes Folienstück längs seines gesamten Umfangs an einem Rahmen festgelegt, dessen beide gegenüberliegende Rahmenseitenplatten sowie eine Rahmenendplatte so verschieblich gehalten sind, dass sie im Verlauf des nachfolgenden Tiefziehvorgangs am Rahmen nach Innen gerückt werden und eine, die Rahmenfläche verkleinernde Verstellung ausführen können. Das am Rahmen festgelegte Folienstück wird in einen Ofen gefahren und dort auf eine Thermoform-Temperatur erwärmt, wobei das nicht unterstützte Folienstückzentrum erweicht und leicht durchzuhängen beginnt. Das so erwärmte Folienstück wird in einem zweistufigen Verfahren umgeformt. In einer ersten Verfahrensstufe drückt ein bewegter Stempel auf das Zentrum des erwärmten und am Rahmen eingespannten Folienstücks, zieht, reckt und streckt das Folienstück in alle drei Raumrichtungen, und legt dessen Zentrum schließlich an eine passend konturierte Matrize an. Das während dieses Tiefziehvorganges an den Rahmenteilen ziehende Folienstück bewirkt eine die Rahmenfläche verkleinernde Verstellung der Rahmenteile, wobei die beiden Rahmenseitenplatten sowie eine Rahmenendplatte nach Innen gerückt werden. Hierdurch kann sich eine rahmennahe Randzone des Folienstücks an die Umfangswand des Stempels anlegen kann und dort Aussparungen bzw. Hohlräume abdichten, die im Stempelinneren ausgebildet sind. In einer zweiten Verfahrensstufe wird über im Stempelinneren ausgesparte Kanäle Unterdruck bzw. "Vakuum" an diesen, am Stempelumfang anliegenden Folienabschnitt angelegt, wodurch dieser Folienabschnitt in die im Stempelinneren ausgebildeten Aussparungen bzw. Aushöhlungen hineingezogen, weiter umgeformt und schließlich an diese Stempelaussparungen angelegt wird, um schließlich Hinterschneidungen am fertigen Folienformteil zu erzeugen. Das hier offenbarte zweistufige Umformverfahren sieht keine isostatische Hochdruckumformung eines ebenen erwärmten Folienstücks mit Hilfe eines fluiden Druckmittels vor, wie sie beim HPF-Verfahren bzw. bei der isostatischen Hochdruckumformung angewandt wird.

Eine Weiterentwicklung der Hochdruckumformung von Kunststofffolien unter HPF-Bedingungen bezieht sich darauf, einen einlagigen oder mehrlagigen, anfänglich ebenen Schichtstoff, wie etwa eine Kunststofffolie unter High Pressure Forming Bedingungen an ein 3D-Trägerteil anzukaschieren. Ein gattungsgemäßes Verfahren dieser Art ist aus dem Dokument DE 10 2010 021 892 B4 bekannt.

Das Dokument DE 101 53 035 B4 betrifft einen Spannrahmen. Dieser Spannrahmen dient zum Halten von dreidimensional zu verformenden Matten, insbesondere glasfaserverstärkten Matten, an einem Presswerkzeug, das eine abformende, nicht ebene Kontur an einem Unterwerkzeug sowie eine kongruente, abformende, nicht ebene Kontur an einem Oberwerkzeug aufweist. Zur dreidimensionalen Verformung wird eine ursprünglich ebene Matte zwischen diese Konturen eingebracht, und das Oberwerkzeug wird an das Unterwerkzeug angelegt, wodurch die Matte entsprechend der Formkonturen verformt wird. Der Spannrahmen wird durch vier obere Leisten am Oberwerkzeug und durch vier, je parallel und beabstandet angeordnete untere Leisten am Unterwerkzeug gebildet. Jede Leiste besteht aus einem elastischen Material, beispielsweise Federstahl, und ist mit gegenpoligen Magneten versehen. Nachdem die ebene Matte zwischen die oberen und unteren Leisten eingebracht worden ist, werden passende Leistenpaare zusammengeführt und mit Hilfe von Magnetkraft zusammengehalten. Jedes Leistenpaar kann nunmehr mit Hilfe von Hubvorrichtungen unterschiedlich weit auf das Unterwerkzeug zu verstellt werden, wobei bereits eine grobe Anformung der ursprünglich ebenen Matte an die abformende Kontur am Unterwerkzeug stattfindet.

Das Dokument DE 10 2010 041 179 A1 betrifft ein Verfahren zur Herstellung eines Vorformlings aus Fasermaterial. Hierbei wird eine Fasermatte über einen Spannrahmen gespannt, der ein erstes Spannrahmenteil und ein zweites Spannrahmenteil aufweist, zwischen welche die Fasermatte eingespannt wird. Der Spannrahmen befindet sich zwischen einem Oberwerkzeug und einem Unterwerkzeug eines Presswerkzeugs. Durch Schließen des Presswerkzeugs wird die Fasermatte in eine Formkavität des Presswerkzeugs gezogen. Die Besonderheit besteht darin, dass die Fasermatte zwischen Berührflächen der Spannrahmenteile eingespannt wird, die uneben sind. Die Spannkraft, mit welcher diese unebenen Spannrahmenteile die Fasermatte einspannen, wird so eingestellt, dass die Fasermatte beim Schließen des Presswerkzeugs in Richtung des Presswerkzeugs nachrutschen kann. Hierdurch soll eine Faltenbildung des Vorformlings möglichst vermieden werden.

Das bekannte HPF-Verfahren ist seiner Natur nach ein Tiefziehverfahren. Durch Tiefziehen, Dehnen und Verstrecken werden am 3D-Formteil zusätzliche Flächen geschaffen, die am ursprünglich ebenen Schichtstoff nicht vorhanden sind. Die Flächenzunahme erfordert Materialwanderungen, die wiederum Schichtdickenunregelmäßigkeiten verursachen. Häufig müssen am ebenen Schichtstoff zusätzliche Zugflächen vorgesehen werden, aus denen Schichtstoffmaterial zur Umformung des ebenen Schichtstoffes zum 3D-Formteil abwandern kann. Die verbleibenden Zugflächenreste müssen anschließend entfernt werden, was den Materialverbrauch steigert, ohne zusätzlichen Nutzen zu bringen. Eine erhebliche Dehnung und Verstreckung schädigt dünne metallische Leiterbahnen, die auf dem ebenen Schichtstoff aufgebracht sind, um am 3D-Formteil eine Leitung von Strom und/oder Spannung zu ermöglichen. Diese und weitere Ergebnisse lassen sich wie folgt zusammenfassen: Beim Tiefziehen tritt Tiefziehstress auf, der am Tiefziehprodukt Schäden und weitere sonstige Nachteile verursacht.

Es hat verschiedene Vorschläge gegeben, diesen Tiefziehstress zu vermindern oder zu vermeiden.

Mit dem Dokument WO 2011/083013 A2 wird vorgeschlagen, den Tiefziehstress beim Tiefziehen unter HPF-Bedingungen dadurch zu vermindern, dass beim Erwärmen eines ebenen Folienstücks in einer Heizzone einen oder mehrere Folienbereich(e) des Folienstücks, die vor der Verformung stärker erwärmt wurden, während der Verformung stärker zu verstrecken (Außenbereich) und die Bereiche, die vor der Verformung weniger erwärmt wurden, während der Verformung weniger oder gar nicht zu verstrecken (Nutzbereich), wobei der Temperaturunterschied zwischen Nutzbereich und Außenbereich 10 bis 50 °C betragen soll. Die unterschiedliche Erwärmung zwischen Nutzbereich und Außenbereich soll durch passende Einbringung von Blenden zwischen Folie und Heizstrahlern in der Heizzone erfolgen. Der Außenbereich dient hier als Zugflächen, und die nach der Verformung verbleibenden Zugflächenreste müssen entfernt werden, was den Materialverbrauch steigert.

Auch das Dokument DE 10 2009 048 334 A1 sieht am, unter HPF-Bedingungen umzuformenden Folienstück einen Nutzbereich und einen zu verwerfenden Außenbereich vor. Im Außenbereich sollen benachbart zum umzuformenden Bereich ein oder mehrere, den Nutzbereich umgebende und die Folie vollständig durchtrennende Schnitte vorgesehen werden. Im Verlauf der isostatischen Umformung des ebenen Folienstücks unter HPF-Bedingungen werden solche Schnitte zu mehrere Millimeter breiten Spalten verbreitert. Anstelle im Nutzbereich des Folienstücks neue Flächen durch Dehnung der Folie zu bilden, werden außerhalb des Nutzbereichs neue Flächen durch Verbreiterung dieser Schnitte zu deutlichen Spalten gebildet; zu transportierendes, wanderndes Folienmaterial wird durch Luft ersetzt. Die Dehnungsbeanspruchung des Folienabschnitts im Nutzbereich des Folienstücks soll ganz wesentlich vermindert werden.

### AUFGABE DER VORLIEGENDEN ERFINDUNG

Davon ausgehend, besteht die Aufgabe der vorliegenden Erfindung darin, bei der Warmumformung von ebenen Schichtstoffen aus thermoplastischem Kunststoff unter HPF-Bedingungen den Tiefziehstress gegenüber dem herkömmlichen, klassischen HPF-Verfahren ganz wesentlich zu vermindern, insbesondere dann, wenn eine erhebliche einachsige Umformung senkrecht zur Schichtstoffebene vorgenommen wird.

Nach dem erfindungsgemäßen Verfahren soll die Herstellung von 3D-Formteilen aus dem ursprünglich ebenen, aus thermoplastischem Kunststoff bestehenden Schichtstoff möglich sein. Ferner soll nach diesem Verfahren ein vorgegebenes 3D-Trägerteil mit einem, ursprünglich ebenen, aus thermoplastischem Kunststoff bestehenden Schichtstoff unter HPF-Bedingungen kaschiert werden, wobei der Tiefziehstress vermindert ist.

Ferner soll ein Formwerkzeug zur Durchführung des erfindungsgemäßen Verfahrens bereitgestellt werden.

### DIE ERFINDUNGSGEMÄSSE LÖSUNG

Ein erster Gesichtspunkt der vorliegenden Erfindung betrifft ein Verfahren zur Warmumformung eines ebenen, aus thermoplastischem Kunststoff bestehenden Schichtstoffes zur Herstellung eines 3D-Formteils oder zur Herstellung eines, mit einem Schichtstoff kaschierten 3D-Trägerteils.

Ausgehend von einem Verfahren zur Warmumformung eines ebenen, aus thermoplastischem Kunststoff bestehenden Schichtstoffstücks zu einem 3D-Formteil oder zur Kaschierung eines 3D-Trägerteils, wobei das ebene Schichtstoffstück mit seiner Randzone auf dem Rahmen einer rahmenförmigen Palette abgelegt und auf eine vorgegebene Temperatur erwärmt wird, und
die innerhalb dieser Randzone befindliche Formfläche des warmen Schichtstoffstücks mit einem fluiden Druckmittel, insbesondere Druckluft, unter einem Druckmitteldruck von 20 bar bis 300 bar beaufschlagt und innerhalb einer Zeitspanne kleiner 5 Sekunden isostatisch zum 3D-Formteil umgeformt wird oder an das 3D-Trägerteil ankaschiert wird,
was hier auch als isostatische Hochdruckumformung bezeichnet wird,
ist die erfindungsgemäße Lösung obiger Aufgabe
**dadurch gekennzeichnet, dass**
das ebene Schichtstoffstück mit seiner Randzone so auf diesem Rahmen angeordnet wird, dass Teile dieser Randzone des warmen ebenen Schichtstoffstücks auf diesem Rahmen in einer ersten Schichtstoffrichtung gleiten können; und zunächst zwei feste, identische oder weitgehend identische, nicht ebene Konturen auf zwei parallele, beabstandete und zueinander gegenüberliegend angeordnete Schichtstoffstück-Randabschnitte einachsig senkrecht zur Schichtstoffebene einwirken und das gesamte warme ebene Schichtstoffstück nur in dieser ersten Schichtstoffrichtung, also monodirektional, zu einem warmen, monodirektional abgeformten Vorformling umformen; und
anschließend an diesem warmen, monodirektional abgeformten Vorformling die isostatische Hochdruckumformung durchgeführt wird.

Sofern zwei "weitgehend identische" Konturen das ebene Schichtstoffstück zu einem monodirektional abgeformten Vorformling umformen, bedeutet dies, dass das ebene Schichtstoffstück faltenfrei und verstreckungsfrei oder verstreckungsarm umgeformt wird; als verstreckungsarme Umformung wird hier eine solche Umformung angesehen, welche an der ursprünglichen Fläche eine Flächenzunahme kleiner 4 % erzeugt.

Ein solches Umformverfahren, bei welchem bei der einachsigen Umformung des ebenen Schichtstoffes senkrecht zur Schichtstoffebene nur eine Umformung in derjenigen Schichtstoffrichtung erfolgt, in welcher der Schichtstoff nicht eingespannt ist, jedoch gleichzeitig eine Umformung in der dazu orthogenalen Schichtstoffrichtung nicht erfolgt, wird nachstehend als "einachsig-monodirektionale Umformung" oder häufiger kurz nur als "monodirektionale Umformung" bezeichnet. An einem ebenen Schichtstoff kann ohnehin eine Umformung nur einachsig senkrecht zur Schichtstoffebene erfolgen, so dass die Erwähnung der einachsigen Umformung senkrecht zur Schichtstoffebene nicht zwingend erforderlich erscheint. Ein wesentliches Merkmal der vorliegenden Erfindung ist eine solche monodirektionale Umformung des ebenen Schichtstoffes.

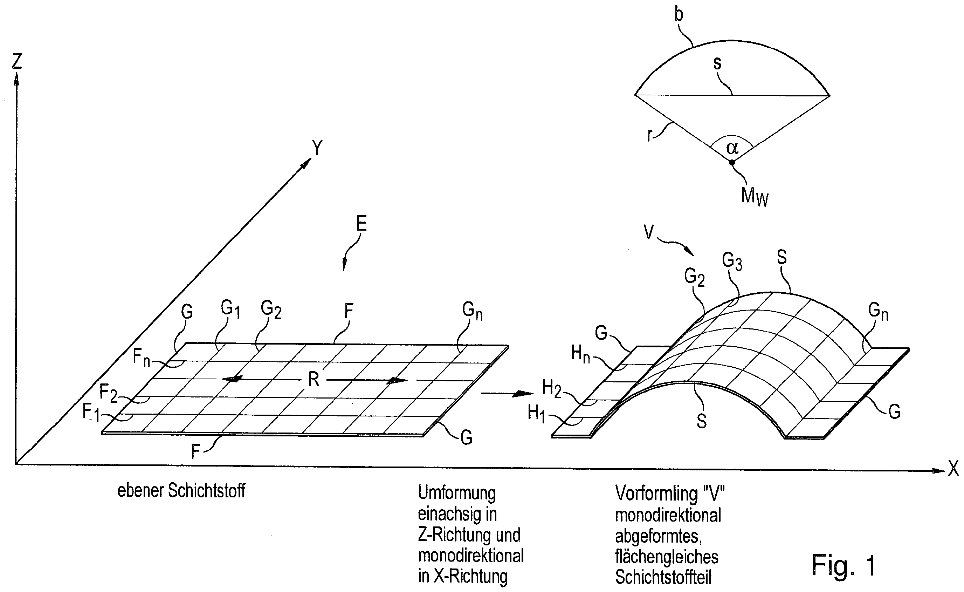

Unter Bezugnahme auf Figur 1 wird mit den Merkmalen von Anspruch 2 eine solche monodirektionale Umformung und der dabei erhaltene "monodirektional abgeformte Vorformling" noch weiter erläutert.

Bereitgestellt und verarbeitet wird beispielsweise ein rechteckiges ebenes Schichtstoffstück E, das in einem kartesischen Koordinatensystem längere Seiten F parallel zur X-Achse und kürzere Seiten G parallel zur Y-Achse hat. An diesem ebenen Schichtstoffstück E ist gedanklich vorstellbar ein Gitter mit parallelen, gleiche Abstände zueinander aufweisenden Geraden F1 bis Fn, die parallel zu den Seiten F ausgerichtet sind, sowie mit parallelen, gleiche Abstände zueinander aufweisenden Geraden G1 bis Gn, die parallel zu den Seiten G ausgerichtet sind. Eine Einwirkung von zwei beabstandeten, festen, identischen, nicht ebenen Konturen, hier beispielsweise je einer teilkreisförmigen Kontur an einem Kreis mit einem Radius r = 30 mm, einachsig senkrecht zur X,Y-Ebene, also in Z-Richtung, und nur in X-Richtung, also monodirektional, bewirkt eine Umformung des ebenen Schichtstoffstückes E zu einem monodirektional abgeformten Vorformling V, der nunmehr eine zusätzliche Erstreckung in Z-Richtung aufweist, wobei aus der ursprünglich 50 mm langen Sehne s nunmehr ein 63 mm langer Kreisbogen k geworden ist, weshalb der monodirektional abgeformte Vorformling V nunmehr in X-Richtung eine um 13 mm geringere Länge aufweist, als das ursprünglich eingesetzte ebene Schichtstoffstück E, weshalb Teile dieses ursprünglich ebenen Schichtstoffstücks auf einer, dieses Schichtstoffstück haltenden Unterlage gleiten können müssen. Eine solche "monodirektionale Umformung" zeichnet sich dadurch aus und ist so zu verstehen ist, dass am monodirektional abgeformten Vorformling V die ursprünglichen Geraden F1 bis Fn nunmehr zu gekrümmten Linien H1 bis Hn geworden sind, während die ursprünglichen Geraden G1 bis Gn weiterhin als Gerade G1 bis Gn mit ursprünglicher Länge erhalten geblieben sind; folglich bei der monodirektionalen Abformung des ebenen Schichtstoffstücks E in X-Richtung keine Umformung des ebenen Schichtstoffstücks E und Verlagerung von Schichtstoffteilchen in der dazu orthogenalen Y-Richtung stattgefunden hat.

Sofern die monodirektionale Umformung mit Hilfe von zwei beabstandeten, festen, weitgehend identischen Konturen vorgenommen wird, kann eine geringe Verstreckung des ebenen Schichtstoffstückes auftreten; eine solche verstreckungsarme Umformung wird hier als eine solche Umformung angesehen, welche an der ursprünglichen Fläche eine Flächenzunahme kleiner 4 % erzeugt.

Die vorliegende Erfindung beruht auf nachstehenden Überlegungen.

Das ebene Schichtstoffstück muss vor der Umformung erwärmt werden. Eine solche Erwärmung erfolgt einfach und schnell in einer Heizzone, die zwischen zwei flächengleichen, beabstandeten, im Wesentlichen horizontal ausgerichteten, ebenen Heizfeldem ausgebildet ist, die mit IR-Strahlung erzeugenden Heizstrahlern bestückt sind; beispielsweise können hierfür bevorzugt Infrarot-Flächenstrahler oder Keramikstrahler eingesetzt werden. In einer solchen Heizzone kann ein ebenes Schichtstoffstück einfach, schnell und vor allem kontrolliert erwärmt werden. Eine kontrollierte Erwärmung eines gekrümmten oder sonst wie dreidimensional gestalteten Schichtstoffkörpers würde wesentlich mehr Aufwand erfordern. Folglich soll die erfindungsgemäß vorgesehene Erwärmung an einem ebenen Schichtstoffstück durchgeführt werden, das auf einem ebenen Rahmen eines Trägers aufliegt, im Falle der vorliegenden Erfindung auf dem ebenen Rahmen einer rahmenförmigen Palette.

Je nach Gestalt des herzustellenden 3D-Formteils oder des zu kaschierenden 3D-Trägerteils wird bei einer einstufigen Umformung des warmen, ebenen Schichtstoffstücks zu einem solchen 3D-Formteil, bzw. Anformung des warmen, ebenen Schichtstoffstücks an ein solches 3D-Trägerteil insgesamt eine mehr oder minder große Verstreckung des ebenen Schichtstoffstücks auftreten. Erfindungsgemäß wurde erkannt, dass häufig eine, nur in einer Schichtstoffrichtung erfolgende, also monodirektionale, verstreckungsfreie oder verstreckungsarme Umformung des warmen ebenen Schichtstoffstücks zu einem dreidimensionalen Vorformling möglich ist, dessen Gestalt bereits erheblich oder weitgehend an die Gestalt des Endproduktes angenähert ist. Die Umformung des ebenen Schichtstoffstücks zum monodirektional abgeformten Vorformling erfolgt durch Einwirkung von zwei beabstandeten, festen, identischen oder weitgehend identischen, nicht ebenen Konturen auf zwei parallele, beabstandete, zueinander gegenüberliegend angeordnete Randabschnitte des Schichtstoffstücks, das in einer ersten, zur Umformrichtung senkrechten Schichtstoffrichtung an seinen beiden entfernten Enden nicht eingespannt ist und deshalb auf bzw. an seiner Unterlage gleiten kann.

Damit besteht ein wesentlicher Gedanke der vorliegenden Erfindung darin, die für die Erwärmung des ebenen Schichtstoffstücks erforderliche ebene Auflagefläche an einem ebenen Palettenrahmen im Verlauf des Verfahrens durch eine nicht ebene Auflageflächenkontur an der Auflagefläche eines Spannrahmens, oder eines Federrahmens oder eines auf einem solchen Spann- oder Federrahmen abgestützten und befestigten rahmenförmigen Aufbaus auszutauschen und zu ersetzen, und eine Übergabe des anfänglich ebenen Schichtstoffstücks vom ebenen Palettenrahmen an bzw. auf diese nicht ebene Auflageflächenkontur vorzusehen. Nach Kenntnis der hier benannten Erfinder sind zur Warmumformung von ebenen Schichtstoffen aus thermoplastischem Kunststoff solche Spannrahmen oder Federrahmen oder ein Aufbau auf einem solchen Spann- oder Federrahmen, die je mit zwei parallelen, beabstandeten, und zueinander gegenüberliegend angeordneten, nicht ebenen Auflageflächenabschnitten versehen sind, die auf zwei parallele, beabstandete, und zueinander gegenüberliegend angeordnete Schichtstoff-Randabschnitte einwirken und damit das gesamte ebene Schichtstoffstück monodirektional umformen, bislang nicht bekannt geworden.

Am so erzeugten, monodirektional abgeformten Vorformling kann anschließend eine geringfügige Verstreckung auftreten, wenn die formgebende Form gegenüber dem zwischen Dichtflächenkontur an der oberen Formwerkzeughälfte und der dazu kongruenten Auflageflächenkontur an der unteren Formwerkzeughälfte eingespannten Vorformling weiter angehoben wird und dabei durch die Vorformlingsgestalt hindurchtaucht, um eine typischerweise geringfügige orientierende "mechanische" Positivformung am eingespannten Vorformling durchzuführen. In diesem Falle erfolgt eine nachträgliche "mechanische" Umformung, im Sinne der Einwirkung eines Stempels, auf den vorher verstreckungsfrei oder verstreckungsarm erzeugten Vorformling. Diese nachträgliche "mechanische" Umformung gehört nicht zu den erfindungsgemäß vorgesehenen Maßnahmen zur Erzeugung des Vorformlings.

An dem so erhaltenen Vorformling wird anschließend die isostatische Hochdruckumformung unter HPF-Bedingungen durchgeführt. Weil die Gestalt des Vorformlings bereits erheblich oder weitgehend an die dreidimensionale Gestalt des herzustellenden 3D-Formteils oder des zu kaschierenden 3D-Trägerteils angepasst ist, tritt bei der abschließenden Hockdruckumformung eine geringere Verstreckung des Schichtstoffstückes auf, verglichen mit der direkten einstufigen Umformung des ebenen Ausgangsmaterials zum dreidimensionalen Endprodukt.

Eine Vermeidung oder Verminderung der Verstreckung des warmen, ebenen Schichtstoffes bei der isostatischen Hochdruckumformung unter HPF-Bedingungen bringt eine Reihe von Vorteilen. Verstreckungen verursachen Schichtdickenunregelmäßigkeiten und Dehnungen; letztere schädigen Oberflächenstrukturen, die zur optischen und/oder haptischen Wahrnehmung beitragen, und verursachen Verzerrungen an aufgebrachten Druckbildern, Dekors und Designs.

Geringere Verstreckungen vermeiden solche Schäden und erweitern die Einsatzmöglichkeiten des HPF-Verfahrens. Erfindungsgemäß konnten 3D-Formteile erzeugt werden, deren Gestalt wesentlich größere Abstände zur Ebene des Ausgangsmaterial aufweisen, als das bislang mit dem herkömmlichen HPF-Verfahren möglich war. Beispielsweise lassen sich mit dem erfindungsgemäßen Verfahren gekrümmte oder gewölbte 3D-Formteile erzeugen, die etwa 1 m lang sind, und deren Scheitellinie einen maximalen Abstand zur Ausgangsebene von 10 bis 15 cm aufweist.

Geringere Verstreckungen ermöglichen es, auf dem ebenen Schichtstoffstück schmale bzw. dünne, elektrisch leitende Leiterbahnen aufzubringen, welche sowohl die monodirektionale Umformung zum monodirektional abgeformten Vorformling, wie dessen Umformung unter HPF-Bedingungen zum 3D-Formteil ohne Beschädigung überstehen, um am 3D-Formteil befindliche lichtemittierende Dioden (LEDs) über diese Leiterbahnen mit Spannung und Strom zu versorgen.

Geringere Verstreckungen vermindern den Bedarf nach Zugflächen, deren Reste als Abfall anfallen würde; es werden Materialeinsparungen erzielt; die Formfläche an einem vorgegebenen Formwerkzeug kann besser genutzt werden.

Geringere Verstreckungen erfordern geringere Erwärmung des ebenen Ausgangsmaterials, was wiederum die Abbildungsschärfe von Konturen und die Abbildungsgenauigkeit von aufgebrachten Druckbildern, Dekors und Designs verbessert.

Ein weiterer Gesichtspunkt der vorliegenden Erfindung betrifft ein Formwerkzeug zur Durchführung des erfindungsgemäßen Verfahrens.

Das Dokument DE 10 2008 050 564 A1 offenbart
ein Formwerkzeug
zur Hochdruckumformung eines einlagigen oder mehrlagigen Schichtstoffstückes, mit einer oberen Formwerkzeughälfte, die eine Druckglocke bildet,
- in die ein fluides Druckmittel, insbesondere Druckluft, unter einem Druckmitteldruck von 20 bar bis 300 bar einführbar ist; und
- die eine umlaufende Dichtfläche hat, in der eine umlaufende Nut ausgespart ist, in die ein Dichtmittel eingelegt ist; und
mit einer unteren Formwerkzeughälfte,
- die eine Bodenplatte hat, auf der ein Unterbau abgestützt ist, an dem eine mit Formkonturen versehene Form oder ein zu kaschierendes, mit Trägerteilkonturen versehenes 3D-Trägerteil befestigt ist, an welche Konturen das mit dem fluiden Druckmittel beaufschlagte Schichtstoffstück angeformt wird; und
- dieser Unterbau von einem, an der Bodenplatte abgestützten Spannrahmen, oder von einem, auf Druckfedern an der Bodenplatte abgestützten Federrahmen umgeben ist, an dem das warme ebene Schichtstoffstück ablegbar ist; und
diese untere Formwerkzeughälfte eine von der oberen Formwerkzeughälfte entfernte Freigabestellung sowie eine zur oberen Formwerkzeughälfte benachbarte Schließstellung einnehmen kann, wobei
- in dieser Freigabestellung ein Transportrahmen mit der rahmenförmigen Palette und dem darauf aufliegenden warmen ebenen Schichtstoffstück zwischen die beiden Formwerkzeughälften einbringbar ist und eine solche Position einnimmt, in welcher der Spannrahmen oder der Federrahmen eine Anordnung innerhalb und unterhalb einer Aussparung an der rahmenförmigen Palette einnimmt;
- in dieser Schließstellung das warme Schichtstoffstück einen geringen Abstand zur Dichtfläche an der Druckglocke einhält und dort an das Dichtmittel anlegbar ist, wobei die Druckglocke druckdicht gegenüber dem Schichtstoffstück abgedichtet wird; und
- bei dieser Anordnung in die Druckglocke ein fluides Druckmittel, insbesondere Druckluft, unter einem Druckmitteldruck von 20 bar bis 300 bar einführbar ist, welches das warme Schichtstoffstück innerhalb einer Zeitspanne kleiner 5 Sekunden isostatisch an die Formkonturen oder an die 3D-Trägerteilkonturen anformt.

Die erfindungsgemäße Weiterbildung eines solchen Formwerkzeugs ist
**dadurch gekennzeichnet, dass**
- der Spannrahmen oder der Federrahmen an zwei parallelen, beabstandeten, zueinander gegenüberliegend angeordneten Rahmenabschnitten je einen, eine nicht ebene Kontur aufweisenden, Auflageflächenabschnitt hat, die beide zusammen eine nicht ebene Auflageflächenkontur bilden; oder
- der Spannrahmen oder der Federrahmen einen Rahmen hat, auf dem ein rahmenförmiger Aufbau abgestützt und befestigt ist, der an zwei parallelen, beabstandeten und zueinander gegenüberliegend angeordneten Seitenwänden je einen, eine nicht ebene Kontur aufweisenden Auflageflächenabschnitt hat, die beide zusammen eine nicht ebene Auflageflächenkontur bilden;
- die Druckglocke an zwei parallelen, beabstandeten, zueinander gegenüberliegend angeordneten Druckglockenabschnitten je einen, eine nicht ebene Kontur aufweisenden, Dichtflächenabschnitt hat, die beide zusammen eine nicht ebene Dichtflächenkontur bilden, wobei diese nicht ebene Dichtflächenkontur kongruent zur nicht ebenen Auflageflächenkontur ausgebildet ist; und
- beim Anheben der unteren Formwerkzeughälfte zum Erreichen der Schließstellung des Formwerkzeugs die nicht ebenen Auflageflächenabschnitte am Spannrahmen, am Federrahmen oder an dem rahmenförmigen Aufbau zwei parallele, beabstandete und zueinander gegenüberliegend angeordnete Schichtstoffstück-Randabschnitte untergreifen, mit sich führen und schließlich nahe an die Dichtfläche einschließlich nicht ebener Dichtflächenkontur der Druckglocke heranführen, wobei das gesamte warme ebene Schichtstoffstück an diesen kongruenten, nicht ebenen Konturen einachsig senkrecht zur Schichtstoffebene und nur in der ersten Schichtstoffrichtung R, also monodirektional, zu einem, an diese Konturen angepassten, monodirektional abgeformten Vorformling umgeformt wird.

Mit Hilfe eines Formwerkzeugs, das die Gesamtheit vorstehender Merkmale aufweist, kann das erfindungsgemäße Verfahren durchgeführt werden.

### VORTEILHAFTE AUSGESTALTUNGEN DER ERFINDUNG

Vorteilhafte Ausgestaltungen und Weiterbildungen der vorliegenden Erfindung ergeben sich aus den Unteransprüchen.

Vorzugsweise ist erfindungsgemäß vorgesehen, dass in einer ersten Stufe des erfindungsgemäßen Verfahrens am warmen, ebenen Schichtstoffstück eine verstreckungsfreie oder verstreckungsarme Umformung zum monodirektional abgeformten Vorformling vorgenommen wird.

Eine Verstreckung vergrößert die Fläche des ursprünglichen ebenen Schichtstoffstücks. Im Rahmen der vorliegenden Erfindung wird eine "verstreckungsarme Umformung" als eine solche Umformung angesehen, welche an der ursprünglichen Fläche eine Flächenzunahme kleiner 4 %, vorzugsweise kleiner 2 % und besonders bevorzugt kleiner 1 % erzeugt. Bei einer Flächenzunahme kleiner 1 % sind am Endprodukt Schichtdickenunregelmäßigkeiten nicht feststellbar, und irgendwelche Verzerrungen der auf dem Schichtstoffstück aufgebrachten Druckbilder, Dekors und Designs sind vernachlässigbar gering.

Vorzugsweise ist beim erfindungsgemäßen Verfahren vorgesehen, dass sich die zwei beabstandeten, festen, identischen oder weitgehend identischen, nicht ebenen Konturen an der Auflagefläche von zwei parallelen, beabstandeten und zueinander gegenüberliegend angeordneten Rahmenabschnitten eines Spannrahmens oder Federrahmens befinden, oder an der Auflagefläche von zwei parallelen, beabstandeten, und zueinander gegenüberliegend angeordneten Seitenwänden eines rahmenförmigen Aufbaus befinden, der auf einem Rahmen des Spannrahmens oder des Federrahmens abgestützt und befestigt ist; und dieser Spannrahmen oder dieser Federrahmen bezüglich der rahmenförmigen Palette angehoben wird, auf der das warme ebene Schichtstoffstück aufliegt.

Grundsätzlich könnte auch eine "negative" monodirektionale Umformung des ebenen Schichtstoffstücks durch Anlage von nicht ebenen Konturen bewirkt werden, die sich an einer Druckglocke befinden, wenn diese Druckglocke bezüglich des ortsfest gehaltenen Schichtstoffstücks abgesenkt wird; diese Verfahrensvariante ist jedoch mit größerem apparativen Aufwand verbunden.

Die beiden, vorzugsweise an der Auflagefläche des Spannrahmens oder des Federrahmens oder des rahmenförmigen Aufbaus befindlichen, nicht ebenen Konturen sind identisch oder weitgehend identisch ausgebildet. "Weitgehend identisch" meint hier, dass die Anlage des ebenen Schichtstoffstückes an diese Konturen und nachfolgende monodirektionale Umformung an diesen Konturen faltenfrei und verstreckungsfrei oder im Wesentlichen verstreckungsfrei erfolgen kann; "im Wesentlichen verstreckungsfrei" meint hier insbesondere verstreckungsarm; ein "verstreckungsarme Umformung" wird hier als eine solche Umformung angesehen, welche an der ursprünglichen Fläche eine Flächenzunahme kleiner 4 %, vorzugsweise kleiner 2% und besonders bevorzugt kleiner 1 % erzeugt.

Die vorzugsweise an der Auflagefläche des Spannrahmens oder des Federrahmens oder des rahmenförmigen Aufbaus befindlichen nicht ebenen Konturen können - ohne darauf beschränkt zu sein - beispielsweise dachförmig, regelmäßig oder unregelmäßig gebogen oder gewölbt und mit einem Scheitelpunkt versehen, oder wellenförmig oder mehrstufig ansteigend gestaltet sein. "Regelmäßig gebogen" kann einem Kreisbogen oder einem Ellipsenbogen entsprechen. "Unregelmäßig gebogen" kann eine längs der größeren Erstreckung nur mäßig gebogene oder gekrümmte Begrenzungslinie sein, die einen einzigen Scheitelpunkt hat und die an ihren Enden abgerundet in absteigende Äste übergeht, welche später als Vorlage für Seitenflächen dienen.

Die für eine isostatische Hochdruckumformung unter HPF-Bedingungen zur Verfügung stehende Formfläche am ebenen Schichtstoffstück wird durch die vorausgegangene monodirektionale Umformung nicht vermindert oder beeinträchtigt. Der monodirektional abgeformte Vorformling weist die gleiche Formfläche auf, wie das ursprünglich eingesetzte ebene Schichtstoffstück.

Vorzugsweise kann das erfindungsgemäße Verfahren zur Warmumformung eines ebenen, aus thermoplastischem Kunststoff bestehenden Schichtstoffstücks mit nachstehenden Mitteln und Maßnahmen durchgeführt werden:
In einer Anlage mit einer Auflege- und Entnahmestation, mit einer Umformstation, mit einer Heizstation und wahlweise mit einer Temperaturmessstation, wird in der Auflege- und Entnahmestation ein rechteckiger Transportrahmen bereitgestellt, der längs seiner beiden Längsseiten auf je einer geraden Schiene bewegbar ist, insbesondere gleitet, die durch die gesamte Anlage führt;
auf diesem Transportrahmen wird eine rahmenförmige Palette abgelegt, die eine Aussparung umgibt;
auf dieser rahmenförmigen Palette wird das umzuformende ebene Schichtstoffstück in definierter Anordnung abgelegt, wobei lediglich eine Schichtstoffstück-Randzone auf dem Rahmen der rahmenförmigen Palette aufliegt;
der Transportrahmen mit der rahmenförmigen Palette und dem ebenen Schichtstoffstück wird längs der beiden Schienen aus der Auflege- und Entnahmestation durch die Umformstation in die Heizstation gefahren, wo das ebene Schichtstoffstück berührungsfrei auf eine vorgegebene Temperatur erwärmt wird;
anschließend wird der Transportrahmen mit der rahmenförmigen Palette und dem warmen ebenen Schichtstoffstück längs der beiden Schienen aus der Heizstation zurück in die Umformstation gefahren, wo der an den beiden Schienen gehaltene Transportrahmen eine definierte Anordnung zu einem Formwerkzeug einnimmt, das aufweist:
   - eine obere Formwerkzeughälfte, die eine Druckglocke bildet, in die ein fluides Druckmittel, insbesondere Druckluft unter hohem Druckmitteldruck einführbar ist, und die eine umlaufende Dichtfläche hat, in der eine umlaufende Nut ausgespart ist, in die ein Dichtmittel eingelegt ist;
   - eine untere Formwerkzeughälfte, die eine Bodenplatte hat, auf der ein Unterbau abgestützt ist, an dem eine mit Formkonturen versehene Form oder ein zu kaschierendes, mit Trägerteilkonturen versehenes 3D-Trägerteil befestigt ist;
   - dieser Unterbau von einem auf der Bodenplatte abgestützten Spannrahmen oder von einem, mit Hilfe von Druckfedern an der Bodenplatte abgestützten Federrahmen umgeben, an dem das warme ebene Schichtstoffstück ablegbar ist;
   - diese untere Formwerkzeughälfte eine von der oberen Formwerkzeughälfte entfernte Freigabestellung sowie eine zur oberen Formwerkzeughälfte benachbarte Schließstellung einnehmen kann;
   - in dieser Freigabestellung der Transportrahmen mit der rahmenförmigen Palette und mit dem warmen ebenen Schichtstoffstück zwischen die beiden Formwerkzeughälften einfahrbar ist und eine solche Position einnimmt, in welcher der Spannrahmen oder der Federrahmen je eine Anordnung innerhalb und unterhalb der Aussparung an der rahmenförmigen Palette einnimmt;
   - in dieser Schließstellung das warme Schichtstoffstück einen geringen Abstand zur Dichtfläche an der Druckglocke einhält und dort an das Dichtmittel anlegbar ist, wobei die Druckglocke druckdicht gegenüber dem Schichtstoffstück abgedichtet wird; und
   - bei dieser Anordnung in die Druckglocke ein fluides Druckmittel, insbesondere Druckluft, unter einem Druckmitteldruck von 20 bar bis 300 bar eingeführt wird, welches das warme Schichtstoffstück innerhalb einer Zeitspanne kleiner 5 Sekunden isostatisch an die Formkonturen oder an die Trägerteilkonturen anformt.

Bei einem solchen Verfahren ist die erfindungsgemäße Weiterbildung
**dadurch gekennzeichnet, dass**
- das ebene Schichtstoffstück mit seiner Randzone so auf dem Rahmen der rahmenförmigen Palette aufliegt, dass Teile dieser Randzone des warmen ebenen Schichtstoffstücks auf diesem Rahmen in einer ersten Schichtstoffrichtung R gleiten können;
- der Spannrahmen oder Federrahmen an zwei parallelen, beabstandeten, zueinander gegenüberliegend angeordneten Rahmenabschnitten je einen, eine nicht ebene Kontur aufweisenden, Auflageflächenabschnitt hat, die beide zusammen eine nicht ebene Auflageflächenkontur bilden; oder
- der Spannrahmen oder der Federrahmen einen Rahmen hat, auf dem ein rahmenförmiger Aufbau abgestützt und befestigt ist, der an zwei parallelen, beabstandeten, zueinander gegenüberliegend angeordneten Seitenwänden je einen, eine nicht ebene Kontur aufweisenden Auflageflächenabschnitt hat, die beide zusammen eine nicht ebene Auflageflächenkontur bilden;
- die Druckglocke an zwei parallelen, beabstandeten, zueinander gegenüberliegend angeordneten Druckglockenabschnitten je einen, eine nicht ebene Kontur aufweisenden, Dichtflächenabschnitt hat, die beide zusammen eine nicht ebene Dichtflächenkontur bilden, wobei diese nicht ebene Dichtflächenkontur kongruent zur nicht ebenen Auflageflächenkontur ausgebildet ist; und
- beim Anheben der unteren Formwerkzeughälfte zum Erreichen der Schließstellung des Formwerkzeugs die nicht ebenen Auflageflächenabschnitte am Spannrahmen, am Federrahmen oder an dem rahmenförmigen Aufbau zwei parallele, beabstandete, zueinander gegenüberliegend angeordnete Schichtstoffstück-Randabschnitte untergreifen, mit sich führen und schließlich nahe an die Dichtfläche einschließlich nicht ebener Dichtflächenkontur der Druckglocke heranführen, wobei das gesamte warme ebene Schichtstoffstück an diesen kongruenten, nicht ebenen Konturen einachsig senkrecht zur Schichtstoffebene und nur in der ersten Schichtstoffrichtung, also monodirektional, zu einem, an diese Konturen angepassten, monodirektional abgeformten Vorformling umgeformt wird.

Anschließend wird das fluide Druckmittel unter hohem Druckmitteldruck in die Druckglocke eingeführt, welches den als Zwischenprodukt gebildeten warmen Vorformling isostatisch an die Formkonturen oder an die Trägerteilkonturen anformt. Anschließend wird die Druckglocke entlüftet, und das Formwerkzeug wird geöffnet. Insbesondere im Falle von Formteilkonturen oder 3D-Trägerteilkonturen mit ausgeprägter Geometrie kann anschließend die obere Formwerkzeughälfte ein Stück weit angehoben werden, um den Zwischenraum zwischen Dichtfläche und Transportrahmen zu vergrößern, damit der Transportrahmen mit der rahmenförmigen Palette, auf der sich das gebildete 3D-Formteil oder das kaschierte 3D-Trägerteil befindet, ungestört aus der Umformstation in die Auflege- und Entnahmestation fahren kann.

Nach einem solchen Verfahren können 3D-Formteile hergestellt werden, die eine relativ große Erstreckung zur Ebene des ursprünglich ebenen Schichtstoffes aufweisen, und die dennoch praktisch frei von Schichtdickenunregelmäßigkeiten sind.

Ferner können nach einem solchen Verfahren mit einem Schichtstoff kaschierte 3D-Trägerteile hergestellt werden, die eine störungsfreie, qualitativ hochwertige und optisch einwandfreie Oberfläche aufweisen.

Ferner ist vorzugsweise vorgesehen, dass der Spannrahmen oder der Federrahmen einen Rahmen hat, der eine Randzone aufweist, und im Verlauf der Hubbewegung der unteren Formwerkzeughälfte diese Rahmenrandzone die Unterseite der rahmenförmigen Palette an deren Innenumfang untergreift, diese Palette mit dem darauf befindlichen Schichtstoffstück ein Stück weit anhebt und damit von dem ortsfest gehaltenen Transportrahmen löst und trennt. Der gebildete Vorformling liegt mit seinen ebenen, sich in der ersten Schichtstoffrichtung erstreckenden Endabschnitten weiterhin auf dem Rahmen der rahmenförmigen Palette auf, und dieser bildet ein Mittel, um auch diese ebenen Endabschnitte an die ebenen Abschnitte der Dichtfläche heranzuführen und druckdicht gegenüber der Dichtfläche abzudichten. Auch das nach der isostatischen Hochdruckumformung gebildete Produkt verbleibt mit seinen ebenen Endab schnitten auf diesem Rahmen; die das Produkt haltende rahmenförmige Palette wird wieder auf den ortsfest gehaltenen Transportrahmen abgesenkt, und dieser kann zusammen mit der Palette und dem darauf befindlichen Produkt aus der Umformstation in die Be- und Entladestation gefahren werden.

Im Falle von hergestellten 3D-Formteilen oder von hergestellten kaschierten 3D-Trägerteilen mit je einer ausgeprägten Geometrie, die erheblich von der ursprünglichen Schichtstoffebene abweicht, kann vorzugsweise zusätzlich vorgesehen werden, dass nach Beendigung der isostatischen Hochdruckumformung und Belüftung der Druckglocke die rahmenförmige Palette, auf der sich das gebildete 3D-Formteil oder das kaschierte 3D-Trägerteil befindet, gegenüber der oberen Formwerkzeughälfte absenkbar und auf dem ortsfest gehaltenen Transportrahmen ablegbar ist; und daraufhin die obere Formwerkzeughälfte ein Stück weit anhebbar ist, um den Transportrahmen mit dem darauf abgelegten 3D-Formteil oder kaschierten, 3D-Trägerteil störungsfrei aus der Umformstation entnehmen und in die Be- und Entladestation verfahren zu können.

Damit können auch Produkte mit einer deutlich ausgeprägten Geometrie störungsfrei aus dem, seine erweiterte Entnahmestellung einnehmenden, Formwerkzeug entnommen werden.

Abhängig von der Größe der umzuformenden Formfläche am Schichtstoffstück können in der Nut an der Dichtfläche der Druckglocke unterschiedliche Dichtmittel vorgesehen werden. Im Falle einer Formfläche kleiner 800 cm² am warmumzuformenden Schichtstoffstück werden bei der Druckbeaufschlagung mit dem Hochdruckfluid am Gewölbe der Druckglocke in der Regel keine größeren Verwölbungen auftreten, so dass als Dichtmittel ein üblicher O-Ring aus einer elastischen Rundschnur mit einem Durchmesser von etwa 3 mm bis 6 mm ausreichen wird. Zur Realisierung einer Formfläche von wenigstens 800 cm² müssen Presse und Druckglocke bei einem maximalen Druckmitteldruck von 300 bar wenigstens für eine Formschließkraft von 2,4 Mega-Newton ausgelegt sein. Unter diesen gewaltigen Kräften "arbeiten" Presse und Druckglocke und es können gewisse Verbiegungen und Verwölbungen auftreten, welche eine mehr als 100 cm lange Rundschnur aus ihrer Nut treiben würden. Um trotzdem eine druckdichte Abdichtung der Druckglocke zu gewährleisten, muss, unter diesen erschwerten Bedingungen, ein wirksameres Dichtmittel eingesetzt werden.

Für einen solchen Fall ist vorzugsweise als Dichtmittel an der Dichtfläche der Druckglocke eine strangförmige Profildichtung vorgesehen, die einen in die Nut einsetzbaren Körper hat, von dem eine elastische, einstückig angeformte Dichtlippe absteht, die von einer äußeren Dichtlippenflanke und von einer inneren Dichtlippenflanke begrenzt ist. Diese innere Dichtlippenflanke ist bezüglich der Dichtflächenebene schräg ausgerichtet, so dass das unter einem Druck von 20 bar bis 300 bar anströmende und auf die innere Dichtlippenflanke treffende fluide Druckmittel die Dichtlippe elastisch verformen und gegen den Schichtstoff pressen wird. Mit Hilfe einer solchen besonderen strangförmigen Profildichtung lassen sich auch Formwerkzeuge mit einer vergleichsweise großen Formfläche von 2000 cm² und mehr, beispielsweise mit einer Formfläche von wenigstens 2.400 cm² oder mehr sicher abdichten, so dass in einem solchen Formwerkzeug auch relativ große Schichtstoffstücke umgeformt und an relative große 3D-Trägerteile ankaschiert werden können, die je beispielsweise auch eine Länge größer 100 cm haben können.

In einem solchen Falle ist vorzugsweise vorgesehen, dass in der Schließstellung des Formwerkzeugs die Auflagefläche an der unteren Formwerkzeughälfte zur Dichtfläche an der oberen Formwerkzeughälfte einen Abstand einhält, der ausmacht:
[Schichtdicke des umzuformenden Schichtstoffstückes plus (100 µm bis 1200 µm)]; so dass ein Spalt zwischen der nicht ebenen Auflagefläche und der nicht ebenen Dichtfläche gebildet ist; und
das unter hohem Druckmitteldruck in die Druckglocke einströmende fluide Druckfluid auf die innere Dichtlippenflanke trifft und die elastische Dichtlippe so verformt, dass diese Dichtlippe diesen Spalt überbrückt und die Randzone am monodirektional abgeformten Vorformling druckdicht gegenüber der Dichtfläche an der Druckglocke abdichtet.

Mit einem solchen Abstand ist gewährleistet, dass das Schichtstoffstück im Zwischenraum zwischen strangförmiger Profildichtung an der Dichtfläche der oberen Formwerkzeughälfte und der Auflagefläche an der unteren Formwerkzeughälfte bei der monodirektionalen Umformung auf den nicht ebenen Konturen dieser Auflagefläche gleiten kann. Ferner stoßen die schweren, massiven Komponenten der beiden Formwerkzeughälften auch in der Schließstellung nicht aneinander an, so dass eine Beschädigung oder Beeinträchtigung dieser Komponenten sicher vermieden werden kann.

Beim erfindungsgemäßen Verfahren erfolgt eine Warmumformung eines Schichtstoffes, der aus einem thermoplastischen Kunststoff besteht. Als geeignete Kunststoffe kommen insbesondere und vorzugsweise in Betracht:
- Polycarbonate (PC) oder Copolycarbonate auf Basis von Diphenolen, insbesondere auch auf der Basis von Bisphenol A und modifizierten Bisphenol-Verbindungen;
- Poly- oder Copolyacrylate;
- Poly- oder Copolymethacrylate, hier insbesondere Polymethylmethyacrylat bzw. Poly(meth)acrylat (PMMA);
- Poly- oder Copolymere mit Styrol, hier insbesondere auch schlagzähes Polystyrol, Polystyrolacrylnitril (SAN) und Acrylnitril-Butadien-Styrol-Terpolymere (ABS);
- thermoplastische Polyurethane (TPU) als Bindemittel in mehrlagigen Anordnungen;
- Polysulfone, hier insbesondere Polyphenylsulfone und Polyarylsulfone (PSU);
- Polyester (PE), hier insbesondere Poly- oder Copolykondensate der Terephthalsäure, einschließlich Poly- oder Copolyethylenterephthalat [PET oder CoPET, glycol-modifiziertes PET (PETG)], und Poly- oder Copolybutylenterephthalat (PBT oder CpPBT);
- Polyamide (PA);
- Polypropylen (PP);
- Polyvinylchlorid (PVC); und
- Mischungen oder Blends aus den vorstehend genannten Materialien.

Diese Kunststoffe können häufig auch in transparenter Form eingesetzt werden.

Der erfindungsgemäß eingesetzte Schichtstoff kann in Form einer einlagigen Kunststofffolie oder in Form eines mehrlagigen Verbunds aus zwei oder mehr Kunststofffolien eingesetzt werden, wobei jede einzelne Kunststofffolie eine Schichtdicke von 50 µm bis 1000 µm, vorzugsweise von 200 µm bis 750 µm aufweist.

Ferner kann der erfindungsgemäß eingesetzte Schichtstoff eine Kunststoffplatte enthalten, die eine Schichtdicke von 1000 µm bis 10.000 µm aufweist; ferner kann ein mehrlagiger Verbund aus einer oder mehreren Kunststoffplatte(n) mit gegebenenfalls einer oder mehreren Kunststofffolie(n) eingesetzt werden, wobei die Gesamtschichtdicke eines solchen Verbundes vorzugsweise 12.000 µm nicht übersteigen soll.

Die vorstehend genannten Schichtstoffe werden nachstehend kurz als "einlagige oder mehrlagige Schichtstoffe" bezeichnet.

Die erfindungsgemäß eingesetzten einlagigen oder mehrlagigen Schichtstoffe können auf einer Oberfläche oder auf beiden Oberflächen wenigstens teilweise bedruckt, metallisiert und/oder sonst wie beschichtet sein. Im Falle eines mehrlagigen Schichtstoffes kann eine solche Bedruckung, Metallisierung und/oder sonstige Beschichtung auch sandwichartig zwischen zwei Lagen aus Kunststoffmaterialien vorgesehen sein. Eine solche Bedruckung, Metallisierung und/oder sonstige Beschichtung liefert am dreidimensionalen Fertigprodukt ein attraktives Design oder einen attraktiven Dekor.

Bei der erfindungsgemäßen Warmumformung wird der Schichtstoff vor der Umformung auf eine vorgegebene Temperatur erwärmt. Vorzugsweise ist eine berührungsfreie Erwärmung mit Hilfe von Strahlungsheizung unter solchen Bedingungen vorgesehen, dass wenigstens eine Seite der gesamten Formfläche oder des überwiegenden Teils der Formfläche des umzuformenden Schichtstoffstückes eine Oberflächentemperatur im Bereich von [VST (= Vicat softening temperature B50 (°C) dieses Kunststoffes minus 20 °C] bis [VST B50 °C dieses Kunststoffes plus 23 °C] annimmt.

Diese Erweichungstemperaturen liegen deutlich unterhalb der, für das Thermoformen empfohlenen Umformungstemperaturen (vgl. "Thermoformen in der Praxis", von Peter Schwarzmann, 2. Auflage, Carl Hanser Verlag, München 2008, Seite 40), was eine größere Auswahl bei temperaturempfindlichen Beschichtungen und eine schonendere Behandlung solcher Beschichtungen ermöglicht.

Insbesondere für die Warmumformung von Platten aus einem glasklaren, transparenten, thermoplastischen Kunststoff ist hier vorzugsweise vorgesehen, dass
das ebene Schichtstoffstück eine, aus thermoplastischem Kunststoff bestehende Platte mit einer Schichtdicke von 3000 µm bis 10.000 µm ist;
diese Platte zur Erwärmung in der Heizstation eine Zeitspanne lang zwischen einem oberen Heizfeld und einem unteren Heizfeld einer Heizeinrichtung gehalten wird, wobei jedes Heizfeld einen Heizschirm aufweist, der je aus einer Anzahl individuell ansteuerbarer Infrarot-Flächenstrahler aufgebaut ist;
die beiden Heizschirme bei je einer Oberflächentemperatur von im Mittel zwischen etwa 120 °C bis 180 °C oberhalb VST 50B (°C) des jeweiligen Kunststoffes gehalten werden; und
die zu erwärmende, mit Umgebungstemperatur zwischen diese Heizschirme eingebrachte Platte für eine plattendickenabhängige Verweilzeit von [(Zahlenwert der Plattendicke in mm) x 23 (Sekunden) + z (Sekunden)] zwischen diesen Heizschirmen gehalten wird, um die Erwärmung der Platte auf die Umformtemperatur durchzuführen; z hat hier einen Wert von 3 bis 60.

Es können selbsttragende, formstabile, transparente 3D-Formteile mit hoher Ausformschärfe, mit perfekter Glasklarheit und mit hoher Brillanz und hoher optischer Güte der Oberfläche erhalten werden.

Das erfindungsgemäße Verfahren zur Warmumformung eines ein- oder mehrlagigen, aus thermoplastischem Kunststoff bestehendem Schichtstoffstücks wird zur Herstellung eines 3D-Formteils eingesetzt.

Ferner kann dieses Verfahren zur Herstellung von 3D-Trägerteilen eingesetzt werden, die mit einem solchen, ein- oder mehrlagigen Schichtstoff kaschiert sind. Der Schichtstoff haftet über einen Kleber am 3D-Trägerteil.

Im Fall der Herstellung eines solchen, mit einem Schichtstoff kaschierten 3D-Trägerteils kann vorzugsweise vorgesehen werden, dass
- ein auf das 3D-Trägerteil abgestimmter Zuschnitt aus dem Schichtstoff auf einer Transferfolie abgelegt wird;
- lediglich eine Randzone dieser Transferfolie auf dem Rahmen der rahmenförmigen Palette abgelegt wird;
- an Transferfolie und Schichtstoffzuschnitt gemeinsam die monodirektionale Umformung zum monodirektional abgeformten Vorformling durchgeführt wird;
- lediglich die so abgeformte Transferfolie zwischen der Auflagefläche an der unteren Formwerkzeughälfte und der Dichtfläche an der oberen Formwerkzeughälfte eingespannt wird; und
- bei Beaufschlagung mit dem Hochdruck-Druckfluid das Druckfluid auf die Transferfolie trifft und die Transferfolie zusammen mit dem Schichtstoffzuschnitt gemeinsam umformt, wobei der an der Transferfolie anliegende Schichtstoffzuschnitt über eine Kleberschicht an das 3D-Trägerteil angelegt und ankaschiert wird.

Diese Verfahrensvariante ermöglicht Einsparungen am typischerweise vergleichsweise teuren Schichtstoff, beispielsweise wenn hier Strukturfolien oder mit besonderen Prägestrukturen versehene Folien (so genannte "Opto 4D-Folien") eingesetzt werden.

Weiterhin ist vorzugsweise vorgesehen, dass das umzuformende ebene Schichtstoffstück auf einer ebenen rahmenförmigen Palette abgelegt wird, deren Rahmen an seinem Innenumfang mit einer Anzahl beabstandeter, nach Innen vorspringender Vorsprünge versehen ist, und der umlaufende Randabschnitt des Schichtstoffstückes nur auf diesen Vorsprüngen abgelegt wird.

Zusätzlich ist hier vorgesehen, dass
der Spannrahmen oder der Federrahmen oder die Seitenflächen des auf dem Rahmen des Federrahmens abgestützten und dort befestigten rahmenförmigen Aufbaus
- einen strukturierten Außenumfang und eine nicht ebene Auflagefläche mit einspringenden Aussparungen und nach Außen vorspringenden Tafeln an diesem Außenumfang haben;
- dieser Außenumfang an den Innenumfang am Rahmen der rahmenförmigen Palette so angepasst ist, dass dieser Spannrahmen oder dieser Federrahmen oder dieser rahmenförmige Aufbau in engem Abstand zum Innenumfang des Palettenrahmens bezüglich der ortsfest gehaltenen Palette verschieblich ist;
- die Vorsprünge am Innenumfang des Palettenrahmens in die Aussparungen am Außenumfang des Spannrahmens oder des Federrahmens oder des rahmenförmigen Aufbaus eingreifen;
- die vorspringenden Tafeln am Außenumfang des Spannrahmens oder des Federrahmens oder des rahmenförmigen Aufbaus in die Zwischenräume zwischen je zwei Vorsprüngen am Palettenrahmen eingreifen; und
- beim Anheben des Spannrahmens oder des Federrahmens oder des rahmenförmigen Aufbaus bezüglich der ortsfest gehaltenen Palette diese vorspringenden Tafeln am Außenumfang des Spannrahmens oder des Federrahmens oder des rahmenförmigen Aufbaus den umlaufenden Randabschnitt des Schichtstoffstückes untergreifen, mit sich führen, und so das Schichtstoffstück auf der Auflagefläche am Spannrahmen oder am Federrahmen oder am rahmenförmigen Aufbau ablegen;
- so dass bei einem weiteren Anheben des Spannrahmens oder des Federrahmens oder des rahmenförmigen Aufbaus bezüglich der ortsfest gehaltenen Palette das Schichtstoffstück zwischen der nicht ebenen Auflageflächenkontur und der dazu kongruenten nicht ebenen Dichtflächenkontur zu einem monodirektional abgeformten Vorformling umgeformt wird.

Damit wird ein wesentlicher Gedanke der vorliegenden Erfindung verwirklicht, in dem die ebene Auflagefläche am ebenen Palettenrahmen durch die nicht ebene Auflageflächenkontur an der Auflagefläche des Spannrahmens oder des Federrahmens oder des rahmenförmigen Aufbaus ausgetauscht und ersetzt wird. Hierbei bleibt die für eine Umformung zur Verfügung stehende Formfläche am ebenen Schichtstoffstück vollständig oder weitgehend erhalten.

Bei einer solchen Ausgestaltung des Palettenrahmens ist vorzugsweise vorgesehen, dass an den vorspringenden Vorsprüngen am Innenumfang des Palettenrahmens vertikal abstehende Dorne befestigt sind, welche so in, in der Randzone des Schichtstoffstücks ausgesparte Bohrungen oder Langlöcher eingreifen, dass Teile dieser Randzone auf dem Rahmen der rahmenförmigen Palette gleiten können. Solche Langlöcher erstrecken sich in Richtung der ersten Schichtstoffrichtung und haben -je nach Lage und Anordnung am Schichtstoffstück - eine ausreichende Länge, damit das Schichtstoffstück auf seiner Unterlage unbehindert und verstreckungsfrei gleiten kann.

Mit Hilfe dieser Dorne kann die bestimmte definitive Anordnung des umzuformenden Schichtstoffstückes einerseits gegenüber der rahmenförmigen Palette und andererseits gegenüber dem umformenden Formwerkzeug gesichert werden. Es können 3D-Formteile erhalten werden, deren Bedruckung und/oder Design genau und formgetreu einer vorgegebenen Vorlage entspricht.

### DETALLIERTE BESCHREIBUNG DER ERFINDUNG

Ein ebener, ein- oder mehrlagiger, aus thermoplastischem Kunststoff bestehender Schichtstoff wird bei erhöhter, vorgegebener Temperatur in einem zweistufigen Verfahren zu einer dreidimensionalen Struktur (3D-Struktur) umgeformt; dabei wird in einer ersten Stufe der warme ebene Schichtstoff zu einem monodirektional abgeformten Vorformling umgeformt, der anschließend in einer zweiten Stufe unter HPF-Bedingungen (= high pressure forming Bedingungen) zum 3D-Fertigprodukt umgeformt wird.

Geeignete und vorzugsweise eingesetzte thermoplastische Kunststoffe für das ebene Ausgangsmaterial sind in Anspruch 10 angegeben. Weitere Einzelheiten zu hier geeigneten thermoplastischen Kunststoffen finden sich im Stand der Technik; beispielsweise in den Dokumenten DE 103 27 435 A1, DE 10 2006 031 315 A1 und EP 2 197 656 B1, hier etwa in den Absätzen [0023] bis [0066]; um unnötige Wiederholungen zu vermeiden, soll deren Inhalt - soweit zum Verständnis der vorliegenden Erfindung hilfreich - mit dieser ausdrücklichen Bezugnahme auch zum Bestandteil der vorliegenden Unterlagen gemacht werden.

Für viele Anwendungen werden glasklare 3D-Formteile oder 3D-Formteile mit transparenten Abschnitten gewünscht. Für solche Anwendungen werden thermoplastische und optisch transparente Kunststoffe eingesetzt, wie beispielsweise Polycarbonat (PC), Polymethylmethyacrylat (PMMA), Polyethylenterephthalat (PET), Polyphenylsulfon (PPSU) oder Polystyrol (PS) sowie einschlägig modifizierte Materialien dieser Art.

Einlagige Schichtstoffe können Folien oder Platten aus solchen Kunststoffen sein. Folien haben typischerweise Schichtdicken von 50 µm bis 1000 µm, vorzugsweise von 200 µm bis 750 µm; Folien mit solchen Schichtdicken werden in der Umformungstechnik besonders häufig eingesetzt. Aus solche Folien erhaltene 3D-Formteile können bei Bedarf mit weiterem Kunststoff hinterspritzt werden, um formstabile, selbsttragende Fertigprodukte zu erhalten.

Platten haben typischerweise Schichtdicken von 1000 µm bis 10.000 µm, vorzugsweise Schichtdicken von 3000 µm bis 8000 µm und besonders bevorzugt Schichtdicken von 4000 µm bis 6000 µm. Aus solchen Platten erzeugte 3-D-Formteile werden typischerweise nicht mit weiterem Material hinterspritzt oder sonst wie verstärkt; daher muss die Plattendicke zusammen mit den sonstigen Materialeigenschaften die für den Einsatz des 3D-Formteils erforderliche mechanische Stabilität, Dauerhaftigkeit, Festigkeit und Belastbarkeit gewährleisten. Für viele Einsatzzwecke, beispielsweise als gewölbte Kunststoffscheibe für Kraftfahrzeuge, oder für Schutzschirme oder für Maschineneinhausungen ist eine Plattendicke von 4000 µm bis 6000 µm völlig ausreichend.

Für einen mehrlagigen Schichtstoff aus thermoplastischem Kunststoff kommt ein Verbund aus den vorstehend genannten Kunststofffolien oder ein Verbund aus den vorstehend genannten Platten und Folien in Betracht; die Gesamtschichtdicke eines solchen Verbundes soll 12.000 µm nicht übersteigen. Ein Verbund aus zwei oder mehr Folien oder aus zwei Platten kann durch gemeinsame Extrusion oder durch Verkleben mit Hilfe eines Klebers erhalten werden; als hierfür geeignete Kleber kommen beispielsweise thermoplastische Polyurethane (TPU) in Betracht.

Ein mehrlagiger Schichtstoff kann zusätzlich zu Folien und/oder Platten aus einem thermoplastischen Kunststoff auch eine oder mehrere weitere Lage(n) aus einem anderen Schichtmaterial enthalten. Ohne darauf beschränkt zu sein, können andere zusätzliche Schichtmaterialien, wie etwa Metallfolien, Holzfurnierschichten, hier insbesondere Edelholzfurniere, Leder, Kunstleder, wie etwa ALCANTARA (ALCANTARA® ist eine geschützte Marke), ferner textile Stoffe, wie etwa Web-, Strick- oder Wirkwaren sowie Vliesstoffe, je aus Natur- und/oder Kunstfasern vorgesehen werden. Damit können vielfältige dekorative Wirkungen erzielt werden, wie beispielsweise eine edle Klavierlackoptik an ausgewählten Holzfurnieren, wie etwa Wurzelholz. Es wird ein Verbund erhalten, der wenigstens eine Lage Schichtstoff aus thermoplastischem Kunststoff und wenigstens eine weitere zusätzliche Lage aus einem anderen Schichtmaterial enthält.

Erfindungsgemäß erhältliche 3D-Formteile sind häufig mit einer, einem vorgegebenen Layout folgenden grafischen, funktionalen und/oder dekorativen Gestaltung versehen, die typischerweise als Hintergrund auf der Rückseite einer transparenten Folie oder Platte aufgebracht ist, beispielsweise als Bedruckung, Metallisierung und/oder sonstige Beschichtung, und durch die Folienschicht hindurch wahrnehmbar ist. Daher werden vorzugsweise transparente Folien- und Plattenmaterialien eingesetzt. Auch eine transparente Lage kann an der zur Bedruckung, Metallisierung und/oder sonstigen Beschichtung gegenüberliegenden Oberfläche mit einer Oberflächenmattierung oder mit einer Streulackschicht versehen sein. Alternativ kann die dekorative Wirkung von einer Lage oder Schicht eines mehrlagigen Schichtstoffes, Laminates oder Verbundstoffes ausgehen, die von einer oder mehreren transparenten Folienschicht(en) modifiziert oder verstärkt wird. Beispielsweise kann die dekorative Wirkung von einer Metallfolie oder einem Edelholzfurnier oder von einer Furniernachbildung aus Kunststoff ausgehen, und diese dekorative Wirkung kann mit Hilfe von transparenten Folien modifiziert und verstärkt werden, auch um bestimmte Glanzeffekte zu erzielen; beispielsweise um eine Klavierlackoptik durch Folieneinsatz zu erzielen, wie in dem Dokument DE 10 2007 054 579 A1 angesprochen. Alle diese dekorativen Gestaltungen erhöhen den Gebrauchswert eines damit ausgestatteten 3D-Formteils oder 3D-Trägerteils.

Zu den Elementen einer solchen dekorativen Gestaltung gehören beispielsweise Ziffern, Beschriftungen, Symbole, Bilder, Piktogramme und dergleichen, die auf einer Oberfläche einer anfänglich ebenen Folie oder Platte aufgebracht werden; dies kann beispielsweise in einem mehrstufigen Siebdruckverfahren und/oder durch Aufbringung eines Coatings erfolgen, das in mehreren aufeinander folgenden Schritten je in flüssiger Schicht aufgetragen wird. Für diese alternative Aufbringung bietet sich beispielsweise Offsetdruck, Tiefdruck, Transferdruck oder Digitaldruck an. Vorzugsweise wird eine solche, einem vorgegebenen Layout folgende Bedruckung durch Siebdruck aufgetragen. Beim mehrstufigen Siebdruckverfahren wird häufig anfänglich zuerst eine schwarze Farbschicht aufgetragen, an der im Negativdruck die später sichtbaren Elemente, wie Ziffern, Beschriftungen, Symbole, Bilder, Piktogramme und dergleichen ausgespart sind; in späteren Druckschritten werden diese ausgesparten Stellen mit verschieden gefärbten Farbschichten hinterlegt. Zum Auftragen dieser Farbschichten dienen typischerweise Farblacke auf der Basis von Polycarbonat oder Polyesterurethan. Hochtemperaturbeständige flexible Druckfarben zum Bedrucken von Kunststofffolien, die ausdrücklich den Bedingungen des hier vorgesehenen HPF-Verfahrens und gegebenenfalls einem nachfolgenden Insert Moulding standhalten, sind beispielsweise in dem Dokument DE 198 32 570 C2 beschrieben. Das Dokument DE 101 51 281 A1 beschreibt Farblacke, die besonders gut für die Siebbedruckung von PMMA-Folien und die nachfolgende Umformung unter HPF-Bedingungen geeignet sind. Speziell für diese Anwendungen geeignete, flüssige Siebdruckfarben werden beispielsweise handelsüblich von der Firma PRÖLL KG, 91781 Weißenburg, Deutschland vertrieben. Auch die von der Firma Marabu GmbH & Co.KG, 71732 Tamm, DE vertriebenen hochvernetzten UV-härtenden Siebdruckfarben sind hier gut geeignet; diese vermindern oder vermeiden den zur Trocknung und vollständigen Entfernung von organischen Lösemitteln erforderlichen Aufwand.

Im Rahmen der vorliegenden Erfindung können spezielle Schichtstoffe eingesetzt und umgeformt werden. Beispielsweise kann der Schichtstoff allein aus einer Strukturfolie bestehen, oder es kann ein mehrlagiger Schichtstoff eingesetzt werden, dessen Sicht- und Deckschicht aus einer Strukturfolie besteht. Strukturfolien haben eine strukturierte Oberfläche, die aus Vorsprüngen und Vertiefungen bezüglich einer ebenen Solloberfläche gebildet ist. Derartige Strukturen können eine natürliche Vorlage nachbilden, beispielsweise die Ledernarbung an natürlichem Leder oder die Holzmaserung an einer Holzoberfläche. Mit Hilfe entsprechender Konturdaten kann die Oberfläche einer Prägewalze oder die Werkzeugoberfläche eines Positiv- oder Negativ-Werkzeugs entsprechend bearbeitet werden. Ferner können synthetische Strukturen nach vorgegebenen CAD-Daten erzeugt werden. Durch Abformen oder Prägen wird die Struktur der Prägewalze oder der Presswerkzeug-Oberfläche auf die Oberfläche einer Kunststofffolie übertragen. Einzelheiten zur Herstellung entsprechend strukturierter Presswerkzeugoberflächen können beispielsweise dem Dokument DE 198 55 962 C5 und der dort zitierten Literatur entnommen werden. Eine beispielhafte Strukturfolie wird von Exel GmbH, 83101 Rohrdorf, DE unter der Handelsbezeichnung PMU 4060 UV vertrieben. Diese Folie besteht aus einem Blend aus thermoplastischem Polyurethan und Poly(meth)acrylat und hat eine Welligkeit von max. 3 mm. Diese Strukturfolie kann transparent oder eingefärbt, beispielsweis auch tief-schwarz gefärbt erhalten und eingesetzt werden.

Weitere, als Schichtstoff geeignete hochwertige Prägefolien werden von Isosport Verbundbauteile GmbH, 7000 Eisenstadt, Österreich unter der Bezeichnung "OPTO 4D-Folien" vertrieben. Durch eine exakt abgestimmte beidseitige Prägung einer transparenten PA 12-Folie wird eine Folie mit einer einzigartigen optischen Tiefenwirkung (Lentikulareffekt) erhalten, die exzellente Materialeigenschaften aufweist, einschließlich sehr guter Kratzfestigkeit, hoher UV-Beständigkeit und guter Witterungsbeständigkeit, die solche Folien auch für den Außeneinsatz geeignet machen. Dank ihrer hohen Wärmeformbeständigkeit können derartige Prägefolien unter den erfindungsgemäß vorgesehenen Bedingungen umgeformt werden, wobei eine erfindungsgemäß mögliche verstreckungsfreie Umformung die besonderen Prägestrukturen nicht beschädigt oder beeinträchtigt.

In jüngerer Zeit sind für die LED-Lichtleittechnik verschiedene Diffusor-, Reflektor-, Lichtlenk- und Lichtauskopplungsfolien entwickelt worden. Typischerweise handelt es sich um Folien auf Basis von Polycarbonat mit einem hohen Gehalt an speziellen hochreinen Lichtstreu-Partikeln, und mit einer besonderen, auf die Folienoberfläche aufgeprägten Strukturierung. Als LED (light emitting diodes) kommen anorganische und organische Systeme (OLED) in Betracht. Die Folie wird typischerweise auf eine Glasfläche am LED-Gehäuse aufgeklebt. Solche Spezialfolien für die Lichtleittechnik sind handelsüblich verfügbar und werden beispielsweise von Covestro Deutschland AG, 41536 Dormagen, DE unter den Bezeichnungen Makrofol LM 327 (eine Lichtlenkfolie) oder Makrofol TP 228 (eine Lichtauskopplungsfolie) vertrieben; Makrofol® ist eine eingetragene Marke. Derartige lichtlenkende, lichtverteilende und/oder lichtauskoppelnde Folien sind bedruckbar und nach dem HPF-Verfahren zu 3D-Formteilen verformbar, ohne die spezielle Oberflächenstrukturierung zu beeinträchtigen. Auch derartige Spezialfolien für die Lichtleittechnik können als ebener Schichtstoff für die erfindungsgemäße Warmumformung eingesetzt werden.

Auf erfindungsgemäß eingesetzten Schichtstoffen aufgebrachte dickere Metallschichten und Metallisierungen können ebenfalls im Siebdruckverfahren aufgebracht werden. Dünnere Metallschichten mit Schichtdicken von 5 bis 250 nm, insbesondere mit Schichtdicken von 15 bis 60 nm, die einerseits metallischen Glanz verleihen und andererseits lichtdurchlässig sind, können mit Hilfe von Physical Vapor Deposition (PVD) oder Chemical Vapor Deposition (CVD) aufgebracht werden. Die zur Erzeugung bestimmter Funktionen (etwa elektrische Kontaktierung) oder für bestimmte grafische oder dekorative Gestaltungsmuster nicht gewünschten, überflüssigen Metallschichtabschnitte können durch Laserbehandlung entfernt werden. Zu geeigneten Metallen gehören hier beispielsweise Aluminium, Titan, Chrom, Kupfer, Molybdän, Indium und Iridium, sowie Metalllegierungen, wie zum Beispiel Indium-Zinn-Legierungen, oder Kupferlegierungen, vorzugweise Indium-Zinn-Legierungen, besonders bevorzugt Indium-Zinn-Kupfer-Legierungen (wie sie beispielsweise in dem Dokument US 2008/0020210 A beschrieben sind). Auf derartigen Metallschichten kann weiterhin wenigstens eine weitere Schicht aus einer oder mehreren elektrolumineszenten Verbindungen aufgebracht sein; derartige elektrolumineszente Verbindungen sind dem Fachmann bekannt, beispielsweise aus dem Dokument EP 1 647 399 A1. Zur Erzeugung von elektrischen Leiterbahnen können Silberpartikel enthaltende Pasten aufgetragen werden oder es können die vorstehend genannten Metallisierungen vorgenommen werden. An solche elektrische Leiterbahnen können in das 3D-Formteil integrierte LEDs (Licht emittierende Dioden) angeschlossen sein. Weiterhin können an dem zu verformenden ebenen Schichtstoffstück auch transparente Abschnitte verbleiben, in denen später das Display irgendwelcher Flüssigkristallanzeigen sichtbar wird. Auf der anderen, zu den Farbschichten gegenüber befindlichen Oberfläche wird häufig ein farbloser Strukturlack aufgetragen, der dem fertigen Produkt eine matte, nichtspiegelnde Oberfläche verleiht. Nach der für den Einsatzzweck vorgesehenen, bestimmten Anordnung des 3D-Formeils wird sich - je aus der Sicht des Betrachters - die Strukturlackschicht an der Vorderseite des Formteils befinden, und die Farbschichten der grafischen Gestaltung werden sich an der Rückseite des Formteils befinden.

Ebene Folien und Platten aus den vorstehend genannten thermoplastischen Kunststoffen können mit einer, durch Koextrusion aufgebrachten Beschichtung versehen sein, welche besondere Eigenschaften und Funktionen verleiht. Hierzu gehören beispielsweise Absorption von UV-Strahlung, bei Einwirkung von Sonnenlicht erfolgende Farbänderung und/oder Dunkelfärbung mit Hilfe photochromer Substanzen, Kratzfestbeschichtungen mit schmutzabweisender Funktion und "Antigraffiti-Wirkung" (vgl. das Dokument DE 10 2005 009 209 A1), wasserspreitende Beschichtungen zur Verzögerung/Verminderung der Wasserabscheidung in feuchter Umgebung ("Antifog") und weitere bekannte Funktionen. Typischerweise haben derartige Beschichtungen eine Schichtdicke kleiner 50 µm.

Auf bereits erzeugten Folien und Platten aus thermoplastischem Kunststoff können auch nachträglich Beschichtungen aufgebracht werden, insbesondere eine oder mehrere Schutzschicht(en). Gerade für Polycarbonat ist bekannt, dass es nicht selbst inhärent UV-stabil ist. Die Empfindlichkeit von Bisphenol A-Polycarbonat weist die höchste Empfindlichkeit zwischen 320 nm und 330 nm auf. Unterhalb von 300 nm gelangt keine Sonnenstrahlung auf die Erde, und oberhalb von 350 nm ist dieses Polycarbonat so wenig empfindlich, dass keine Vergilbung mehr stattfindet. Für ein, für eine lang andauernde Außenanwendung vorgesehenes 3D-Formteil aus Polycarbonat ist daher ein effizienter UV-Schutz wünschenswert. Zusätzlich ist eine Verbesserung der Abriebbeständigkeit, der Wetterbeständigkeit und der generellen Gebrauchstüchtigkeit von PC-Oberflächen wünschenswert.

Hierzu kann auf bereits vorhandenen Folien und Platten über eine Haft- und Grundierschicht eine Kratzfestbeschichtung aufgebracht werden, die auch UV-Schutz gewährleistet; die Herstellung entsprechender Produkte ist beispielsweise in dem Dokument DE 10 2009 020 934 A1 beschrieben; danach kann eine solche Beschichtung auf Substraten aus Polycarbonat, Polyestercarbonat, Polyester, Polyphenylether, Polyacrylat und Polymethacrylat aufgebracht werden. Entsprechende Halbzeuge aus PC mit einer solchen Kratzfestbeschichtung bzw. Hardcoatbeschichtung sind handelsüblich zugänglich und werden beispielsweise von Covestro Deutschland AG, 41538 Dormagen, DE unter der Handelsbezeichnung MAKROFOL® TP 278, sowie von MacDermid Autotype Ltd., Wantage UK unter der Handelsbezeichnung XtraForm® vertrieben.

Im Handel erhältlich ist hier ein mit Schutzfolie versehenes Vorprodukt, das seine endgültigen Eigenschaften erst nach einstufiger oder zweistufiger UV-Härtung erlangt. Das Vorprodukt ist grundsätzlich tiefziehfähig, jedoch thermisch empfindlich. Typischerweise wird ein solches Vorprodukt beim Thermoformen wegen der dazu notwendigen Umformtemperatur von 160 °C oder höher thermisch geschädigt, so dass solche, mit einer UV-härtbaren Kratzfestbeschichtung versehenen Substrate nicht unter Thermoform-Bedingungen umformbar sind. Demgegenüber lassen sich solche Vorprodukte nach dem erfindungsgemäßen Verfahren zu attraktiven 3D-Formteilen umformen, weil hier mit niedrigeren Umformtemperaturen gearbeitet wird, und weil die zweistufige Umformung eine attraktive Formgebung mit erheblich gekrümmten bzw. gewölbten Oberflächen ermöglicht. Erst nach der fertigen Formgebung wird eine einstufige oder zweistufige UV-Härtung vorgenommen.

So erzeugte 3D-Formteile aus Polycarbonat sind sehr gut für Außenanwendungen, sowie für den Einsatz als Interiorteile im Kfz-Innenraum geeignet.

Die erfindungsgemäße zweistufige Umformung eines ebenen warmen Schichtstoffes kann auch zur Kaschierung eines 3D-Trägerteils eingesetzt werden. Als solche 3D-Trägerteile kommen irgendwelche Gegenstände in Betracht, die eine dreidimensional konfigurierte Hülle oder Schale haben, deren Oberfläche mit einem fest haftenden Schichtstoff beschichtet bzw. kaschiert werden soll. Typischerweise ist diese Hülle oder Schale an einer Stützkonstruktion abgestützt, die später auch für die Anbringung und Befestigung des kaschierten Produktes am Einsatzort sorgt. Derartige Substrate oder Trägerteile können aus einem Metall, beispielsweise einem Leichtmetall wie Aluminium, Magnesium und deren Legierungen, aus Kunststoff, hier etwa aus einem thermoplastischen und im Spritzguss verarbeitbaren Kunststoff wie etwa Polyamid (PA), Acrylnitril-Butadien-Styrol-Terpolymer (ABS), Acrylester-Styrol-Acrylnitril-Terpolymer (ASA), Polyoxymethylen (POM), Polyvinylchlorid (PVC) oder Polyarylensulfon (PSU), ferner aus Holz und anderen stabilen und dauerhaften Werkstoffen bestehen. Für den Einsatz als Innenausstattungsteile in Kraftfahrzeugen werden derartige 3D-Trägerteile einschließlich ihrer Stützkonstruktion vorab typischerweise als einstückige Spritzgussteile im Spritzgussverfahren gefertigt und bestehen dann häufig aus Kunststoffen, wie etwa PA, ABS, ASA, POM, PVC oder PSU.

Damit ein gegebener Schichtstoff am kaschierten 3D-Trägerteil sicher und dauerhaft haftet, muss der Schichtstoff über eine Klebeschicht an das 3D-Trägerteil gebunden werden. Eine solche Klebeschicht erlaubt die Verwendung von Schichtstoffen mit hoher Rückstellkraft, Anformung des Schichtstoffes an kleine Krümmungsradien und eine sichere und dauerhafte Befestigung der Schichtstoffränder am 3D-Trägerteil, insbesondere auch an dessen Hinterschneidungen.
Im Rahmen der erfindungsgemäßen Kaschierung eines 3D-Trägerteils mit einem Schichtstoff, wobei eine zweistufige Umformung des ursprünglich ebenen Schichtstoffes durchgeführt wird, ist auch eine alternative Verfahrensvariante möglich, bei welcher ein Zuschnitt aus dem ebenen Schichtstoff auf einer Transferfolie abgelegt wird, und Transferfolie und Schichtstoffzuschnitt gemeinsam zweistufig umgeformt werden; vgl. auch Anspruch 19. Lediglich diese Transferfolie wird in einer, die beiden Formwerkzeughälften druckdicht voneinander trennenden Weise zwischen der Auflagefläche an der unteren Formwerkzeughälfte und der Dichtfläche an der oberen Formwerkzeughälfte eingespannt. Bei Beaufschlagung mit dem fluiden Druckmittel unter einem Druckmitteldruck von 20 bar bis 300 bar trifft das Druckfluid auf die Transferfolie, und der von der Transferfolie gehaltene Schichtstoffzuschnitt wird an das 3D-Trägerteil angepresst und angeformt. Solche Zuschnitte können vorzugsweise Lagen aus Metall, aus Holz, hier beispielsweise Edelholzfurnier, aus Leder, aus Kunstleder, aus textilen Stoffen, wie etwa Web-, Strick- oder Wirkwaren sowie Vliesstoffe aus Natur- und/oder Kunstfasern und dergleichen enthalten, zusätzlich zu einer Lage oder zu mehreren Lagen aus einer thermoplastischen Kunststofffolie. Der Schichtstoffzuschnitt kann eine auf das 3D-Trägerteil abgestimmte Größe haben und muss nicht den gesamten Querschnitt der Druckglocke ausfüllen. Eine unerwünschte Ablagerung von Schichtstoff auf oder an Formwerkzeugteilen kann begrenzt werden. Die Transferfolie dient als Träger für den Schichtstoff. Die Transferfolie kann aus einem hochelastischen Folienmaterial bestehen, das bei der isostatischen Hochdruckumformung durch eigene Dehnung die Flächenzunahmen bereitstellt, die für die abschließende Anformung des Schichtstoffzuschnitts an das 3D-Trägerteil benötigt werden. Dehnung, Verstreckung und sonstige Beanspruchung des Schichtstoffzuschnitts kann noch weiter vermindert oder weitgehend beseitigt werden; häufig kann eine verstreckungsfreie Umformung des Schichtstoffzuschnitts erreicht werden. Transferfolien aus Polyolefin, wie etwa Polyethylen, hier insbesondere LDPE, oder Polypropylen, je mit Schichtdicken von etwa 80 bis 500 µm oder Transferfolien aus thermoplastischen Polyurethanen, TPU (hier beispielsweise die von Covestro Deutschland AG, 41538 Dormagen, DE vertriebenen DESMOPAN-Folien; DESMOPAN® ist eine geschützte Marke) sind gut geeignet und werden vorzugsweise eingesetzt. Nach Fertigstellung kann eine solche Transferfolie von dem kaschierten Produkt entfernt werden oder bis auf weiteres als zusätzlicher Oberflächenschutz auf der Oberfläche des Schichtstoffes verbleiben. Der Zuschnitt wird an der Transferfolie typischerweise mit Hilfe eines Haftklebers gehalten, der rückstandsfrei von der Sichtseite des Schichtstoffes entfernt werden kann. Geeignete Haftkleber sind bekannt und handelsüblich zugänglich. Eine gute Haftung des Zuschnitts an der Transferfolie überträgt einen Teil der bei der Transferfolienumformung auftretenden Dehnung der Transferfolie auf den Schichtstoffzuschnitt und verhindert so eine unerwünschte Faltenbildung des Zuschnitts.

Klebstoffsysteme und Klebemassen zur Erzeugung einer solchen Klebeverbindung zwischen Schichtstoff(zuschnitt) und 3D-Trägerteil sind dem Fachmann grundsätzlich bekannt, der aus einer Vielzahl handelsüblich angebotener, geeigneter Produkte auswählen kann. Bevorzugt ist eine Arbeitsweise, bei welcher eine Ein-Komponenten-Klebemasse vorab lediglich auf der Anlageseite des Schichtstoffes aufgebracht ist. Ferner soll die lediglich auf der Anlageseite des Schichtstoffes befindliche Kleberschicht anfänglich in einem nicht aktiven Zustand vorliegen, was Lagerung und Handhabung erleichtert. Durch eine gezielte Aktivierungsbehandlung soll die anfänglich nicht aktive Kleberschicht in einen aktiven Zustand überführt werden, in dem dann der Klebevorgang eingeleitet wird. Eine bevorzugte Aktivierungsbehandlung ist die Erwärmung der Klebemasse auf ihre Aktivierungstemperatur; in einem solchen Falle werden thermisch aktivierbare Klebemassen bzw. Hotmelt-Kleber eingesetzt. Eine alternative oder zusätzliche Aktivierungsbehandlung ist die Bestrahlung mit actinischer Strahlung hier insbesondere UV-Strahlung; in einem solchen Falle werden UV-härtende Kleber eingesetzt. Zur Aktivierung solcher UV-härtender Kleber müssen in der Heizzone zusätzliche UV-Strahler vorgesehen werden.

Die Aufbringung kann beispielsweise dadurch erfolgen, dass eine Lösung einer aktivierbaren Klebemasse im Siebdruckverfahren auf der Anlageseite des Schichtstoffes aufgebracht wird. Anschließend wird das Lösemittel durch Verdunstung und Trocknung entfernt. Es kann eine dünne gleichmäßige Trockenschicht aus Klebemasse erhalten werden, die häufig nur dort aufgebracht wird, wo Klebekraft benötigt wird. Alternativ kann eine solche aktivierbare Klebemasse direkt als Trockenschicht von einem silikonisierten Trennpapier abgenommen und übertragen werden, beispielsweise indem Schichtstoff und mit einer solchen aktivierbaren Klebemasse versehenes Trennpapier gemeinsam durch einen Kalanderwalzenspalt geführt werden. Ferner können passend ausgewählte pulverförmige Kleber mit Hilfe von Extrusionsbeschichtung, beispielsweise durch Heiß-Extrusion oder Pulverbeschichtung oder durch sonstige Direktbeschichtung aufgebracht werden. Verschiedene thermisch aktivierbare Schmelzkleber sind auch in Form von Schmelzklebefolie oder -vliese erhältlich und können in dieser Form - beispielsweise auch in einem gewünschten Zuschnitt - auf der Anlageseite des Schichtstoffes aufgebracht werden. Derartige thermisch aktivierbare Klebemassen, Schmelzkleber und Hotmelt-Kleber sind dem Fachmann bekannt, der aus vielen, handelsüblich erhältlichen Produkten auswählen kann. Nachstehend sind lediglich einige beispielhafte Rezepturen genannt:
Eine thermisch aktivierbare Klebemasse kann - als wesentliche Komponenten - bestehen aus einem elastomeren Basispolymer und aus einem Modifikationsharz, wobei das Modifikationsharz ein Klebharz und/oder ein Reaktivharz umfasst. Das elastomere Basispolymer kann ein thermoplastisches Polyurethan sein, oder ein Gemisch aus pulverförmigen, Polyurethan-bildenden Komponenten, wie aromatischen Diisocyanaten und Polyester-polyolen mit einem hohen Gehalt an endständigen Hydroxylgruppen. Thermoplastische Polyurethane mit einem hohen Gehalt an endständigen Hydroxylgruppen liefern eine besonders hohe Klebefestigkeit zu verschiedenen Substraten.

Eine alternative, thermisch aktivierbare Klebemasse kann bestehen aus:
- 50 bis 95 Gew.-% eines verklebbaren Polymers, und aus
- 5 bis 50 Gew.-% eines Epoxidharzes oder einer Mischung aus mehreren Epoxidharzen;
wobei das verklebbare Polymer umfasst Acrylsäureverbindungen und/oder Methacrylsäureverbindungen und ein oder mehrere copolymerisierbare Vinylmonomere.

Eine weitere, thermisch aktivierbare Klebemasse kann bestehen aus:
- 40 bis 98 Gew.-% acrylhaltigem Blockpolymer,
- 2 bis 50 Gew.-% eines oder mehrerer klebrig machender Epoxidharze und/oder Novolakharze und/oder Phenolharze; und
- 0 bis 10 Gew.-% Härter zum Vernetzen der Epoxidharze und/oder der Novolakharze und/oder der Phenolharze.

Zur optimalen Vernetzung können diesen Klebemassen zusätzlich geeignete Initiatoren und/oder Vernetzer zugesetzt werden, beispielsweise IR-Strahlung absorbierende Photoinitiatoren und/oder UV-Licht absorbierende Photoinitiatoren. Zusätzlich können Haftvermittler vorgesehen werden, beispielsweise sogenannte "Primer". Als geeignete Primer kommen beispielsweise Heißsiegelkleber auf der Basis von Polymeren wie Ethylvinylacetat oder funktionalisierte Ethylvinylacetate oder auch Reaktivpolymere in Betracht.

Derartige thermisch aktivierbare Klebemassen können so erzeugt und eingestellt werden, dass sie eine Aktivierungstemperatur im Bereich von 60 bis 140 °C, noch weiter bevorzugt eine Aktivierungstemperatur im Bereich von 75 bis 130 °C aufweisen. Derartige Aktivierungstemperaturen liegen innerhalb oder unterhalb der erfindungsgemäß vorgesehenen Umformungstemperatur für einen bestimmten Schichtstoff. Nach Abkühlung unter diese Aktivierungstemperatur, wird schnell wenigstens eine ausreichende Anfangsklebefestigkeit zwischen Schichtstoff und 3D-Trägerteil erhalten, so dass der Anpressdruck schnell beendet und das Produkt aus dem Formwerkzeug entnommen werden kann. Der warme Schichtstoff wird mit Hilfe von fluidem Druckmittel, insbesondere Druckluft, unter einem Druckmitteldruck von 20 bar bis 300 bar ausreichend lange an das 3D-Trägerteil angepresst und angeformt, beispielsweise 2 bis 30 sec lang. Wird das fluide Druckmittel anschließend rasch aus der Druckglocke entfernt, so begünstigt die damit einhergehende Absenkung der Temperatur des Formwerkzeugs und des kaschierten 3D-Trägerteils eine rasche Abkühlung der Kleberschicht unter deren Aktivierungstemperatur.

Weitere Einzelheiten zu derartigen thermisch aktivierbaren Klebemassen lassen sich dem Dokument DE 10 2006 042 816 A1 entnehmen. Die dort beschriebenen thermisch aktivierbaren Klebemassen werden im Rahmen der vorliegenden Erfindung bevorzugt eingesetzt. Hierbei sind solche thermisch aktivierbaren Klebemassen, Schmelzkleber und Hotmelt-Kleber besonders bevorzugt die innerhalb von Sekunden auf ihre Aktivierungstemperatur bringbar sind und im Verlauf der Abkühlung innerhalb von Sekunden eine ausreichende Anfangsklebefestigket sowohl zu der Anlageseite des Schichtstoffes, wie zur 3D-Trägerteiloberfläche hervorbringen und gewährleisten. Gut geeignet sind hier auch die diversen von Covastro Deutschland AG, 41538 Dormagen, DE unter der Handelsbezeichnung DESMOMELT (DESMOMELT® ist eine geschützte Marke) vertriebenen Hitze-aktivierbaren Klebemassen bzw. Schmelzklebstoffe. Hierbei handelt es sich um ein Gemisch aus kristallinen Polyester-polyolen und kristallinen Diisocyanaten, die nach Hitze-Aktivierung Polyurethane mit endständigen Hydroylgruppen bilden. Es wird eine gute Haftung an diversen Werkstoffen erhalten, wie zum Beispiel an Leder, Textilien, Holzfaserstoffen und zahlreichen Kunststoffen, einschließlich PUR-Elastomeren und Weich-PVC. Die verschiedenen DESMOMELT-Typen können beispielsweise als Lösung in ausgewählten Lösemitteln (etwa Butanon-2, Aceton oder Methylethylketon), als Schmelzklebefolien oder unmittelbar als Pulver durch Direktbeschichtung verarbeitet werden. Die Mindestaktivierungstemperatur beträgt etwa 60 °C. Unter der Beaufschlagung mit dem Hochdruck-Druckfluid wird bereits innerhalb von Sekunden eine ausreichende Anfangsklebefestigkeit erhalten, die sich nach Entnahme des kaschierten Produktes aus dem Formwerkzeug im Verlauf der nächsten Stunden weiter steigert.

Der mit einer teilweisen oder vollflächigen Trockenschicht aus thermisch aktivierbarer Klebemasse bzw. Schmelzklebstoff versehene Schichtstoff muss vor der Umformung soweit erwärmt werden, dass diese Klebemasse bzw. dieser Schmelzklebstoff aktiviert wird. Dies erfolgt erfindungsgemäß gemeinsam mit der Erwärmung des Schichtstoffes auf dessen Umformungstemperatur.

Das typischerweise Umgebungstemperatur aufweisende Schichtstoffstück wird vor der erfindungsgemäßen, zweistufigen Umformung auf eine vom jeweiligen Kunststoff abhängige Umformtemperatur erwärmt. Die erfindungsgemäß vorgesehenen Umformtemperaturen orientieren sich an der VICAT-Erweichungstemperatur B50 bzw. an der VST (von Vicat softening temperature) B50, je nach DIN EN ISO 306, des jeweiligen Kunststoffes. Zur Bestimmung der VST drückt eine Nadel mit einer kreisförmigen Stirnfläche von 1 mm² unter einer bestimmten Kraft auf einen Prüfkörper, und es wird diejenige Temperatur bestimmt, bei welcher die Nadel 1 mm tief in den Prüfkörper eingedrungen ist. Bei der Variante B50 wird eine Kraft von 50 N und eine Heizrate von 50 °C/h angewandt. Für verschiedene Kunststoffe ist deren VICAT-Erweichungstemperatur B50 bzw. VST B50 beispielsweise in der Internet-Fundstelle http://wiki.polymerservice-merseburg.de "Vicat-Erweichungstemperatur - Lexikon der Kunststoffprüfung" beschrieben. In der nachstehenden Tabelle sind für einige Kunststoffe die dort angegebenen VST B50 (°C) Werte den entsprechenden, für die Druckluftformung beim Thermoformen empfohlenen Umformtemperaturen (vgl. Fachbuch "Thermoformen in der Praxis" von Peter Schwarzmann, Herausgeber ILLIG, 2. Auflage, Carl Hanser Verlag, München, 2008, dort Seite 40) gegenüber gestellt:

| Kunststoff | VST B50 (°C) | empfohlene Umformtemperaturen (°C) nach ILLIG |
|---|---|---|
| PC | 145 | 150 - 180* |
| PMMA | 103 | 140 - 170 |
| ABS | 87 | 130 - 160 |
| SAN | 106 | 135 - 170 |
| PA 6 | 200 | 230 - 240 |
| PS | 84 | 120 - 150 |
| PP | 90 | 150 - 160 |
| PVC-U | 77 | 120 - 140 |

| | | |
|---|---|---|
| * Erfahrungsgemäß erfolgt beim Thermoformen die Druckluftumformung von PC-Halbzeug tatsächlich ganz überwiegend bei Umformtemperaturen von 180 °C bis 220 °C. | | |

Erfindungsgemäß ist eine Erwärmung auf eine Umformtemperatur im Temperaturbereich [(VST 50B (°C) minus 20 °C) bis (VST 50B (°C) plus 23 °C)] für den jeweiligen Kunststoff vorgesehen; mehr bevorzugt ist eine Erwärmung auf eine Umformtemperatur im Temperaturbereich (- 10 bis + 15 °C) um die jeweilige VST 50B herum vorgesehen. Folien und Platten aus Polycarbonat (PC) werden erfindungsgemäß vorzugsweise auf eine Umformtemperatur im Temperaturbereich von 130 °C bis 158 °C erwärmt. Die erfindungsgemäß vorgesehenen Umformtemperaturen liegen damit deutlich unterhalb der für das Thermoformen vorgesehenen bzw. angewandten Umformtemperaturen.

Zur Durchführung der Erwärmung wird vorzugsweise eine berührungsfreie Erwärmung mit Hilfe von Strahlungsheizung unter solchen Bedingungen vorgenommen, dass wenigstens eine Seite der gesamten Formfläche oder des überwiegenden Teils der Formfläche des umzuformenden Schichtstoffstückes eine Oberflächentemperatur im oben genannten Temperaturbereich annimmt. Die vorstehend genannten Umformtemperaturen sind solche Oberflächentemperaturen, die mit Hilfe einer Wärmebildkamera messbar sind.

Zur erfindungsgemäßen Verarbeitung wird das ebene Schichtstoffstück in definierter Anordnung auf einem rahmenartigen Träger, einer rahmenartigen Palette oder dergleichen angebracht, der/die nachstehend kurz als rahmenförmige Palette bezeichnet wird. Gut geeignet ist eine rahmenförmige Palette mit einer Stegbreite von 30 mm bis 60 mm. Die randseitigen Abschnitte der Folie, der Platte oder der mehrlagigen Anordnung liegen typischerweise mit einer Breite von 20 mm bis 30 mm auf diesen, die rahmenförmige Palette bildenden Stegen auf. Für eine definierte Anordnung sorgen kreisrunde Positionierstifte, die von den Stegen abstehen und in Langlöcher eingreifen, welche in den Schichtstoffstück-Randabschnitten ausgespart sind.

Die auf einem solchen Rahmen gehaltene Platte wird in eine Heizzone eingebracht und dort berührungslos mittels Strahlungsheizung auf die Umformtemperatur erwärmt. beispielsweise mit Hilfe von Infrarotstrahlung oder Quarzstrahlern. Vorzugsweise ist eine Heizzone vorgesehen, die zwei, flächengleiche, horizontal ausgerichtete und im Abstand zueinander sowie miteinander fluchtend angeordnete Heizfelder aufweist. Das auf der rahmenförmigen Palette gehaltene Schichtstoffstück wird eine Zeit lang mittig zwischen und im gleichen Abstand zu beiden Heizfeldern gehalten. Typischerweise hat jedes Heizfeld eine größere Fläche als die miteinander fluchtende Anordnung aus Palette und Schichtstoffstück. Zusätzlich kann jedes Heizfeld von einer umlaufenden Schürze eingefasst sein, die auf das umzuformende Schichtstoffstück zu gerichtet ist, und die Strahlung der randständigen Heizstrahler reflektiert und auf das Schichtstoffstück fokussiert.

Jedes Heizfeld weist eine Anzahl aneinander grenzender und individuell ansteuerbarer Infrarot-Flächenstrahler oder Quarzstrahler auf, die zusammen einen Heizschirm bilden. Vorzugsweise werden vergleichsweise kleinformatige Infrarot-Flächenstrahler oder Quarzstrahler eingesetzt. Gut geeignet sind hier beispielsweise Vollkeramik-Strahler mit Abmessungen von 60 mm x 60 mm, die bei einer Leistungsaufnahme von 125 Watt eine Oberflächentemperatur von angenähert 300°C annehmen. Infrarot-Flächenstrahler dieser Art werden beispielsweise von der Firma FRIEDRICH FREK GmbH, 58708 Menden, DE angeboten und vertrieben.

Typischerweise ist ein Abstand zwischen der Oberfläche des umzuformenden Schichtstoffstücks und einerseits der Oberfläche des oberen Heizschirms sowie andererseits der Oberfläche des unteren Heizschirms von je etwa 100 mm bis 130 mm vorgesehen. Hierdurch wird eine Überlappung der von den jeweiligen, aneinander grenzenden Randbereichen benachbarter Infrarot-Flächenstrahler oder Quarzstrahler ausgehenden Wärmestrahlung erreicht. Die Auswirkungen der Flächenstrahlergrenzen werden minimiert, und es wird eine gleichmäßige Temperaturverteilung an der Formflächenoberfläche des umzuformenden Schichtstoffstückes erreicht.

Die vom Heizschirm in das Schichtstoffstück übertragbare Wärmemenge ist proportional zur vierten Potenz der Heizschirmtemperatur in °K. Je höher die Heizschirmtemperatur ist, desto kürzer ist die Heizzeit , das heißt die notwendige Verweildauer des Schichtstoffstücks in der Heizzone, um dessen Erwärmung auf die Umformtemperatur zu erreichen. Eine vergleichsweise niedrige Heizschirmtemperatur eröffnet mehr Flexibilität in der Wahl der Verweildauer, wichtig insbesondere bei der Erwärmung von Platten, um auch eine ausreichende Erwärmung einer Plattenkernzone zu erreichen, und ermöglicht eine Reaktion auf Besonderheiten der Schichtstoffoberfläche, etwa verursacht durch eine teilweise Beschriftung, Bedruckung, Metallisierung und/oder sonstige Beschichtung. Im Rahmen der Erfindung ist vorzugsweise eine Heizschirmtemperatur im Bereich von 120 °C bis 180 °C oberhalb VST 50B des umzuformenden Kunststoffes vorgesehen. Dies ermöglicht gerade auch bei Platten einen ausreichend langen Aufenthalt der zu erwärmenden Platte in der Heizzone, um auch eine Plattenkernzone ausreichend zu erwärmen, ohne die Plattenoberfläche zu schädigen.

Bei Folien mit Schichtdicken von 100 µm bis 500 µm wird üblicherweise eine Aufheizgeschwindigkeit von 5 °C bis 10 °C pro Sekunde erreicht. Die Folienoberflächentemperatur entspricht angenähert einer Folienkerntemperaur. Eine Kernzone von Folie oder Platte wird mit 40 % bis 60 % der Schichtdicke angenommen. Für Kunststoffplatten, beispielsweise mit Schichtdicken von 3 mm bis 10 mm muss eine deutlich niedrigere Aufheizgeschwindigkeit angesetzt werden. Ausgehend von den vorstehend genannten Randbedingungen wurden hier gute Ergebnisse erzielt, wenn eine, Umgebungstemperatur aufweisende Platte, zur Erwärmung auf die Umformtemperatur für eine Verweildauer in der Heizzone gehalten wird, die vorzugsweise beträgt:
- für eine Platte mit einer Plattendicke von 3 mm wenigstens 70 Sekunden;
- für eine Platte mit einer Plattendicke von 6 mm wenigstens 140 Sekunden; und
- für eine Platte mit einer Plattendicke von 10 mm wenigstens 230 Sekunden.

Noch weiter bevorzugt ist hier vorgesehen, die umzuformende, mit Umgebungstemperatur in diese Heizzone eingebrachte Platte für eine plattendickenabhängige Verweilzeit von [(Zahlenwert der Plattendicke in mm) x 23 Sekunden + z (Sekunden)] in dieser Heizzone zu halten, um die Erwärmung der Platte auf die Umformtemperatur durchzuführen; z hat hier einen Wert von 3 bis 70, noch weiter bevorzugt von 5 bis 50. An so erwärmten Platten ist auch die Kernzone ausreichend flexibel, um die erfindungsgemäße monodirektionale Abformung zu einem monodirektional abgeformten Vorformling auch an dickeren Platten durchführen zu können.
Es ist vorteilhaft, wenn jeder Infrarot-Flächenstrahler oder Quarzstrahler am vorstehend genannten Heizschirm individuell ansteuerbar ist. Die Ansteuerung erfolgt über die elektrische Leistungsaufnahme. Eine höhere Leistungsaufnahme erzeugt eine höhere Oberflächentemperatur an einem gegebenen Infrarot-Flächenstrahler oder Quarzstrahler. Damit kann zusätzlich über die Steuerung der Leistungsaufnahme der einzelnen Infrarot-Flächenstrahler eine Feinsteuerung der Temperaturverteilung an der Oberfläche einzelner Bereiche der Formfläche einer umzuformenden Platte erfolgen, die je einem bestimmten Infrarot-Flächenstrahler oder Quarzstrahler zugeordnet sind. Die Wirkung dieser Feinsteuerung ist umso größer, je niedriger die mittlere Oberflächentemperatur ist. Deshalb wird vorzugsweise die Erwärmung einer umzuformenden Platte in einer solchen Heizzone durchgeführt, die von zwei, miteinander fluchtenden Heizfeldern begrenzt ist, die je eine mittlere Heizschirm-Oberflächentemperatur im Bereich von 120 °C bis 180 °C oberhalb VST B50 des umzuformenden Kunststoffes aufweisen, aus welchem die umzuformende Platte besteht.

Zur Erzielung optimaler Ergebnisse ist eine vergleichsweise genaue Steuerung und Kontrolle der Oberflächentemperatur an dem für die Umformung vorgesehenen Abschnitt einer umzuformenden Platte hilfreich. Zur Erfassung dieser Oberflächentemperatur kann die in der Heizone erwärmte Platte auf dem Weg von der Heizzone zur Umformungszone eine Temperaturmess-Station passieren, in der mit Hilfe einer Wärmebildkamera berührungsfrei die Temperaturverteilung an einer Plattenoberfläche abgetastet, sichtbar gemacht und/oder auf sonstige Weise dargestellt wird.

Mit einer solchen Ausgestaltung des erfindungsgemäßen Verfahrens werden nachstehende Vorteile erzielt:
Keramikinfrarotstrahler der hier eingesetzten Art emittieren ihre Wärmestrahlung im Wellenlängenbereich von 2,5 bis 10 µm. Die Erwärmung der Platte hängt vom Absorptionsvermögen des Plattenmaterials und vom Reflexionsverhalten der Plattenoberfläche in diesem Wellenlängenbereich ab. Eine durch Koextrusion aufgebrachte Beschichtung der gesamten Plattenoberfläche und/oder die einem vorgegebenen Layout folgende Bedruckung, Metallisierung und/oder sonstige Beschichtung eines Teils der Plattenoberfläche kann die mit einer gegebenen Heizstrahler-Oberflächentemperatur innerhalb einer gegebenen Zeitspanne erzielbare Plattenoberflächentemperatur ganz erheblich beeinflussen und verändern. Ein transparentes Plattenmaterial und/oder ein heller Beschichtungsabschnitt vermindern die Wärmeaufnahme. Insbesondere kann eine metallische Beschichtung, hier etwa aus AI, Ti oder Cr die Wärmeaufnahme erheblich vermindern. Dagegen verstärkt ein dunkler bis schwarzer Beschichtungsabschnitt die Wärmeaufnahme. Die in einer gegebenen Anordnung mit gegebenen Infrarot-Flächenstrahlern innerhalb einer gegebenen Zeitspanne erzielbare Plattenoberflächentemperatur hängt damit auch von Art und Größe einer Bedruckung, Metallisierung und/oder sonstigen Beschichtung des für die Umformung vorgesehenen Plattenabschnitts ab. Durch gezielte Ansteuerung einzelner Infrarot-Flächenstrahler können diese Unterschiede ausgeglichen werden, um eine einheitliche gleichmäßige Plattenoberflächentemperatur zu erzielen. Weiterhin kann es wünschenswert sein, in einzelnen Plattenabschnitten, wo eine besonders starke oder besonders scharfkantige Umformung um einen kleinen Krümmungsdurchmesser herum vorgesehen ist, eine höhere Flexibilisierung des Plattenmaterials anzustreben, die dort durch eine höhere Plattenoberflächentemperatur erreicht wird. Hierfür können insbesondere solche Plattenstücksegmente ausgewählt werden, in denen eine besonders starke monodirektionale Umformung der ursprünglich ebenen Platte erfolgen soll.

Im Hinblick auf die hier in Frage kommenden Umformtemperaturen im Bereich von (-10 °C bis + 23 °C) um VST 50B des jeweiligen thermoplastischen Kunststoffes herum, beispielsweise um etwa 130 °C bis 158 °C für 3D-Formteile aus Polycarbonat (PC) oder um etwa 90 °C bis 120 °C für 3D-Formteile aus Poly(meth)acrylat (PMMA) kommt als Wärmebildkamera typischerweise eine Infrarot-Linienkamera in Betracht, die für den Temperaturbereich von 0°C bis 400°C ausgelegt ist und Temperaturstrahlung im Wellenbereich von 8 µm bis 14 µm erfasst und auswertet. Die Erfassung der Wärmestrahlung erfolgt mit Hilfe eines Zeilensensors, der beispielsweise 128 oder 256 Messelemente aufweisen kann. Infrarot-Linienkameras dieser Art mit entsprechender Auswerteschaltung und Auswertesoftware sind handelsüblich zugänglich. Im Rahmen der vorliegenden Erfindung hat sich hier eine Infrarot-Kamera gut bewährt, die von DIAS INFRARED GmbH, 01217 Dresden, DE, unter der Handelsbezeichnung INFRALINE® vertrieben wird.

Diese Infrarot-Kamera INFRALINE® dient zur berührungsfreien, quantitativen und weitgehend entfernungsunabhängigen Aufnahme von Temperaturverteilungen an ortsfesten und bewegten Objekten. Sie wurde für den stationären Einsatz an Industrieumgebungen entwickelt und ist für Systemlösungen zur automatisierten Prozesskontrolle und -steuerung sowie der Messdatenverarbeitung an Maschinen und Anlagen einsetzbar. Die Kamera besteht aus einem Kamerakopf, der zum Betrieb notwendige Baugruppen enthält. Aufgrund der im allgemeinen abgesetzten Montage in der Nähe des zu überwachenden Prozesses oder der zu überwachenden Objekte besitzt die Kamera keine Bedienelemente. Zur Steuerung, Überwachung und Messwertübertragung ist eine Datenschnittstelle in die Kamera integriert. Die Programmierung und Messwertedatenerfassung kann in Verbindung mit einem PC erfolgen. Zur Darstellung und Auswertung von Messdaten kann zweckmäßigerweise die von MIKROSOFT INC. zur Verfügung gestellte, bekannte Visualisierungssoftware PYROSOFT® benutzt werden, die auf PCs mit MS-WINDOWS-Betriebssystem lauffähig ist. Anhand farblicher Kodierung und/oder ziffernmäßiger Angaben kann die gemessene Temperatur mit einer Genauigkeit von 1/10° Kelvin angezeigt werden.

Anhand der so erlangten Kenntnisse über die tatsächliche "echte" Temperaturverteilung an der erwärmten Oberfläche einer umzuformenden Platte können gezielt solche Infrarot-Flächenstrahler mit einer höheren elektrischen Leistungsaufnahme angesteuert werden, die solche Plattenstücksegmente beheizen, die bislang - beispielsweise wegen der Besonderheiten der dort befindlichen Bedruckung, Metallisierung und/oder sonstigen Beschichtung - noch nicht die vorgesehene Plattenoberflächentemperatur erreicht haben.

Es ist nicht erforderlich, dass der Verfahrensschritt "Messung und Auswertung der Temperaturverteilung an der Plattenoberfläche" während des gesamten Produktionsverfahrens zur Herstellung aller 3D-Formteile einer gegebenen Art durchgeführt wird. Häufig ist es ausreichend, wenn dieser Verfahrensschritt bei Einrichtung einer Produktion durchgeführt wird, und anschließend nach Erzeugung einer gegebenen Anzahl der 3D-Formteile wiederholt wird, um die gleichbleibende einheitliche Qualität dieser 3D-Formteile zu gewährleisten und zu sichern. Häufig ist es ausreichend, wenn dieser Verfahrensschritt nur bei der Herstellung von wenigstens 20% aller herzustellenden 3D-Formteile einer Art ausgeführt wird. Nachdem das umzuformende Schichtstoffstück innerhalb der Heizstation auf die gewünschte Oberflächentemperatur erwärmt worden ist, wird das warme Schichtstoffstück rasch aus der Heizstation in die Umformstation überführt, ohne dass eine merkliche Abkühlung erfolgt. Auch wenn auf dem Weg von der Heizstation zur Umform-station die Temperaturmess-Station passiert und dort mit Hilfe der Wärmebildkamera die Temperaturverteilung an der Unterseite abgetastet, sichtbar gemacht und/oder auf sonstige Weise dargestellt wird, wird das Schichtstoffstück nach Beendigung dieser Verweildauer sofort und vorzugsweise innerhalb einer Zeitspanne kleiner 5 sec, besonders bevorzugt innerhalb einer Zeitspanne kleiner 2 sec und ganz besonders bevorzugt innerhalb einer Zeitspanne kleiner 1 sec in die Umformstation überführt, wo zunächst die monodirektionale Umformung des warmen ebenen Schichtstoffstücks vorgenommen wird.

In der Umformstation erfolgt die erfindungsgemäß vorgesehene zweistufige Umformung des warmen ebenen Schichtstoffstücks zum 3D-Formteil bzw. dessen Ankaschierung an das 3D-Trägerteil. Hierzu kann im Wesentlichen eine Presse mit Formwerkzeug eingesetzt werden, wie in den Dokumenten DE 10 2010 021 892 B4, DE 10 2008 050 564 B4 und DE 41 13 568 C1 beschrieben. Mit dieser ausdrücklichen Bezugnahme soll der hier relevante Inhalt dieser Dokumente - soweit zum Verständnis und zur Ausbildung des erfindungsgemäß vorgesehenen Formwerkzeugs hilfreich - auch zum Bestandteil der vorliegenden Unterlagen gemacht werden.

### ZEICHNUNGEN, FIGURENBESCHREIBUNG, BEISPIELE

Nachstehend wird die vorliegende Erfindung mehr im Einzelnen anhand bevorzugter Ausführungsformen mit Bezugnahme auf die Zeichnungen erläutert; die letzteren zeigen:
- Fig. 1: innerhalb eines kartesischen Koordinatensystems in gegebenen Abmessungen ein ebenes Ausgangsmaterial und den nach einer monodirektionalen Umformung erhaltenen, monodirektional abgeformten Vorformling zur Erläuterung der Bezeichnung "monodirektionale Umformung";
- Fig. 2a: anhand eines Schrägbildes ein ebenes, umzuformendes Schichtstoffstück;
- Fig. 2b: anhand eines Schrägbildes eine ebene Anordnung aus einem Stück Transferfolie, an der ein Schichtstoffzuschnitt haftet, der mit einer Kleberschicht versehen ist;
- Fig. 3: anhand eines Schrägbildes eine rahmenförmige Palette;
- Fig. 4: anhand eines Schrägbildes einen Transportrahmen;
- Fig. 5: anhand eines Schrägbildes das Schichtstoffstück nach Fig. 2a auf einer rahmenförmigen Palette nach Fig. 3;
- Fig. 6: anhand eines Schrägbildes Schichtstoffstück und Palette nach Fig. 5 auf einem Transportrahmen nach Fig. 4;
- Fig. 7: anhand einer schematischen Darstellung die wesentlichen Komponenten einer Anlage zur Durchführung des erfindungsgemäßen Verfahrens, enthaltend eine Be- und Entladestation, eine Umformstation, eine Heizstation und wahlweise eine Temperaturmessstation;
- Fig. 8: eine schematische Seitenansicht eines erfindungsgemäßen Formwerkzeugs;
- Fig. 8a und 8b: Details aus Fig. 8 zur Erläuterung eines ausgewählten Dichtmittels;
- Fig. 9: ein Schrägbild des Formwerkzeugs nach Fig. 8;
- Fig. 10: anhand eines reduzierten Schrägbilds ein Blick in das Innere des Formwerkzeugs, wobei insbesondere die nicht ebene Dichtflächenkontur an der oberen Formwerkzeughälfte und die dazu kongruente nicht ebene Auflageflächenkontur am rahmenförmigen Aufbau an der unteren Formwerkzeughälfte herausgestellt ist;
- Fig. 11: eine Draufsicht von oben auf Palettenrahmen und Transportrahmen und die Auflagefläche des rahmenförmigen Aufbaus vor dem, eine Form tragenden Unterbau an der unteren Formwerkzeughälfte;
- Fig. 12a: einen isolierten, lediglich als Zwischenprodukt anfallenden, aus dem Formwerkzeug entnommenen, monodirektional abgeformten Vorformling;
- Fig. 12b: die schematische Darstellung eines Schnittes längs der Schnittlinie Xllb-Xllb aus Fig. 12a;
- Fig. 13a: anhand einer schematischen Seitenansicht ein nach Beispiel 1 erhältliches Fertigprodukt; und
- Fig. 13b: einen Querschnitt in Breitenrichtung durch das Fertigprodukt nach Fig. 13a.

In einem kartesischen Koordinatensystem mit den drei Raumrichtungen (X), (Y) und (Z) wird auf der X,Y-Ebene ein rechteckiges ebenes Schichtstoffstück (E) bereitgestellt, das längere Seiten (F) parallel zur X-Achse und kürzere Seiten (G) parallel zur Y-Achse hat. An diesem ebenen Schichtstoffstück (E) ist ein Gitter mit parallelen, gleiche Abstände zueinander aufweisenden Geraden (F1 bis Fn), die parallel zu den Seiten (F) ausgerichtet sind, sowie mit parallelen, gleiche Abstände zueinander aufweisenden Geraden (G1 bis Gn), die parallel zu den Seiten (G) ausgerichtet sind, gedanklich vorstellbar. Eine Einwirkung von zwei beabstandeten, festen, identischen, nicht ebenen Konturen, hier beispielsweise einer teilkreisförmigen Kontur an einem Kreis mit einem Radius r = 30 mm, auf zwei, parallel zur X-Achse ausgerichtete, beabstandete und zueinander gegenüberliegend angeordnete Randabschnitte des ebenen Schichtstoffstückes (E) einachsig senkrecht zur X,Y-Ebene, also in Z-Richtung, und nur in X-Richtung, also monodirektional, verursacht eine monodirektionale Umformung des ebenen Schichtstoffstückes (E) zum monodirektional abgeformten Vorformling (V), der nunmehr zusätzlich eine Erstreckung in Z-Richtung aufweist. Entsprechend der Hilfszeichnung hat bei einem Mittelpunktswinkel α von 120° die Sehne (s) eine Länge von 50 mm und der Kreisbogen (b) nach bekannter Formel b = (απr)/180 (vgl. KLEINE ENZYKLOPÄDIE - Mathematik, VEB BIBLIOGRAPHISCHES INSTITUT LEIPZIG, 1967, Seite 203) eine Länge von 63 mm, weshalb der monodirektional abgeformte Vorformling (V) nunmehr in X-Richtung eine um 13 mm geringere Länge aufweist, als das ursprünglich eingesetzte ebene Schichtstoffstück (E). Folglich müssen die zum Scheitelpunkt (S) mehr oder minder weit entfernten Teile des ursprünglichen, ebenen Schichtstoffstücks (E) in X-Richtung mehr oder minder weit auf diesen Scheitelpunkt (S) zu gewandert sein, mit entsprechender Verlagerung der Schichtstoffteilchen, weshalb diese umgelagerten Schichtstoff-Teile auf einer, das ursprüngliche, ebene Schichtstoffstück (E) haltenden Unterlage gleiten können müssen. Eine solche "monodirektionale Umformung" zeichnet sich dadurch aus, ist so zu verstehen, und bewirkt, dass am monodirektional abgeformten Vorformling (V) die ursprünglichen Geraden (F2 bis Fn) nunmehr zu gekrümmten Linien (H2 bis Hn) geworden sind, während die ursprünglichen Geraden (G1 bis Gn) weiterhin als Geraden (G1 bis Gn) mit ursprünglicher Länge erhalten geblieben sind; folglich bei der monodirektionalen Abformung des ebenen Schichtstoffstücks (E) in X-Richtung keine Umformung des ebenen Schichtstoffstücks (E) und Verlagerung von Schichtstoffteilchen in der dazu orthogenalen Y-Richtung stattgefunden hat.

Im Idealfall verursacht eine solche monodirektionale Umformung keine Zunahme der Fläche des ursprünglichen ebenen Schichtstoffstücks (E), erfolgt also verstreckungsfrei. Sofern im Rahmen der vorliegenden Erfindung die monodirektionale Umformung mit Hilfe von zwei beabstandeten, festen, weitgehend identischen Konturen vorgenommen wird, kann eine verstreckungsfreie oder eine "verstreckungsarme monodirektionale Umformung" erhalten werden, bei welcher eine Flächenzunahme am ursprünglichen ebenen Schichtstoffstück bis zu 4 %, vorzugsweise bis zu 2 % und besonders bevorzugt bis zu 1 % der ursprünglichen Fläche auftreten kann.

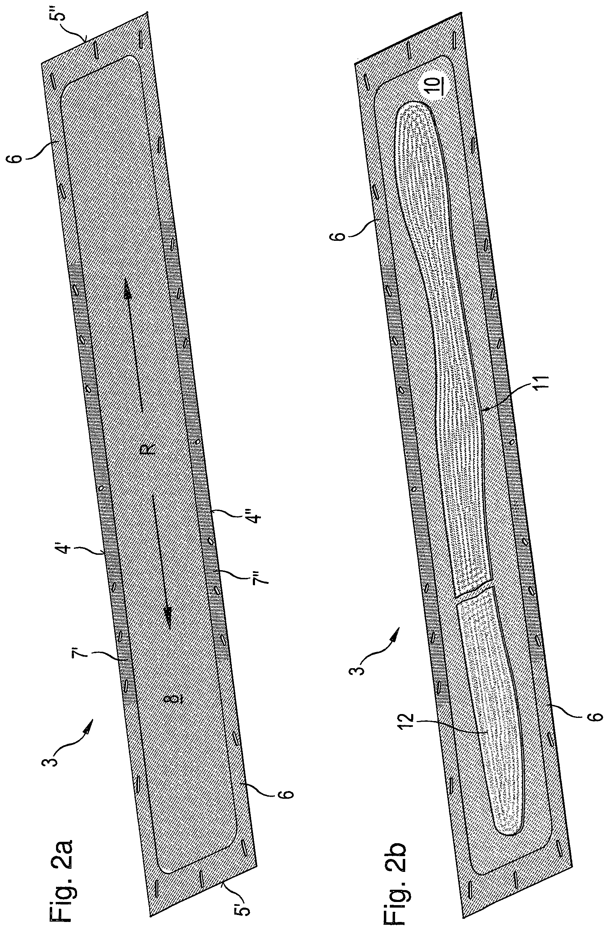

Ein ebenes Schichtstoffstück soll warmumgeformt werden. Vorzugsweise wird ein in Fig. 2a dargestelltes, rechteckiges Schichtstoffstück 3 bereitgestellt, das parallele beabstandete Längsseiten 4' und 4" sowie dazu orthogenale Querseiten 5' und 5" hat. Eine erste Schichtstoffrichtung R, in welcher das Schichtstoffstück 3 auf seiner Unterlage nicht eingespannt ist, sondern gleiten kann, ist typischerweise parallel zu diesen Längsseiten 4', 4" ausgerichtet. Das Schichtstoffstück 3 hat eine umlaufende Randzone 6, die an den Längsseiten 4' und 4" parallele, beabstandete, zueinander gegenüberliegend angeordnete Randabschnitte 7' und 7" enthält. Die Randzone 6 umgibt eine Formfläche 8, an welcher die Umformung stattfindet. Entsprechend dem nachfolgenden Beispiel 1 wird ein ebenes rechteckiges Schichtstoffstück 3 aus Polycarbonat umgeformt, das eine Länge von 1200 mm und eine Breite von 200 mm hat.

Im Falle der Kaschierung eines 3D-Trägerteils kann ein alternatives, in Fig. 2b dargestelltes Ausgangsmaterial bereitgestellt werden, das eine, mit einer Randzone 6 versehene Träger- oder Transferfolie 10 aufweist, an welcher ein, an das 3D-Trägerteil angepasster Schichtstoffzuschnitt 11 haftet, dessen von der Transferfolie 10 weg gerichtete Oberfläche mit einer Schicht 12 aus aktivierbarem Kleber bedeckt ist. Im Falle der Umformung und Kaschierung eines 3D-Trägerteils nimmt dieses alternative Ausgangsmaterial eine Anordnung im Formwerkzeug ein, in welcher die Kleberschicht 12 nach unten auf das zu kaschierende 3D-Trägerteil zu gerichtet ist. Für diesen Fall der Kaschierung eines 3D-Trägerteils soll die Angabe "ebenes Schichtstoffstück" auch einschließen eine ebene Anordnung aus einer Transferfolie 10, an der ein Schichtstoffzuschnitt 11 haftet, der mit einer Schicht 12 aus aktivierbarem Kleber bedeckt ist.

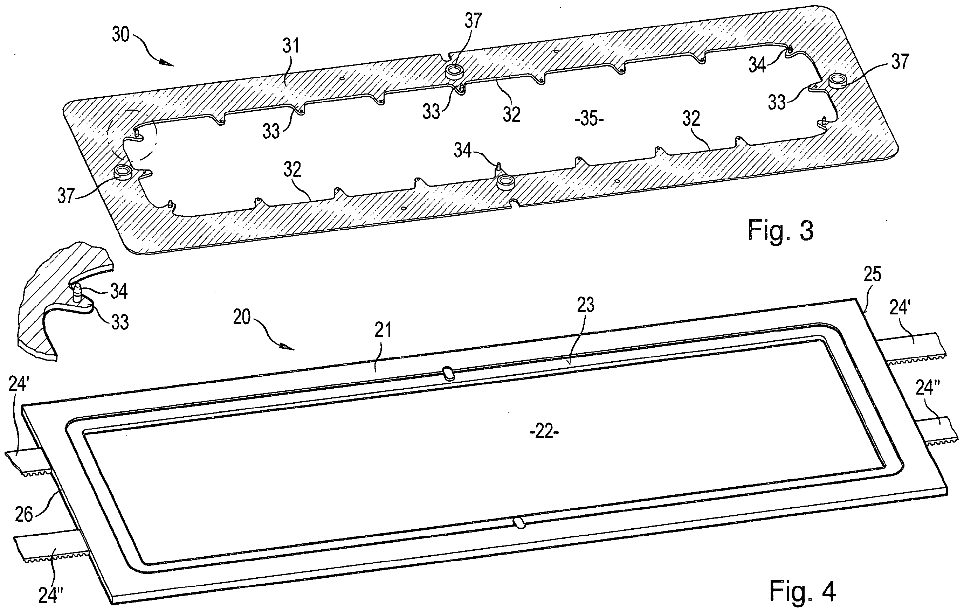

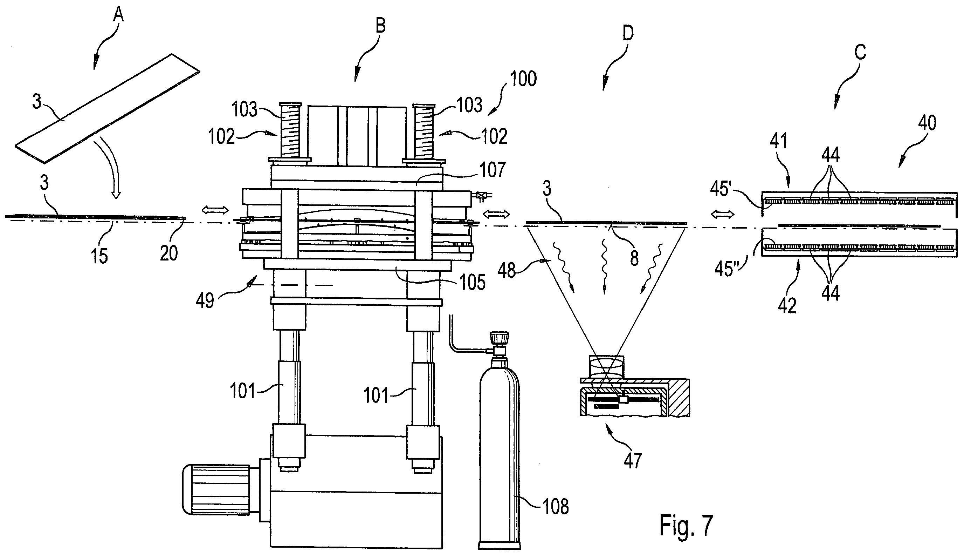

Die Warmumformung des Schichtstoffstücks 3 erfolgt in einer, mit Fig. 7 dargestellten Anlage, die je in an sich bekannter Form aufweist eine Be- und Entladestation A, eine Umformstation B, eine Heizstation C und wahlweise eine Temperaturmessstation D. Ein gerades Schienenpaar 15 führt durch die gesamte Anlage. Auf diesem Schienenpaar 15 gleitet ein, mit Fig. 4 dargestellter Transportrahmen 20, der einen geschlossenen, breiten, flachen, ebenen Rahmen 21 hat, der eine Aussparung 22 umgibt. Der Rahmen 21 ist stufenförmig ausgebildet, so das eine nach innen auf die Aussparung 22 zu gerichtete, umlaufende Auflage 23 geschaffen wird. Zwei "endlose" Zahnriemen 24' und 24" sind einerseits am vorderen Ende 25 und andererseits am hinteren Ende 26 des Rahmens 21 befestigt. Diese Zahnriemen 24' und 24" kämmen mit - nicht dargestellten - Zahnrädern, welche von, für hohe Beschleunigungen und hohe Vorschubgeschwindigkeiten ausgelegten Schrittmotoren angetrieben werden, um den Transportrahmen 20 längs der Schienen 15 durch die Anlage zu fahren; beispielsweise kann der Transportrahmen 20 mit einer Geschwindigkeit von bis zu 1400 mm/sec längs der Schienen 15 verstellt werden.

Das umzuformende Schichtstoffstück 3 wird in der Be- und Entladestation A auf einer, mit Fig. 3 dargestellten rahmenförmigen Palette 30 abgelegt, die ihrerseits auf der Auflage 23 am Transportrahmen 20 abgelegt werden kann. Die rahmenförmige Palette 30 hat einen geschlossenen, flachen, ebenen Rahmen 31, der eine Aussparung 35 umgibt. Am Innenumfang 32 des Rahmens 31 sind einstückig, in regelmäßigen Abständen, eine Anzahl nach Innen in Richtung der Aussparung 35 vorstehende Vorsprünge 33 ausgebildet. Nur auf diesen Vorsprüngen 33 wird die umlaufende Randzone 6 des Schichtstoffstücks 3 oder der Transferfolie 10 abgelegt. Dieses Ablegen erfolgt in der Be- und Entladestation A und kann händisch oder mit Hilfe eines Automaten durchgeführt werden. An ausgewählten Vorsprüngen 33 kann je ein vertikal abstehender Dorn 34 vorgesehen werden, der in Bohrungen oder Langlöcher in der Randzone 6 eingreift, um eine definierte Anordnung des Schichtstoffstücks 3 an der rahmenförmigen Palette 30 zu gewährleisten. Die Länge der Langlöcher erstreckt sich in der ersten Schichtstoffrichtung R, um bei einem teilweisen Abheben des Schichtstoffstücks 3 vom Rahmen 31 ein Gleiten der Randzone 6 auf diesem Rahmen 31 nicht zu behindern. Am Rahmen 31 können Passringe 37 angebracht sein, in deren Bohrung Dorne 53', 53", 53'" eintreten, welche vertikal von einer unteren Formwerkzeughälfte 50 abstehen, um eine passgenaue Anordnung der rahmenförmigen Palette 30 mit dem darauf abgelegten, umzuformenden Schichtstoffstück 3 bezüglich einer Form 55 oder eines 3D-Trägerteils zu gewährleisten, die/das an der unteren Formwerkzeughälfte 50 festgelegt ist.

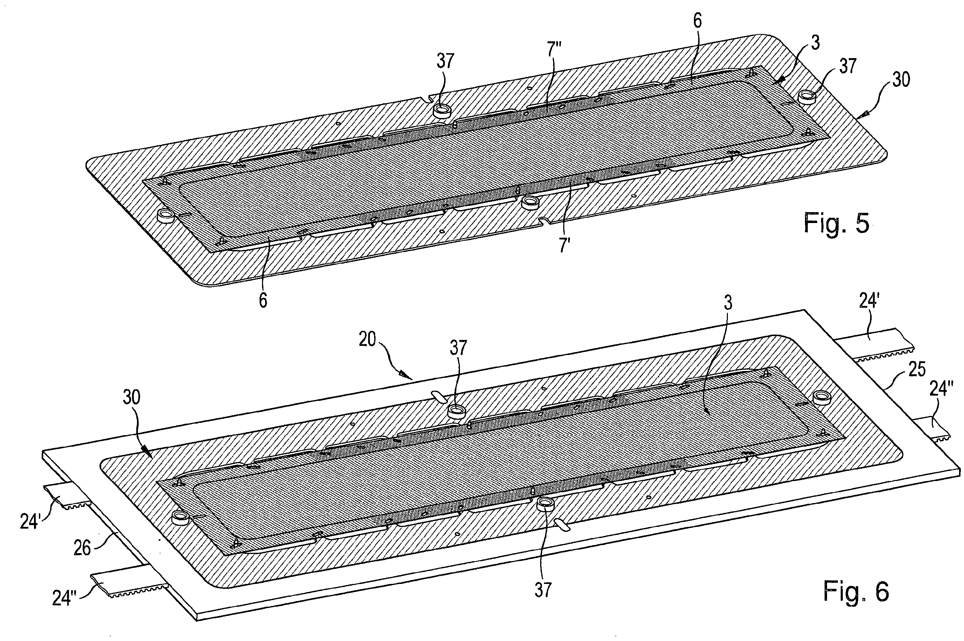

Die mit dem ebenen Schichtstoffstück 3 versehene rahmenförmige Palette 30 (vgl. Fig. 5) wird auf der umlaufenden Auflage 23 am Transportrahmen 20 abgelegt (vgl. Fig. 6), und dieser wird längs der Schienen 15 aus der Be- und Entladestation A durch die Umformstation B in die Heizstation C verfahren. In der Heizstation C befindet sich eine Heizeinrichtung 40, in der das ebene, aus einem thermoplastischen Kunststoff bestehende und Umgebungstemperatur aufweisende Schichtstoffstück 3 auf eine vorgegebene, an den jeweiligen Kunststoff angepasste Umformtemperatur erwärmt wird. Typischerweise wird Infrarot-Strahlungsheizung angewandt, und die Heizeinrichtung 40 hat ein oberes Heizfeld 41 sowie ein dazu beabstandetes unteres Heizfeld 42, zwischen welche der Transportrahmen 30 mit dem zu erwärmenden Schichtstoffstück 3 eingefahren wird. Beide Heizfelder 41 und 42 sind flächengleich ausgebildet, und in einem Abstand von etwa 250 mm zueinander sowie miteinander fluchtend angeordnet. Wie in Fig. 7 angedeutet, kann jede Heizfeldfläche größer als die Rahmenfläche des Transportrahmens 20 sein. Jedes Heizfeld 41 und 42 kann aus einer Anzahl Infrarot-Flächenstrahler 44 aufgebaut sein, die je Abmessungen von 60 x 60 mm haben und die je individuell ansteuerbar sind. Einem Infrarot-Flächenstrahler 45' am oberen Heizfeld 41 kann ein gegenüber liegend angeordneter Infrarot-Flächenstrahler 45" am unteren Heizfeld 42 zugeordnet sein.

Nachdem das Schichtstoffstück 3 die vorgegebene Umformtemperatur erreicht oder geringfügig überschritten hat, wird der Transportrahmen 20 rasch aus der Heizstation C zurück in die Umformstation B gefahren. Auf diesem Wege kann eine wahlweise vorgesehene Temperaturmessstation D passiert werden, in der sich eine Wärmebildkamera 47 befindet, welche die von der Unterseite der Formfläche 8 des warmen Schichtstoffstücks 3 abgestrahlte, hier schematisch angedeutete Temperaturstrahlung 48 erfasst und auswertet. Die so gewonnene Temperaturverteilung kann auf einem - nicht dargestellten - Bildschirm dargestellt werden, wobei jedem miteinander fluchtenden Infrarot-Flächenstrahler-Paar 45'/45" je ein Bild auf dem Bildschirm zugeordnet sein kann. Die tatsächlich an der Oberfläche der Schichtstoffstück-Unterseite herrschende Temperatur kann anhand einer Farbkodierung dargestellt und/oder ziffernmäßig angegeben werden.

In der Umformstation B befindet sich eine Presse 100 mit einem Formwerkzeug 49, an das ein Druckluftbehälter 108 angeschlossen ist, aus dem Druckluft bereitgestellt wird. Presse 100 und Formwerkzeug 49 können im Wesentlichen von der Art sein, wie auch in den Dokumenten DE 10 2008 050 564 B4 und DE 41 13 568 C1 beschrieben

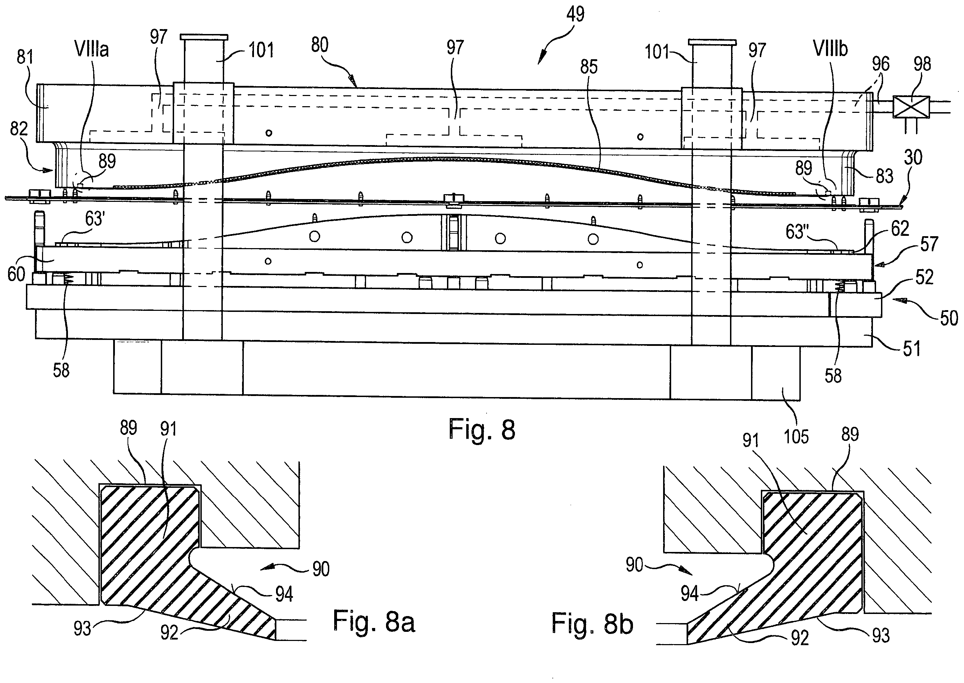

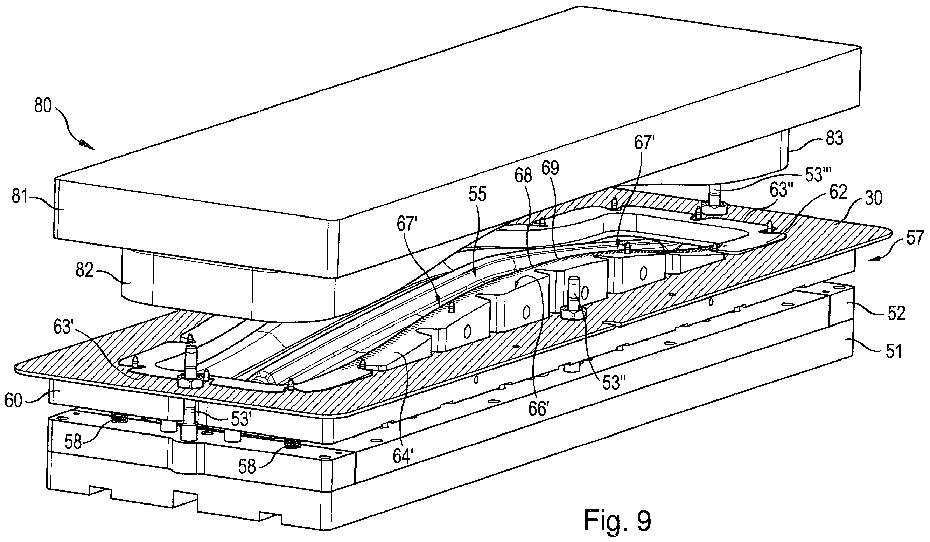

Die Figuren 8 (Seitenansicht), 9 (Schrägbild) und 10 (reduziertes Schrägbild) zeigen ein zur Durchführung der erfindungsgemäßen zweistufigen Umformung des warmen, ebenen Schichtstoffstücks 3 geeignetes Formwerkzeug 49 in dessen Freigabestellung. Wie im Einzelnen aus den Figuren 8 und 9 ersichtlich, besteht das Formwerkzeug 49 im Wesentlichen aus einer oberen Formwerkzeughälfte 80 und aus einer unteren Formwerkzeughälfte 50, die unterhalb der oberen Formwerkzeughälfte 80 angeordnet ist, sich auf einem unteren Formtisch 105 einer Presse 100 abstützt und an den vertikal ausgerichteten Säulen 101 dieser Presse 100 geführt ist. Zu dieser unteren Formwerkzeughälfte 50 gehört eine Tragplatte 51 und eine Bodenplatte 52 auf dem ein Unterbau 54 abgestützt ist, an dem die eigentliche Form 55 befestigt, ist, an deren Formkonturen 56', 56" und 56'" die Hochdruckumformung des monodirektional abgeformten Vorformlings durchgeführt wird. Alternativ kann an diesem Unterbau 54 das 3D-Trägerteil befestigt sein, an dessen 3D-Trägerteilkonturen der warme, monodirektional abgeformte Vorformling ankaschiert werden soll. Die Bodenplatte 52 kann vorzugsweise mit einer Heizeinrichtung ausgerüstet sein, die ihrerseits ein Zirkulationssystem für eine Heizflüssigkeit oder Heizdrähte und eine Regelungseinrichtung zur Temperaturkonstanthaltung aufweist. Ferner kann zwischen der Tragplatte 51 und der Bodenplatte 52 - eine nicht dargestellte - Lage aus Wärme-isolierendem Material angeordnet sein. Damit kann die Temperatur der unteren Formwerkzeughälfte 50 an die Umformtemperatur des warmen, umzuformenden Schichtstoffstücks 3 angepasst werden.

Ein solcher Unterbau 54 muss massiv ausgeführt und stabil befestigt sein, um den nicht unerheblichen mechanischen Druckbelastungen standzuhalten. Im Falle der Kaschierung eines 3D-Trägerteils muss zu Beginn jedes Arbeitstaktes ein neues 3D-Trägerteil an diesem Unterbau 54 befestigt und nach der Kaschierung davon wieder gelöst werden.

Hierzu kann ein faltbarer Unterbau 54 vorgesehen werden, der wenigstens einen - nicht dargestellten - Schieber hat, der ausfahrbar und einziehbar ausgebildet, angeordnet und betätigbar ist. Das Ausfahren des beweglichen Schiebers kann beispielsweise hydraulisch oder pneumatisch bewirkt werden, gegen eine Federkraft, welche den Schieber einzuziehen sucht. Der ausgefahrene Schieber hintergreift eine Halteleiste oder einen Hinterschnitt am aufgesetzten 3D-Trägerteil und sichert dessen Halt an dem Unterbau 54. Es wird eine einerseits sichere und stabile Befestigung und andererseits wieder leicht lösbare Befestigung des 3D-Trägerteils an dem Unterbau 54 erhalten. Nach Durchführung der Kaschierung und Erreichung ausreichender Klebefestigkeit wird der ausgefahrene Schieber wieder zurückgefahren bzw. eingezogen, und das kaschierte 3D-Trägerteil kann leicht von dem Unterbau 54 entfernt werden. Das Einsetzen des 3D-Trägerteils und die Entnahme des kaschierten 3D-Trägerteils kann von Hand oder mit Hilfe eines Automaten besorgt werden.

Der Unterbau 54 mit Form 55 oder mit 3D-Tägerteil ist von einem geschlossenen Spannrahmen umgeben, der auf der Bodenplatte 52 abgestützt ist. Es kann ein Spannrahmen eingesetzt werden, der direkt auf der Bodenplatte 52 abgestützt ist. Alternativ kann ein gefederter Spannrahmen, d.h. ein so genannter Federrahmen 57 eingesetzt werden, der mit Hilfe von Druckfedern 58 an der Bodenplatte 52 abgestützt ist. In den Figuren 8 und 9 ist ein solcher Federrahmen 57 dargestellt; die nachfolgenden Ausführungen zum Federrahmen 57 beziehen sich jedoch in gleicher Weise auch auf einen Spannrahmen, der direkt an der Bodenplatte 52 abgestützt ist.

An einem solchen Federrahmen 57 (oder Spannrahmen) befinden sich die beiden nicht ebenen Konturen, die auf die beiden parallelen, beabstandeten, zueinander gegenüberliegend angeordneten Randabschnitte 7', 7" des auf der rahmenförmigen Palette 30 aufliegenden warmen ebenen Schichtstoffstücks 3 einwirken, um dieses ebene Schichtstoffstück 3 zu einem monodirektional abgeformten Vorformling W umzuformen.

Bei einer bevorzugten, mit den Fig. 8 und 9 dargestellten Ausführungsform hat der Federrahmen 57 (oder der Spannrahmen) einen massiven, geschlossenen, ebenen Rahmen 60, dessen Außenabmessungen gleich oder geringfügig kleiner sind, als die Außenabmessungen der rahmenförmigen Palette 30, so dass dieser Rahmen 60 die rahmenförmige Palette 30 untergreifen und innerhalb des ortsfest gehaltenen Transportrahmens 20 anheben kann. Dieser Rahmen 60 hat eine umlaufende Randzone 61. Der Rahmen 60 ist an der unteren Formwerkzeughälfte 50 austauschbar vorgesehen; die Höhe des Rahmens 60 entspricht der Höhe von Unterbau 54 plus Form 55 oder der Höhe von Unterbau 54 plus 3D-Trägerteil, so dass der Rahmen 60 insoweit an die eingesetzte Form 55 oder an das zu kaschierende 3D-Trägerteil anpassbar ist. Wenn dieser Rahmen 60 seine obere Totstellung erreicht hat, dann liegt an dessen Randzone 61 die Unterseite der rahmenförmigen Palette 30 an, welche der Rahmen 60 bezüglich des ortsfest gehaltenen Transportrahmens 20 geringfügig angehoben hat. Im Falle des direkt an der Bodenplatte 52 abgestützten Spannrahmens kontaktiert in dieser Anordnung der oberste Punkt der Formkonturen 56', 56" oder 56'" oder der 3D Trägerteilkonturen die Unterseite des monodirektional abgeformten Vorformlings oder befindet sich geringfügig darunter. Im Falle des Federrahmens 57 kann in dieser Anordnung die Presse 100 die Bodenplatte 52 bezüglich des fixierten Rahmens 60 noch ein Stück weit anheben, wobei die Druckfedern 58 zusammengedrückt werden, und die Bodenplatte 52 mit dem Unterbau 54 noch weiter an den ortsfest eingespannten Vorformling heranrückt, so dass die Formkonturen 56', 56" oder 56'" oder die 3D-Trägerteilkonturen wenigstens teilweise durch die Unterseite des Vorformlings hindurchtauchen und an dem eingespannten Vorformling wenigstens eine gewisse orientierende "mechanische" Positivformung (im Sinne eines Stempels) vornehmen, die anschließend durch die Hochdruckumformung ergänzt und vervollständigt wird.

Die beiden, die monodirektionale Umformung verursachenden nicht ebenen Konturen befinden sich an diesem Rahmen 60 und können daran beispielsweise einstückig ausgebildet sein. Mehr bevorzugt ist ein austauschbarer, an das jeweils herzustellende Produkt angepasster, rahmenförmiger Aufbau 62 mit zwei ebenen und von einander entfernten Endabschnitten 63' und 63", mit zwei parallelen und beabstandeten Seitenwänden 64' und 64", die orthogenal zu diesen Endabschnitten 63' und 63" ausgerichtet sind, und mit einer ebenen Unterseite, die am Rahmen 60 angelegt und dort befestigt werden kann. Dieser rahmenförmige Aufbau 62 hat eine umlaufende, nach oben gerichtete Stirnfläche, die als Auflagefläche 65 für die Randzone 6 des warmumzuformenden Schichtstoffstücks 3 dient.

Jede Seitenwand 64' und 64" hat einen Stirnflächenabschnitt, der je als Auflageflächenabschnitt 66' und 66" für je einen Randabschnitt 7' und 7" des umzuformenden Schichtstoffstücks 3 dient. Jeder Auflageflächenabschnitt 66' und 66" ist im Sinne einer identischen oder weitgehend identischen nicht ebenen Kontur 67' und 67" gestaltet, beispielsweise von dem einen ebenen Endabschnitt 63' ausgehend, dann sanft bis zu einem Scheitelpunkt 69 ansteigend und dann wieder sanft zum anderen gegenüberliegenden ebenen Endabschnitt 63" absteigend. Diese beiden nicht ebenen Konturen 67' und 67" bilden die nicht ebene Auflageflächenkontur 68 an der unteren Formwerkzeughälfte 50. Vorzugsweise sind diese beiden Auflageflächenabschnitte 66' und 66" an den beiden Längsseiten des Aufbaus 62, bzw. an den beiden Längsseiten des Spannrahmens oder des Federrahmens 57 ausgebildet. Im vorliegenden Falle und wie in den Fig. 8 und 9 dargestellt, ist diese nicht ebene Auflageflächenkontur 68 gegenüber den restlichen ebenen Auflageflächenabschnitten 63' und 63" erhaben, bzw. konvex ausgebildet und hat einen mittig angeordneten Scheitelpunkt 69.

Bei der in den Fig. 8 und 9 dargestellten Ausführungsform kann dieser Scheitelpunkt 69 beispielsweise eine Höhe von etwa 80 mm bis etwa 120 mm über der ebenen Unterseite des rahmenförmigen Aufbaus 62 erreichen. Die Unterseite bzw. Bodenfläche des rahmenförmigen Aufbaus 62 hat Außenabmessungen, die in die Aussparung 35 an der rahmenförmigen Palette 30 passen. Der Außenumfang des rahmenförmigen Aufbaus 62 fluchtet mit dem Außenumfang einer - nachstehend zu beschreibenden - umlaufenden Kavernenwand 83 einer Druckglocke 82 an der oberen Formwerkzeughälfte 80.

Ferner hat das Formwerkzeugs 49 eine obere Formwerkzeughälfte 80, die eine Deckenplatte 81 hat, die in einer Presse 100 an einem oberen Formtisch 107 gehalten ist. An dieser Deckenplatte 81 ist eine Druckglocke 82 ausgebildet, die eine nach unten offene Kaverne bildet, die eine umlaufende Kavernenwand 83 hat, die von einer unteren Stirnfläche begrenzt ist, die eine umlaufende Dichtfläche 85 der oberen Formwerkzeughälfte 80 bildet. In dieser Dichtfläche 85 ist - in geringem Abstand zur Kaverne der Druckglocke 82 - eine umlaufende Nut 89 ausgespart, in die ein strangförmiges Dichtmittel einlegbar ist, das bei der Anlage an der Oberseite des monodirektional abgeformten Vorformlings die Kaverne der Druckglocke 82 druckdicht gegenüber dem Vorformling abdichtet.

Im Falle einer Formfläche kleiner 800 cm² am warmumzuformenden Schichtstoffstück 3 werden bei der Druckbeaufschlagung mit dem Hochdruckfluid am Gewölbe der Druckglocke 82 in der Regel keine größeren Verwölbungen auftreten, so dass als Dichtmittel ein üblicher O-Ring aus einer elastischen Rundschnur mit einem Durchmesser von etwa 3 mm bis 6 mm ausreichen wird. Zur Realisierung einer Formfläche von wenigstens 800 cm² müssen Presse und Druckglocke bei einem maximalen Druckmitteldruck von 300 bar wenigstens für eine Formschließkraft von 2,4 Mega-Newton ausgelegt sein. Unter diesen gewaltigen Kräften "arbeiten" Presse und Druckglocke und es können gewisse Verbiegungen und Verwölbungen auftreten, welche eine mehr als 100 cm lange Rundschnur aus ihrer Nut treiben würden. Um trotzdem eine druckdichte Abdichtung der Druckglocke zu gewährleisten, muss, unter diesen erschwerten Bedingungen, ein wirksameres Dichtmittel eingesetzt werden. Hierzu ist eine strangförmige Profildichtung 90 vorgesehen, die aus einem in die Nut 89 einsetzbaren Körper 91 besteht, von dem wenigstens eine erste, einstückig angeformte Dichtlippe 92 absteht, die von einer äußeren Dichtlippenflanke 93 und von einer inneren Dichtlippenflanke 94 begrenzt ist. Diese innere Dichtlippenflanke 94 ist bezüglich der Dichtflächenebene schräg ausgerichtet, so dass das unter einem Druck von 20 bar bis 300 bar anströmende und auf die innere Dichtlippenflanke 94 treffende fluide Druckmittel die Dichtlippe 92 elastisch verformen und gegen den Schichtstoff 3 pressen wird. Mit Hilfe einer solchen besonderen strangförmigen Profildichtung 90 lassen sich auch Formwerkzeuge mit einer vergleichsweise großen Formfläche von 2000 cm² und mehr, beispielsweise mit einer Formfläche von wenigstens 2.400 cm² oder mehr sicher abdichten, so dass in einem solchen Formwerkzeug auch relativ große Schichtstoffstücke umgeformt und an relative große 3D-Trägerteile ankaschiert werden können, die je beispielsweise auch eine Länge größer 100 cm haben können. Weitere Einzelheiten zu einer solchen strangförmigen Profildichtung können dem Dokument DE 10 2008 050 564 B4 entnommen werden. Mit dieser ausdrücklichen Bezugnahme soll die in DE 10 2008 050 564 B4 gegebene Beschreibung einer solchen strangförmigen Profildichtung auch zum Bestandteil der vorliegenden Unterlagen gemacht werden.

In die Kaverne der Druckglocke 82 mündet ein Kanal 96, über dessen Abzweigungen 97 ein fluides Druckmittel in die Kaverne der Druckglocke 82 eingeführt und daraus wieder entfernt werden kann. Lediglich schematisch angedeutete Steuerorgane 98 regeln die Druckmittelversorgung und die anschließende Entlüftung. Das über den Kanal 96 zugeführte fluide Druckmittel kann eine erhöhte Temperatur aufweisen, um einer Abkühlung des warmen Schichtstoffstückes 3 entgegen zu wirken.

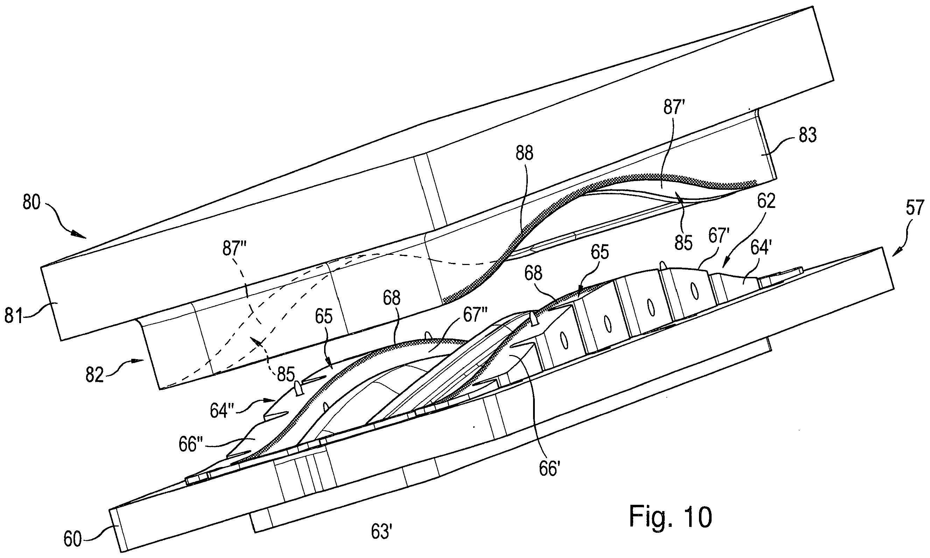

Die erfindungsgemäße Besonderheit besteht darin, dass die Druckglocke 82 zusätzlich zu ebenen Dichtflächenabschnitten an den beiden Endabschnitten der Druckglocke 82 an der Dichtfläche 85 an zwei parallelen, beabstandeten, zueinander gegenüberliegend angeordneten Druckglockenabschnitten 84' und 84" je einen, eine nicht ebene Kontur aufweisenden, Dichtflächenabschnitt hat, die im Sinne einer identischen oder weitgehend identischen nicht ebenen Kontur 87' und 87" gestaltet sind und beide zusammen eine nicht ebene Dichtflächenkontur 88 an der oberen Formwerkzeughälfte 80 bilden. Vorzugsweise sind diese beiden Dichtflächenabschnitte an den beiden Längsseiten der Druckglocke 82 ausgebildet. Im vorliegenden Falle, und wie in den Fig. 8, 9 und 10 dargestellt, ist diese Dichtflächenkontur 88 konkav ausgebildet und hat ein mittig angeordnetes Tal. Diese nicht ebene Dichtflächenkontur 88 an der oberen Formwerkzeughälfte 80 ist kongruent zur nicht ebenen Auflageflächenkontur 68 an der unteren Formwerkzeughälfte 50 ausgebildet, so dass zwischen diesen beiden Konturen 88 und 68 ein enger Spalt gebildet werden kann.

Bei einem, von der Presse 100 bewirkten Anheben der unteren Formwerkzeughälfte 50 gegenüber der oberen Formwerkzeughälfte 80 wird der innerhalb der Aussparung 35 der rahmenförmigen Palette 30 befindliche rahmenförmige Aufbau 62 am Spannrahmen oder Federrahmen 57 bezüglich der, ortsfest auf dem Transportrahmen 20 aufliegenden rahmenförmigen Palette 30 angehoben, wobei die Aufbauauflagefläche 65 einschließlich nicht ebener Auflageflächenkonturen 67' und 67" die parallelen, beabstandeten, zueinander gegenüberliegend angeordneten Randabschnitte 7' und 7" des Schichtstoffstückes 3 untergreifen und mit sich führen und schließlich nahe an die kongruente Dichtfläche 85 einschließlich der nicht ebenen Konturen 87' und 87" an der Druckglocke 82 heranführt, wobei das gesamte warme ebene Schichtstoffstück 3 zwischen diesen kongruenten, nicht ebenen Konturen 68 und 88 monodirektional zu einem monodirektional abgeformten Vorformling W umgeformt wird.

Infolge der Hubbewegung der unteren Formwerkzeughälfte 50 wird der gebildete Vorformling so lange angehoben, bis dessen Randzone 6 an dem Dichtmittel anliegt. Das Dichtmittel dichtet das Schichtstoffstück 3 gegenüber der Druckglocke 82 druckdicht ab, so dass das in die Kaverne der Druckglocke 82 einströmende Hochdruckfluid den Vorformling an die Formkonturen 56', 56", 56'" der Form 55 oder an die 3D-Trägerteilkonturen anlegen und anpressen wird.

Sofern mit dem Formwerkzeug 49 ein Schichtstoffstück 3 mit einer Formfläche 8 deutlich oder wesentlich größer als 800 cm² umgeformt werden soll, wird die untere Formwerkzeughälfte 50 so lange angehoben, bis in der Schließstellung des Formwerkzeugs 49 zwischen der Dichtfläche 85 einschließlich nicht ebener Dichtflächenkontur 88 an der oberen Formwerkzeughälfte 80 und der Auflagefläche 65 einschließlich nicht ebener Auflageflächenkontur 68 an der unteren Formwerkzeughälfte 50 ein enger Spalt gebildet wird, den die Dichtlippe 92 an der strangförmigen Profildichtung 90 überbrücken kann. Das in die Druckglocke 82 einströmende Druckfluid verformt die elastische Dichtlippe 92 an der in die Nut 89 eingelegten strangförmigen Profildichtung 90 und presst diese Dichtlippe 92 an die Oberseite des Vorformlings an, und dichtet damit die Kaverne der Druckglocke 82 druckdicht gegenüber dem Vorformling ab. Das weiterhin in die Druckglocke 82 einströmende Druckfluid presst den warmen Vorformling an die Formenkonturen 56', 56", 56'" der Form 55 an oder kaschiert diesen Vorformling an die 3D-Trägerteilkonturen an. Dieser Spalt hat typischerweise eine Weite von [Schichtdicke des umzuformenden Schichtstoffstückes 3 plus (100 µm bis 1200 µm)].

Das vorstehend beschriebene Formwerkzeug 49 ist in eine Presse 100 eingesetzt die mehr im Einzelnen in dem Dokument DE 10 2008 050 564 B4 beschrieben ist; um unnötige Wiederholungen zu vermeiden wird auf die dortigen Ausführungen verwiesen, die mit dieser ausdrücklichen Bezugnahme auch zum Bestandteil der vorliegenden Unterlagen gemacht werden sollen. Diese Presse 100 hat ein so genanntes Vier-Säulen-Gestell mit vier vertikalen, an den Ecken eines Quadrates oder Rechtecks angeordneten Säulen 101, an denen die obere Formwerkzeughälfte 80 und die untere Formwerkzeughälfte 50 geführt und verstellbar gehalten sind. Die geraden, sich durch die gesamte Anlage erstreckenden Schienen 15 sind innerhalb der Umformstation B zwischen je einem Säulenpaar aus zwei beabstandeten Säulen 101 hindurch geführt. Der innerhalb der Umformstation B an diesen Schienen 15 gehaltene Transportrahmen 20 mit dem umzuformenden, warmen, ebenen Schichtstoffstück 3 bildet eine ortsfeste Anordnung, gegenüber der die Komponenten der unteren Formwerkzeughälfte 50 bei deren Verstellung Relativbewegungen ausführen.

Am erfindungsgemäßen Formwerkzeug 49 ist auch die obere Formwerkzeughälfte 80 um einen deutlichen Hubweg anhebbar, um nach der Hochdruckumformung auch 3D-Formteile oder kaschierte 3D-Trägerteile mit je einer stark ausgeprägten Geometrie aus dem Zwischenraum zwischen der Dichtfläche 85 an der angehobenen oberen Formwerkzeughälfte 80 und dem ortsfest gehalten Transportrahmen 20 entnehmen zu können. Dieser Hubweg kann beispielsweise eine Länge von 100 mm und mehr haben. Die Länge der Außengewindeabschnitte 103 an den oberen Abschnitten 102 der vier Säulen 101 ist je entsprechend angepasst.

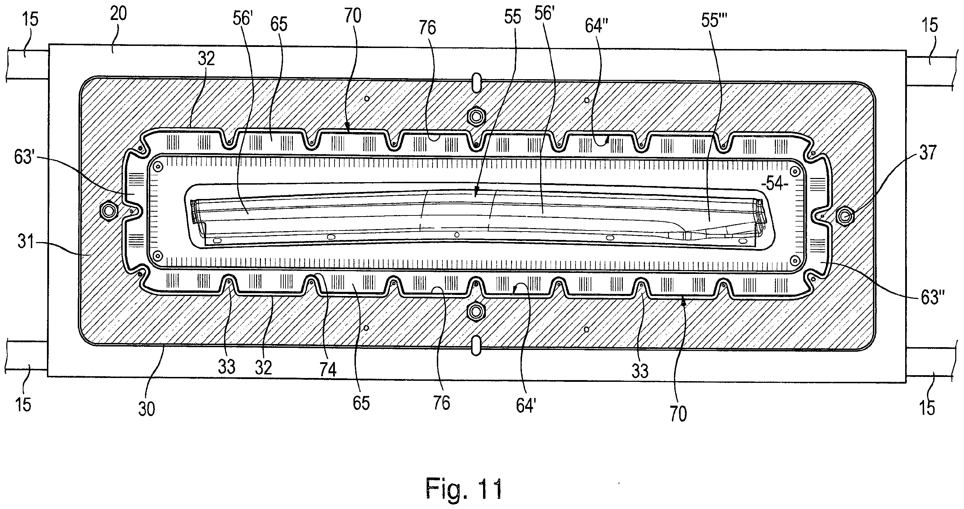

Die Fig. 11 zeigt schematisch einen Blick von oben auf einen an den beiden Schienen 15 gehaltenen Transportrahmen 20, auf dem sich eine rahmenförmige Palette 30 - ohne Schichtstoffstück 3 - befindet, die beide in der Umformstation B über der unteren Formwerkzeughälfte 50 angeordnet sind. Ersichtlich hat die ebene rahmenförmige Palette 30 einen Rahmen 31, der an seinem Innenumfang 32 mit einer Anzahl beabstandeter, nach Innen vorspringender Vorsprünge 33 versehen ist. Ein auf einer solchen rahmenförmigen Palette 30 abzulegendes ebenes Schichtstoffstück 3 wird mit seiner Randzone 6 nur auf diesen Vorsprüngen 33 abgelegt.

Innerhalb und unterhalb der Aussparung 35 am Rahmen 31 der Palette 30 ist die Auflagefläche 65 eines rahmenförmigen Aufbaus 62 am Rahmen 60 des Federrahmens 57 erkennbar. Dieser Aufbau 62 hat zueinander gegenüberliegend angeordnete Seitenwände 64' und 64" mit je einer strukturierten Außenfläche 70 und mit je mit einer Stirnfläche, welche eine Auflagefläche 65 bildet, an der sich einspringende Aussparungen 74 und nach Außen vorspringenden Tafeln 76 an dieser strukturierten Außenfläche 70 befinden. Der resultierende Aufbauaußenumfang ist so an den Innenumfang 32 am Rahmen 31 der rahmenförmigen Palette 30 angepasst, dass
- dieser Aufbau 62 in engem Abstand zum Innenumfang 32 des Palettenrahmens 31 bezüglich der ortsfest gehaltenen Palette 30 verschieblich ist;
- die Vorsprünge 33 am Innenumfang 33 des Palettenrahmens 30 in die Aussparungen 74 an der Außenfläche 70 der Seitenwände 64' und 64" des rahmenförmigen Aufbaus 62 eingreifen;
- die vorspringenden Tafeln 76 an der Außenfläche 70 der Seitenwände 64' und 64" des rahmenförmigen Aufbaus 62 in die Zwischenräume zwischen je zwei Vorsprüngen 33 am Innenumfang 32 des Palettenrahmens 31 eingreifen; und
- beim Anheben des Federrahmens 57 bezüglich der ortsfest gehaltenen Palette 30 diese vorspringenden Tafeln 76 an der Außenfläche 70 der Seitenwände 64' und 64" des rahmenförmigen Aufbaus 62 die Randzone 6 des auf dem Palettenrahmen 31 aufliegenden Schichtstoffstückes 3 untergreifen, mit sich führen, und so das Schichtstoffstück 3 auf der Auflagefläche 65 am rahmenförmigen Aufbau 62 abgelegt wird; und
- bei einem weiteren Anheben des Federrahmens 57 das Schichtstoffstück 3 zwischen der Auflageflächenkontur 68 und der dazu kongruenten Dichtflächenkontur 88 monodirektional zu einem monodirektional abgeformten Vorformling W umgeformt wird.

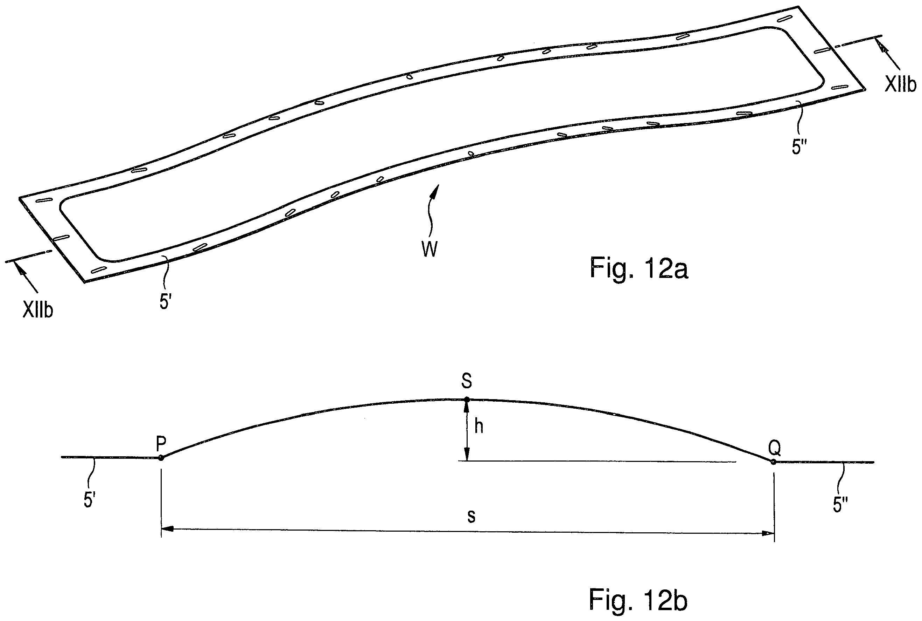

Ein solcher, im Verlauf des erfindungsgemäßen Verfahrens nach Beispiel 1 lediglich als nicht isoliertes Zwischenprodukt gebildeter Vorformling W ist mit Fig. 12a dargestellt (weil ein solcher Vorformling innerhalb der Maschinenzeichnungen nicht anschaulich darstellbar ist). Dieser Vorformling W hat, angrenzend an zwei ebene Endabschnitte 5' und 5" einen leicht gewölbten Abschnitt, der am Punkt P beginnt, am Punkt Q endet und mittig einen Scheitelpunkt S hat, der eine Scheitelhöhe "h" über einer, die beiden Punkte P und Q miteinander verbindenden Sehne "s" erreicht. Am Vorformling W wird bei einer Länge der Sehne "s" von etwa 700 mm eine Scheitelhöhe "h" von 73,5 mm erhalten. Das ergibt ein Wölbungsverhältnis = (h x 100%) / s von 10,5 %. Für ein verstreckungsfrei umgeformtes Folienteil aus thermoplastischem Kunststoff ist das ein bemerkenswertes Ergebnis. Ersichtlich können erfindungsgemäß ohne weiteres auch verstreckungsfrei umgeformte, gewölbte Folienteile mit einem noch wesentlich größeren Wölbungsverhälnis erhalten werden.

### Beispiel 1:

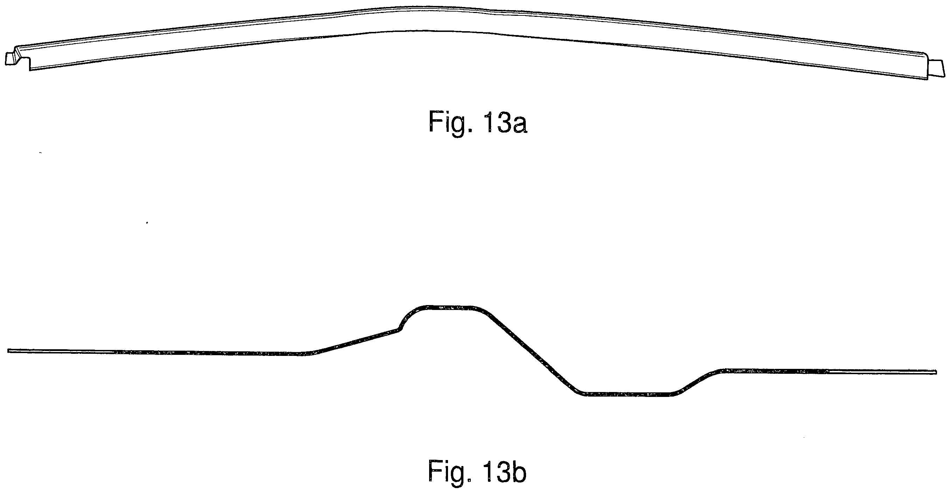

Als finales Endprodukt soll eine metallisch glänzende Zierleiste für das Armaturenbrett eines in Entwicklung befindlichen SUV (sport utility vehicle) eines deutschen Premium-Kfz-Herstellers bereitgestellt werden. Diese Zierleiste hat Abmessungen von 1030 mm x 85 mm und weist je eine dreidimensionale Gestalt bzw. Geometrie sowohl in Längsrichtung (Längskontur) wie in Breitenrichtung (Breitenkontur) auf. Die Längskontur folgt einer leichten konvexen Wölbung mit einem mittigen Scheitelpunkt, der eine Höhe von 73,5 mm über der Ebene der beiden Endabschnitte erreicht; eine Seitenansicht dieser Längskontur ist mit Fig. 13a dargestellt. Die Breitenkontur ist mehrfach gewellt, mit einem maximalen Abstand 22,9 mm zwischen Wellental und Wellenberg; diese Breitenkontur ist Fig. 13b maßstabsgerecht entsprechend einem Schnitt in Breitenrichtung durch ein erfindungsgemäß hergestelltes 3D-Folienteil dargestellt.

Als Ausgangsmaterial dient hier zu Versuchszwecken eine, mit einem schwarzen Decklack beschichtete PC-Folie mit einer Schichtdicke von 550 µm. Als alternatives Ausgangsmaterial ist mit gutem Erfolg auch eine hochtransparente OPTO 4D-Folie von Isosport Verbundteile GmbH, 7000 Eisenstadt, AT, eingesetzt worden.

Aus der PC-Folie ist ein ebenes rechteckiges Folienstück mit einer Länge von 1270 mm und mit einer Breite von 260 mm zurechtgeschnitten worden. Dieses Folienstück hat - innerhalb seiner Randzone - eine Formfläche von 1200 mm x 200 mm. Die Umformung erfolgt in einer, von NIEBLING GMBH, 82377, Penzberg, DE entwickelten und gebauten Anlage, die entsprechend Fig. 7 aufgebaut und bestückt ist. Das Formwerkzeug ist im Wesentlichen entsprechend den Fig. 8, 9, 10a und 10b ausgebildet und für eine Formfläche von 1200 mm x 200 mm ausgelegt.

Die Heizstation hat zwei flächengleiche, mit Infrarot-Flächenstrahlern bestückte Heizschirme, die in einem Abstand von 250 mm zueinander angeordnete sind. Jede Heizschirmfläche übersteigt die Folienstückfläche. Beide Heizschirme werden bei einer Temperatur von 300 °C gehalten. Das, Umgebungstemperatur aufweisende Folienstück wird - auf dem Palettenrahmen aufliegend und dieser auf dem Transportrahmen aufliegend - mittig zwischen diesen beiden Heizschirmen angeordnet und innerhalb von etwa 10 Sekunden auf eine Oberflächentemperatur von 158 °C erwärmt.
Nach Erreichen dieser Umformtemperatur wird das warme Folienstück innerhalb von 2 Sekunden in die Umformstation zurückgefahren und dort innerhalb des, seine Freigabestellung einehmenden Formwerkzeugs angeordnet. Die untere Formwerkzeughälte wird angehoben und erreicht in etwa 1 Sekunde ihre Schließstellung, wobei der untere Formtisch den Federrahmen und den darauf befindlichen rahmenförmigen Aufbau anhebt, wobei die beiden nicht ebenen Auflageflächenkonturen an dessen parallelen, beabstandeten und zueinander gegenüberliegend angeordneten Seitenwänden zwei parallele, beabstandete und zueinander gegenüberliegend angeordnete Randabschnitte am warmen Folienstück untergreifen, anheben und diese nahe an zwei kongruent geformte Dichtflächenkonturen an der Druckglocke in der oberen Formwerkzeughälfte heranführen, wobei das gesamte warme Folienstück zum monodirektional abgeformten Vorformling umgeformt wird. Die Gestalt dieses Vorformlings ist weitgehend an die, mit Fig. 13a dargestellte Längskontur der angestrebten Zierleiste angenähert.

In die Drucklocke wird, auf eine Temperatur von etwa 90 °C bis 100 °C erwärmte, Druckluft unter einem Druckluftdruck von 90 bar eingeführt. Dieser Druckluftdruck wird etwa 3 Sekunden lang aufrechterhalten. Anschließend wird innerhalb einer Zeitspanne von etwa 4 bis 8 Sekunden entlüftet. Daraufhin wird die obere Formwerkzeughälfte innerhalb einer weiteren Zeitspanne von 15 bis 20 Sekunden um etwa 80 mm angehoben. Mit einem Absenken der unteren Formwerkzeughälfte wird auch der Palettenrahmen mit dem darauf liegenden 3D-Formteil auf den an den Schienen ortsfest gehaltenen Transportrahmen abgesenkt, und dieser wird in die Be- und Entladestation gefahren. Dort wird das gebildete 3D-Formteil händisch entnommen und der Weiterverarbeitung zugeführt.

Im Verlauf dieser Weiterverarbeitung wird das erfindungsgemäß erzeugte 3D-Formteil in eine Spritzgussform eingelegt und mit weiterem schmelzflüssigem Kunststoff hinterspritzt, hier vorzugsweise mit PC/ABS-Material.

Würde man versuchen, das gleiche 3D-Formteil nach herkömmlichem HPF-Verfahren einstufig aus dem ebenen Schichtstoff direkt zum 3D-Formteil umzuformen, so müsste mindestens ein rechteckiges, ebenes Folienstück mit einer Länge von 1500 mm und einer Breite von 500 mm eingesetzt werden, um die für Dehnung und Verstreckung des Folienmaterials erforderlichen Zugflächen bereitzustellen. Am 3D-Formteil würden mehr innere Spannungen und Schichtdickenunregelmäßigkeiten auftreten.

### Beispiel 2:

Es soll eine, im Wesentlichen rechteckige Heckscheibe für einen Mittelklasse-PKW bereitgestellt werden. Die quer zur Fahrzeug-Fahrtrichtung ausgerichtete Scheibenlänge ist größer als die Scheibenbreite. Die Scheibenbreite ist begrenzt von zwei geraden, leicht schräg ausgestellt angeordneten Breitseitenkanten, so dass eine obere Scheibenlänge (benachbart zum Fahrzeugdach) 1080 mm beträgt, und eine untere Scheibenlänge zwischen den unteren Breitseitenkantenenden 1200 mm beträgt. Die obere Längsseitenkante ist bezüglich einer, die beiden oberen Breitseitenkantenenden miteinander verbindenden Sehne leicht konkav abgesenkt konturiert (mit einem Abstand von 40 mm am mittigen Tal zur Sehne). Die untere Längsseitenkante ist bezüglich einer, die beiden unteren Breitseitenkantenenden miteinander verbindenden Sehne stark konvex abgerundet konturiert (mit einem Abstand von 300 mm des mittigen Scheitels zur Sehne). Die Scheibenbreite zwischen mittigem Tal an der oberen Längsseitenkante und dem Scheitel an der unteren Längsseitenkante beträgt 830 mm. Die Heckscheibe hat eine Wölbung, wobei die Längskontur stärker gewölbt konturiert ausgebildet ist, als die Breitenkontur.

Eine solche Heckscheibe wird aus einer zweilagigen coextrudierten Platte hergestellt, die besteht aus einer 3 mm starken PC-Lage und einer 2 mm starken PMMA-Lage. Zur Herstellung wird auf eine heiße, frisch extrudierte PC-Lage eine PMMA-Lage aufextrudiert, und beide Lagen werden durch einen Kalanderwalzenspalt geführt. Aus der abgekühlten Bahn wird eine ebene Platte mit Abmessungen
von 900 mm x 1300 mm zurechtgeschnitten. An dieser Platte bildet die PMMA-Lage später die Außenschicht der Heckscheibe. An der Heckscheibe ist die PC-Lage dem Innenraum des Fahrzeugs zugewandt. An der ebenen Platte wird auf der PC-Lage mit Hilfe von Siebdruck ein an die Umfangskontur der Heckscheibe angepasstes Band aus schwarzer Farbe aufgedruckt; angrenzend an die obere Längsseitenkante hat dieses Band eine Breite von 100 mm; an den restlichen Kanten ist eine Bandbreite von 70 mm vorgesehen. Am Innenrand des Bandes nimmt die Anzahl und Dichte der mit Rasterdruck aufgebrachten schwarzen Punkte zunehmend ab, um einen gleitenden Übergang zur Aufdruck-freien Innenfläche der Heckscheibe zu schaffen. Auf dieser Innenfläche werden Linien aus Metallpartikel-haltiger Paste aufgedruckt, welche Leiterbahnen für Heizdrähte liefern. Anschließend wird sowohl auf der PC-Lage wie auf der PMMA-Lage je eine UV-härtbare Hardcoat-Beschichtung aufgetragen. Hierzu kann ein flüssiges Präparat aufgesprüht werden, das von
Nanogate Glazing Systems B.V., NL-5667 KZ Geldrup, The Netherlands, unter der Handelsbezeichnung SICRALAN® Hardcoat-Beschichtung (SICRALAN® ist eine eingetragene Marke) vertrieben wird.

An der so vorbereiteten ebenen bzw. planen Platte wird die erfindungsgemäße zweistufige Umformung vorgenommen. Diese Platte hat - innerhalb ihrer Randzone - eine Formfläche von 1250 mm x 850 mm. Die zweistufige Umformung erfolgt in einer, von NIEBLING GMBH, 82377, Penzberg, DE entwickelten und gebauten Anlage, die entsprechend Fig. 7 aufgebaut und bestückt ist. Das Formwerkzeug ist im Wesentlichen entsprechend den Fig. 8 und 9 ausgebildet und für eine Formfläche von 1250 mm x 850 mm ausgelegt.

Die Heizstation hat zwei flächengleiche, mit Infrarot-Flächenstrahlern bestückte Heizschirme, die in einem Abstand von 250 mm zueinander angeordnete sind. Jede Heizschirmfläche übersteigt die Plattenfläche. Beide Heizschirme werden bei einer Temperatur von 360 °C gehalten. Die, Umgebungstemperatur aufweisende Platte wird - auf dem Palettenrahmen aufliegend und dieser auf dem Transportrahmen aufliegend - mittig zwischen diesen beiden Heizschirmen angeordnet und innerhalb von etwa 180 Sekunden auf eine Oberflächentemperatur von 160 °C erwärmt.
Nach Erreichen dieser Umformtemperatur wird die warme Platte innerhalb von 2 Sekunden in die Umformstation zurückgefahren und dort innerhalb des, seine Freigabestellung einehmenden Formwerkzeugs angeordnet. Die untere Formwerkzeughälte wird angehoben und erreicht in etwa 1 Sekunde ihre Schließstellung, wobei der untere Formtisch den Federrahmen und den darauf befindlichen rahmenförmigen Aufbau anhebt, wobei die beiden nicht ebenen Auflageflächenkonturen an dessen parallelen, beabstandeten und zueinander gegenüberliegend angeordneten Seitenwänden zwei parallele, beabstandete und zueinander gegenüberliegend angeordnete Randabschnitte an den Längsseiten der warmen Platte untergreifen, anheben und diese nahe an zwei kongruent geformte Dichtflächenkonturen an der Druckglocke in der oberen Formwerkzeughälfte heranführen, wobei die gesamte warme Platte innerhalb eine Zeitspanne von 2 bis 3 Sekunden zum monodirektional abgeformten Vorformling umgeformt wird. Die Gestalt dieses Vorformlings ist weitgehend an die Längskontur der herzustellenden Heckscheibe angenähert und weist am konvexen Scheitel eine Scheitelhöhe von etwa 120 mm gegenüber den beabstandeten ebenen Plattenendabschnitten auf.

In die Drucklocke wird, auf eine Temperatur von etwa 90 °C bis 100 °C erwärmte, Druckluft unter einem Druckluftdruck von 90 bar eingeführt. Dieser Druckluftdruck wird etwa 5 Sekunden lang aufrechterhalten. Anschließend wird innerhalb einer Zeitspanne von etwa 4 bis 8 Sekunden entlüftet. Daraufhin wird die obere Formwerkzeughälfte innerhalb einer weiteren Zeitspanne von 30 bis 50 Sekunden um etwa 150 mm angehoben. Mit einem Absenken der unteren Formwerkzeughälfte wird auch der Palettenrahmen mit dem darauf liegenden 3D-Formteil auf den an den Schienen ortsfest gehaltenen Transportrahmen abgesenkt, und dieser wird in die Be- und Entladestation gefahren. Beim Herausfahren aus dem geöffneten Formwerkzeug weist der gebildete Heckscheibenrohling etwa eine Temperatur von 60 °C auf. In der Be- und Entladestation wird der gebildete Heckscheibenrohling händisch entnommen und der Weiterverarbeitung zugeführt.

Im Verlauf dieser Weiterverarbeitung wird am abgekühlten Heckscheibenrohling eine UV-Härtung des Coatings auf der Oberseite (Heckscheiben-Außenseite) sowie eine UV-Härtung des Coatings auf der Unterseite (Heckscheiben-Innenseite) durchgeführt. Nach diesen UV-Härtungsbehandlungen wird der Rohling mit Hilfe einer 3D-Fräsmaschine auf die Endmaße und die Umfangskontur der Heckscheibe zurechtgeschnitten. Die gebildeten Kanten werden entgratet und besäumt. Ferner wird ein elektrischer Anschluss zum Kontaktieren der Heizdrähte angebracht.

## Patentansprüche

1. Verfahren zur Warmumformung eines ebenen, aus thermoplastischem Kunststoff bestehenden Schichtstoffstücks zu einem 3D-Formteil oder zur Kaschierung eines 3D-Trägerteils,
wobei das ebene Schichtstoffstück (3) mit seiner Randzone (6) auf dem Rahmen (31) einer rahmenförmigen Palette (30) abgelegt und auf eine vorgegebene Temperatur erwärmt wird, und
die innerhalb dieser Randzone (6) befindliche Formfläche (8) des warmen Schichtstoffstücks (3) mit einem fluiden Druckmittel, insbesondere Druckluft, unter einem Druckmitteldruck von 20 bar bis 300 bar beaufschlagt und innerhalb einer Zeitspanne kleiner 5 Sekunden isostatisch zum 3D-Formteil umgeformt wird oder an das 3D-Trägerteil ankaschiert wird,
was hier kurz als isostatische Hochdruckumformung bezeichnet wird,
**dadurch gekennzeichnet, dass**
das ebene Schichtstoffstück (3) mit seiner Randzone (6) so auf diesem Rahmen (31) angeordnet wird, dass Teile dieser Randzone (6) des warmen ebenen Schichtstoffstücks (3) auf diesem Rahmen (31) in einer ersten Schichtstoffrichtung (R) gleiten können; und
zunächst zwei feste, identische oder weitgehend identische, nicht ebene Konturen (67' und 67"), die sich an einem Federrahmen (57) oder an einem Spannrahmen oder an der Auflagefläche (65) von zwei parallelen, beabstandeten, und zueinander gegenüberliegend angeordneten Seitenwänden (64' und 64") eines rahmenförmigen Aufbaus (62) befinden, der am Spannrahmen oder am Federrahmen (57) abgestützt und befestigt ist,
auf zwei parallele, beabstandete und zueinander gegenüberliegend angeordnete Schichtstoffstück-Randabschnitte (7' und 7") einachsig senkrecht zur Schichtstoffebene einwirken und das gesamte warme ebene Schichtstoffstück (3) nur in dieser ersten Schichtstoffrichtung (R), also monodirektional, zu einem warmen, monodirektional abgeformten Vorformling (W) umformen; und
anschließend an diesem warmen, monodirektional abgeformten Vorformling (W) die isostatische Hochdruckumformung durchgeführt wird.

2. Verfahren nach Anspruch 1, **dadurch gekennzeichnet, dass** ein rechteckiges ebenes Schichtstoffstück (E) bereitgestellt wird, das in einem kartesischen Koordinatensystem längere Seiten (F) parallel zur X-Achse und kürzere Seiten (G) parallel zur Y-Achse hat;
an diesem ebenen Schichtstoffstück (E) ein Gitter mit parallelen, gleiche Abstände zueinander aufweisenden Geraden (F1 bis Fn), die parallel zu den Seiten (F) ausgerichtet sind, sowie mit parallelen, gleiche Abstände zueinander aufweisenden Geraden (G1 bis Gn), die parallel zu den Seiten (G) ausgerichtet sind, gedanklich vorstellbar ist;
eine Einwirkung von zwei beabstandeten, festen, identischen, nicht ebenen Konturen, hier beispielsweise von je einer teilkreisförmigen Kontur an einem Kreis mit einem Radius r = 30 mm, einachsig senkrecht zur X,Y-Ebene, also in Z-Richtung, und nur in X-Richtung, also monodirektional,
eine Umformung des ebenen Schichtstoffstückes (E) zu einem monodirektional abgeformten Vorformling (V) bewirkt, der nunmehr eine zusätzliche Erstreckung in Z-Richtung aufweist, wobei aus der ursprünglich 50 mm langen Sehne (s) nunmehr ein 63 mm langer Kreisbogen (k) geworden ist, weshalb der monodirektional abgeformte Vorformling (V) nunmehr in X-Richtung eine um 13 mm geringere Länge aufweist, als das ursprünglich eingesetzte ebene Schichtstoffstück (E), weshalb Teile dieses ursprünglich ebenen Schichtstoffstücks auf einer, dieses Schichtstoffstück haltenden Unterlage gleiten können müssen; wobei sich eine solche "monodirektionale Umformung" dadurch auszeichnet, und so zu verstehen ist, dass am monodirektional abgeformten Vorformling (V) die ursprünglichen Geraden (F2 bis Fn) nunmehr zu gekrümmten Linien (H2 bis Hn) geworden sind, während die ursprünglichen Geraden (G1 bis Gn) weiterhin als Geraden (G1 bis Gn) mit ursprünglicher Länge erhalten geblieben sind;
folglich bei der monodirektionalen Umformung des ebenen Schichtstoffstücks (E) in X-Richtung keine Umformung des ebenen Schichtstoffstücks (E) und Verlagerung von Schichtstoffteilchen in der dazu orthogenalen Y-Richtung stattgefunden hat.

3. Verfahren nach Anspruch 1 oder 2,
**dadurch gekennzeichnet, dass**
am warmen ebenen Schichtstoffstück (3, E) eine verstreckungsfreie oder verstreckungsarme, monodirektionale Umformung in der ersten Schichtstoffrichtung (R, X-Richtung) vorgenommen wird.

4. Verfahren nach einem der Ansprüche 1 bis 3,
**dadurch gekennzeichnet, dass**
sich die zwei festen, identischen oder weitgehend identischen nicht ebenen Konturen (67' und 67") an der Auflagefläche (65) von zwei parallelen, beabstande ten und zueinander gegenüberliegend angeordneten Rahmenabschnitten eines Spannrahmens oder Federrahmens (57) befinden, oder an der Auflagefläche (65) von zwei parallelen, beabstandeten, und zueinander gegenüberliegend angeordneten Seitenwänden (64' und 64") eines rahmenförmigen Aufbaus (62) befinden, der am Spannrahmen oder am Federrahmen (57) abgestützt und befestigt ist; und dieser Spannrahmen oder dieser Federrahmen (57) bezüglich der rahmenförmigen Palette (30) angehoben wird, auf der das warme ebene Schichtstoffstück (3) aufliegt.

5. Verfahren nach einem der Ansprüche 1 bis 4,
**dadurch gekennzeichnet, dass**
die zwei festen, identischen oder weitgehend identischen nicht ebenen Konturen (67' und 67") dachförmig, regelmäßig oder unregelmäßig gebogen oder gewölbt und je mit einem Scheitelpunkt (69) versehen, oder wellenförmig oder mehrstufig ansteigend gestaltet sind.

6. Verfahren nach einem der Ansprüche 1 bis 5,
wobei das Verfahren zur Warmumformung eines ebenen, aus thermoplastischem Kunststoff bestehenden Schichtstoffstücks mit nachstehenden Mitteln und Maßnahmen durchgeführt wird:
In einer Anlage mit einer Be- und Entladestation (A), mit einer Umformstation (B), mit einer Heizstation (C) und wahlweise mit einer Temperaturmessstation (D) wird in der Be- und Entladestation (A) ein rechteckiger Transportrahmen (20) bereitgestellt, der längs seiner beiden Längsseiten (22' und 22") auf je einer geraden Schiene (15) bewegbar ist, insbesondere gleitet, die durch die gesamte Anlage führt;
auf diesem Transportrahmen (20) wird eine rahmenförmige Palette (30) abgelegt, deren Rahmen (31) eine Aussparung (35) umgibt;
auf dieser rahmenförmigen Palette (30) wird das umzuformende ebene Schichtstoffstück (3) in definierter Anordnung abgelegt, wobei lediglich eine Schichtstoffstück-Randzone (6) auf dem Rahmen (31) der rahmenförmigen Palette (30) aufliegt;
der Transportrahmen (20) mit der rahmenförmigen Palette (30) und dem ebenen Schichtstoffstück (3) wird längs der beiden Schienen (15) aus der Be- und Entladestation (A) durch die Umformstation (B) in die Heizstation (C) gefahren, wo das ebene Schichtstoffstück (3) berührungsfrei auf eine vorgegebene Temperatur erwärmt wird;
anschließend wird der Transportrahmen (20) mit der rahmenförmigen Palette (30) und dem warmen ebenen Schichtstoffstück (3) längs der beiden Schienen (15) aus der Heizstation (C) zurück in die Umformstation (B) gefahren, wo der an den beiden Schienen (15) gehaltene Transportrahmen (20) eine definierte Anordnung zu einem Formwerkzeug (49) einnimmt, das aufweist:
- eine obere Formwerkzeughälfte (80), die eine Druckglocke (82) bildet, in die ein fluides Druckmittel, insbesondere Druckluft, unter hohem Druckmitteldruck einführbar ist, und die eine umlaufende Dichtfläche (85) hat, in der eine umlaufende Nut (89) ausgespart ist, in die ein Dichtmittel eingelegt ist;
- eine untere Formwerkzeughälfte (50), die eine Bodenplatte (52) hat, auf der ein Unterbau (54) abgestützt ist, an dem eine mit Formkonturen (56', 56", 56"') versehene Form (55) oder ein zu kaschierendes, mit Trägerteilkonturen versehenes 3D-Trägerteil befestigt ist;
- dieser Unterbau (54) von einem, auf der Bodenplatte (52) abgestützten Spannrahmen oder von einem, mit Hilfe von Druckfedern (58) an der Bodenplatte (52) abgestützten Federrahmen (57) umgeben ist, an dem das warme, ebene, umzuformende Schichtstoffstück (3) ablegbar ist;
- diese untere Formwerkzeughälfte (50) eine von der oberen Formwerkzeughälfte (80) entfernte Freigabestellung sowie eine zur oberen Formwerkzeughälfte (80) benachbarte Schließstellung einnehmen kann;
- in dieser Freigabestellung der Transportrahmen (20) mit der rahmenförmigen Palette (30) und mit dem warmen ebenen Schichtstoffstück (3) zwischen die beiden Formwerkzeughälften (50 und 80) einfahrbar ist und eine solche Position einnimmt, in welcher der Spannrahmen oder der Federrahmen (57) eine Anordnung innerhalb und unterhalb der Aussparung (35) an der rahmenförmigen Palette (30) einnimmt;
- in dieser Schließstellung das warme Schichtstoffstück (3) einen geringen Abstand zur Dichtfläche (85) an der Druckglocke (82) einhält und dort an das Dichtmittel anlegbar ist, wobei die Druckglocke (82) druckdicht gegenüber dem Schichtstoffstück (3) abgedichtet wird; und
bei dieser Anordnung in die Druckglocke (82) ein fluides Druckmittel, insbesondere Druckluft, unter einem Druckmitteldruck von 20 bar bis 300 bar eingeführt wird,
welches das warme Schichtstoffstück (3) innerhalb einer Zeitspanne kleiner 5 Sekunden isostatisch an die Formkonturen (56', 56", 56"') oder an die 3D-Trägerteilkonturen anformt;
**dadurch gekennzeichnet, dass**
- das ebene Schichtstoffstück (3) mit seiner Randzone (6) so auf dem Rahmen (31) der rahmenförmigen Palette (30) aufliegt, dass Teile dieser Randzone (6) des warmen ebenen Schichtstoffstücks (3) auf diesem Rahmen (31) in einer ersten Schichtstoffrichtung (R) gleiten können;
- der Spannrahmen oder der Federrahmen (57) an zwei parallelen, beabstandeten, zueinander gegenüberliegend angeordneten Rahmenabschnitten je einen, eine nicht ebene Kontur aufweisenden, Auflageflächenabschnitt hat, die beide zusammen eine nicht ebene Auflageflächenkontur (68) bilden; oder
- der Spannrahmen oder der Federrahmen (57) einen Rahmen (60) hat, auf dem ein rahmenförmiger Aufbau (62) abgestützt und befestigt ist, der an zwei parallelen, beabstandeten und zueinander gegenüberliegend angeordneten Seitenwänden (64' und 64") je einen, eine nicht ebene Kontur (67' und (67") aufweisenden Auflageflächenabschnitt (66' und 66") hat, die beide zusammen eine nicht ebene Auflageflächenkontur (68) bilden;
- die Druckglocke (82) an zwei parallelen, beabstandeten, zueinander gegenüberliegend angeordneten Druckglockenabschnitten (84' und 84") je einen, eine nicht ebene Kontur (87' und 87") aufweisenden, Dichtflächenabschnitt (86' und 86") hat, die beide zusammen eine nicht ebene Dichtflächenkontur (88) bilden, wobei diese nicht ebene Dichtflächenkontur (88) kongruent zur nicht ebenen Auflageflächenkontur (68) ausgebildet ist; und
- beim Anheben der unteren Formwerkzeughälfte (50) zum Erreichen der Schließstellung des Formwerkzeugs (49) die nicht ebenen Auflageflächenabschnitte (66' und 66") am Spannrahmen, am Federrahmen (57) oder an dem rahmenförmigen Aufbau (2) zwei parallele, beabstandete, zueinander gegenüberliegend angeordnete Schichtstoff-Randabschnitte (7' und 7") untergreifen, mit sich führen und schließlich nahe an die Dichtfläche (85) einschließlich nicht ebener Dichtflächenkontur (88) der Druckglocke (82) heranführen, wobei das gesamte warme ebene Schichtstoffstück (3) an diesen kongruenten, nicht ebenen Konturen (68 und 88) einachsig senkrecht zur Schichtstoffebene und nur in der ersten Schichtstoffrichtung (R), also monodirektional, zu einem, an diese Konturen (68 und 88) angepassten monodirektional abgeformten Vorformling (W) umgeformt wird.

7. Verfahren nach Anspruch 6,
**dadurch gekennzeichnet, dass**
ein mit Hilfe von Druckfedern (58) an der Bodenplatte (52) abgestützter Federrahmen (57) eingesetzt wird, der einen Rahmen (60) hat, an dem ein rahmenförmiger Aufbau (62) abgestützt und befestigt ist, dessen Seitenwände (64' und 64") die nicht ebenen Auflageflächenabschnitte (66' und 66") zum Umformen des warmen ebenen Schichtstoffstücks (3) zum monodirektional abgeformten Vorformling (W) bereitstellen;
nach der Umformung des warmen ebenen Schichtstoffstücks (3) zum monodirektional abgeformten Vorformling (W) dieser Federrahmen (57) seine obere Totstellung erreicht hat;
anschließend die Hubbewegung der unteren Formwerkzeughälfte (50) noch ein Stück weit fortgesetzt wird, wobei die Druckfedern (58) zusammengedrückt werden, ohne den Federrahmen(57) weiter anzuheben; und
während dieser Fortsetzung der Hubbewegung die Form (55) mit ihren Formkonturen (56', 56", 56"') oder das 3D-Trägerteil mit seinen 3D-Trägerteilkonturen wenigstens teilweise durch die Gestalt des warmen Vorformlings (W) hindurchtaucht und eine orientierende "mechanische" Positivformung an diesem Vorformling (W) verursacht.

8. Verfahren nach Anspruch 6 oder 7,
**dadurch gekennzeichnet, dass**
der, zusammen mit der rahmenförmigen Palette (3) und dem darauf aufliegenden warmen ebenen Schichtstoffstück (3) aus der Heizstation (C) zurück in die Umformstation (B) gefahrene Transportrahmen (20) an den Schienen (15) ein Stück weit unterhalb der, ihre absenkte Stellung einnehmenden oberen Formwerkzeughälfte (80) angeordnet wird; und
nach Erzeugung des monodirektional abgeformten Vorformlings (W) die, diesen Vorformling (W) tragende rahmenförmige Palette (30) gemeinsam mit diesem Vorformling (W) von dem Transportrahmen (20) getrennt und vom Rahmen (60) des Spannrahmens oder des Federrahmens (57) ein Stück weit angehoben wird, bis die untere Formwerkzeughälfte (50) am Ende ihrer Hubbewegung ihre obere Totstellung erreicht hat.

9. Verfahren nach einem der Ansprüche 6 bis 8,
**dadurch gekennzeichnet, dass**
das Dichtmittel an der Dichtfläche (85) der Druckglocke (82) eine strangförmige Profildichtung (90) ist, die einen, in die Nut (89) an der Dichtfläche (85) eingesetzten Körper (91) hat, von dem eine elastische Dichtlippe (92) absteht, die eine äußere Dichtlippenflanke (93) und eine innere Dichtlippenflanke (94) hat;
in der Schließstellung des Formwerkzeugs (49) die Auflagefläche (65) an der unteren Formwerkzeughälfte (50) zur Dichtfläche (85) an der oberen Formwerkzeughälfte (80) einen Abstand einhält, der ausmacht:
[Schichtdicke des umzuformenden Schichtstoffstückes plus (100 µm bis 1200 µm)], so dass ein Spalt zwischen der nicht ebenen Auflagefläche (65) und der nicht ebenen Dichtfläche (85) gebildet ist; und
das unter hohem Druckmitteldruck in die Druckglocke (82) einströmende fluide Druckfluid auf die innere Dichtlippenflanke (94) trifft und die elastische Dichtlippe (92) so verformt, dass diese Dichtlippe (92) diesen Spalt überbrückt und die Randzone am monodirektional abgeformten Vorformling (W) druckdicht gegenüber der Dichtfläche (85) an der Druckglocke (82) abdichtet.

10. Verfahren nach einem der Ansprüche 1 bis 9,
**dadurch gekennzeichnet, dass**
ein Schichtstoffstück eingesetzt wird, das aus einem thermoplastischen Kunststoff besteht, der aus einer Gruppe ausgewählt ist, die umfasst:
- Polycarbonate (PC) oder Copolycarbonate auf Basis von Diphenolen, insbesondere auch auf der Basis von Bisphenol A und modifizierten Bisphenol-Verbindungen;
- Poly- oder Copolyacrylate;
- Poly- oder Copolymethacrylate, hier insbesondere Polymethylmethyacrylat (Poly(meth)acrylat, PMMA);
- Poly- oder Copolymere mit Styrol, hier insbesondere auch schlagzähes Polystyrol, Polystyrolacrylnitril (SAN) und Acrylnitril-Butadien-Styrol-Terpolymere (ABS);
- thermoplastische Polyurethane (TPU) als Bindemittel in mehrlagigen Anordnungen;
- Polysulfone, hier insbesondere Polyphenylsulfone und Polyarylsulfone (PSU);
- Polyester (PE), hier insbesondere Poly- oder Copolykondensate der Terephthalsäure, einschließlich Poly- oder Copolyethylenterephthalat [PET oder CoPET, glycol-modifiziertes PET (PETG)], und Poly- oder Copolybutylenterephthalat (PBT oder CpPBT);
- Polyamide (PA);
- Polypropylen (PP);
- Polyvinylchlorid (PVC); und
- Mischungen oder Blends aus den vorstehend genannten Materialien.

11. Verfahren nach einem der Ansprüche 1 bis 10,
**dadurch gekennzeichnet, dass**
der Schichtstoff in Form einer einlagigen Kunststofffolie oder in Form eines mehrlagigen Verbunds aus zwei oder mehr Kunststofffolien eingesetzt wird, wobei jede einzelne Kunststofffolie eine Schichtdicke von 50 µm bis 1000 µm aufweist, insbesondere eine Schichtdicke von 200 µm bis 750 µm aufweist.

12. Verfahren nach einem der Ansprüche 1 bis 10,
**dadurch gekennzeichnet, dass**
der Schichtstoff in Form einer einlagigen Platte aus thermoplastischem Kunststoff eingesetzt wird, die eine Schichtdicke von 1000 µm bis 10.000 µm aufweist, insbesondere eine Schichtdicke von 3000 µm bis 10.000 µm aufweist oder in Form eines mehrlagigen Verbundes aus einer oder mehreren Kunststoffplatte(n), gegebenenfalls zusammen mit einer oder mehreren Kunststofffolie(n), je aus thermoplastischem Kunststoff eingesetzt wird, wobei die Gesamtschichtdicke eines solchen Verbundes 12.000 µm nicht übersteigt.

13. Verfahren nach einem der Ansprüche 1 bis 12,
**dadurch gekennzeichnet, dass**
einlagige oder mehrlagige Schichtstoffe eingesetzt werden, die auf einer Oberfläche oder auf beiden Oberflächen wenigstens teilweise bedruckt, metallisiert und/oder sonst wie beschichtet sind, oder im Falle eines mehrlagigen Schichtstoffes eine solche Bedruckung, Metallisierung und/oder sonstige Beschichtung auch sandwichartig zwischen zwei Lagen aus transparenten Kunststoffen vorgesehen sein kann.

14. Verfahren nach einem der Ansprüche 1 bis 13,
**dadurch gekennzeichnet, dass**
ein, aus thermoplastischem Kunststoff bestehender Schichtstoff vor der Umformung berührungsfrei mit Hilfe von Strahlungsheizung so erwärmt wird, damit wenigstens eine Seite der gesamten Formfläche oder des überwiegenden Teils der Formfläche des umzuformenden Schichtstoffstückes eine Oberflächentemperatur im Bereich von [VST (= Vicat softening temperature) B50 (°C) dieses Kunststoffes minus 20 °C] bis [VST B50 (°C) dieses Kunststoffes plus 23 °C] annimmt.

15. Verfahren nach Anspruch 14,
**dadurch gekennzeichnet, dass**
das ebene Schichtstoffstück eine, aus thermoplastischem Kunststoff bestehende Platte mit einer Schichtdicke von 3000 µm bis 10.000 µm ist;
diese Platte zur Erwärmung in der Heizstation (C) eine Zeitspanne lang zwischen einem oberen Heizfeld (41) und einem unteren Heizfeld (42) einer Heizeinrichtung (40) gehalten wird, wobei jedes Heizfeld (41, 42) einen Heizschirm aufweist, der je aus einer Anzahl individuell ansteuerbarer Infrarot-Flächenstrahler (44, 45', 45") aufgebaut ist;
die beiden Heizschirme bei je einer Oberflächentemperatur von im Mittel zwischen etwa 120 °C bis 180 °C oberhalb VST 50B (°C) des jeweiligen Kunststoffes gehalten werden; und
die zu erwärmende, mit Umgebungstemperatur zwischen diese Heizschirme eingebrachte Platte für eine plattendickenabhängige Verweilzeit von [(Zahlenwert der Plattendicke in mm) x 23 (Sekunden) + z (Sekunden)] zwischen diesen Heizschirmen gehalten wird, um die Erwärmung der Platte auf die Umformtemperatur durchzuführen; z hat hier einen Wert von 3 bis 60.

16. Verfahren nach Anspruch 14 oder 15,
**dadurch gekennzeichnet, dass**
das so erwärmte Schichtstoffstück auf dem Weg von der Heizstation (C) zu der Umformstation (B) eine Temperaturmessstation (D) passiert, in der mit Hilfe einer Wärmbildkamera (47) die Temperaturverteilung an einer Schichtstoffstück-Oberfläche abgetastet, sichtbar gemacht und/oder auf sonstige Weise dargestellt wird.

17. Verfahren nach einem der Ansprüche 1 bis 16,
**dadurch gekennzeichnet, dass**
die Warmumformung eines ein- oder mehrlagigen, aus thermoplastischem Kunststoff bestehenden Schichtstoffstücks zur Herstellung eines 3D-Formteils eingesetzt wird.

18. Verfahren nach einem der Ansprüche 1 bis 16,
**dadurch gekennzeichnet, dass**
die Warmumformung eines, aus thermoplastischem Kunststoff bestehenden Schichtstoffstückes zur Herstellung eines 3D-Trägerteils eingesetzt wird, das mit einem solchen Schichtstoffstück kaschiert ist, wobei der Schichtstoff über einen Kleber am 3D-Trägerteil haftet.

19. Verfahren nach Anspruch 18,
**dadurch gekennzeichnet, dass**
- ein auf das 3D-Trägerteil abgestimmter Zuschnitt (11) aus dem Schichtstoff auf einer Transferfolie (10) abgelegt wird;
- lediglich eine Randzone (6) dieser Transferfolie (10) auf dem Rahmen (31) einer rahmenförmigen Palette (30) abgelegt wird;
- an Transferfolie (10) und Schichtstoffzuschnitt (11) gemeinsam die monodirektionale Umformung zum monodirektional abgeformten Vorformling durchgeführt wird;
- lediglich die so abgeformte Transferfolie (10) zwischen der Auflagefläche (65) an der unteren Formwerkzeughälfte (50) und der Dichtfläche (85) an der oberen Formwerkzeughälfte (80) eingespannt wird; und
- bei Beaufschlagung mit dem Hochdruck-Druckfluid das Druckfluid auf die Transferfolie (10) trifft und die Transferfolie (10) zusammen mit dem Schichtstoffzuschnitt (11) gemeinsam umformt, wobei der an der Transferfolie (10) anliegende Schichtstoffzuschnitt (11) über eine Kleberschicht (12) an das 3D-Trägerteil angelegt und ankaschiert wird.

20. Formwerkzeug
zur Hochdruckumformung eines einlagigen oder mehrlagigen Schichtstoffstückes, mit einer oberen Formwerkzeughälfte (80), die eine Druckglocke (82) bildet,
- in die ein fluides Druckmittel, insbesondere Druckluft, unter einem Druckmitteldruck von 20 bar bis 300 bar einführbar ist, und
- die eine umlaufende Dichtfläche (85) hat, in der eine umlaufende Nut (89) ausgespart ist, in die ein Dichtmittel eingelegt ist; und
mit einer unteren Formwerkzeughälfte (50),
- die eine Bodenplatte (52) hat, auf der ein Unterbau (54) abgestützt ist, an dem eine mit Formkonturen (56', 56", 56"') versehene Form (55) oder ein zu kaschierendes, mit 3D-Trägerteilkonturen versehenes 3D-Trägerteil befestigt ist, an welche Konturen das mit dem fluiden Druckmittel beaufschlagte Schichtstoff stück (3) angeformt wird; und
- dieser Unterbau (54) von einem, an der Bodenplatte (52) abgestützten Spannrahmen oder von einem, auf Druckfedern (58) an der Bodenplatte (52) abgestützten Federrahmen (57) umgeben ist, an dem das warme abzuformende Schichtstoffstück (3) ablegbar ist; und
diese untere Formwerkzeughälfte (50) eine von der oberen Formwerkzeughälfte (80) entfernte Freigabestellung sowie eine zur oberen Formwerkzeughälfte (80) benachbarte Schließstellung einnehmen kann; wobei
- in dieser Freigabestellung der Transportrahmen (20) mit der rahmenförmigen Palette (30) und mit dem darauf aufliegenden warmen Schichtstoffstück (3) zwischen die beiden Formwerkzeughälften (50 und 80) einbringbar ist und dort eine Position einnimmt, in welcher der Spannrahmen oder der Federrahmen (57) eine Anordnung innerhalb und unterhalb der Aussparung (35) an der rahmenförmigen Palette (30) einnimmt;
- in dieser Schließstellung das warme Schichtstoffstück (3) einen geringen Abstand zur Dichtfläche (85) an der Druckglocke (82) einhält und dort an das Dichtmittel anlegbar ist, wobei die Druckglocke (82) druckdicht gegenüber dem Schichtstoffstück (3) abgedichtet wird; und
- bei dieser Anordnung in die Druckglocke (82) ein fluides Druckmittel, insbesondere Druckluft, unter einem Druckmitteldruck von 20 bar bis 300 bar einführbar ist, welches das warme Schichtstoffstück (3) innerhalb einer Zeitspanne kleiner 5 Sekunden isostatisch an die Formkonturen (56', 56", 56"') oder an die 3D-Trägerteilkonturen anformt;
**dadurch gekennzeichnet, dass**
- der Spannrahmen oder der Federrahmen (57) an zwei parallelen, beabstandeten, zueinander gegenüberliegend angeordneten Rahmenabschnitten je einen, eine nicht ebene Kontur aufweisenden, Auflageflächenabschnitt hat, die beide zusammen eine nicht ebene Auflageflächenkontur bilden; oder
- der Spannrahmen oder der Federrahmen (57) einen Rahmen (60) hat, auf dem ein rahmenförmiger Aufbau (62) abgestützt und befestigt ist, der an zwei parallelen, beabstandeten und zueinander gegenüberliegend angeordneten Seitenwänden (64' und 64") je einen, eine nicht ebene Kontur (67', 67") aufweisenden Auflageflächenabschnitt (66' und 66") hat, die beide zusammen eine nicht ebene Auflageflächenkontur (68) bilden;
- die Druckglocke (82) an zwei parallelen, beabstandeten, zueinander gegenüberliegend angeordneten Druckglockenabschnitten (84' und 84") je einen, eine nicht ebene Kontur (87' und 87") aufweisenden, Dichtflächenabschnitt (86' und (86") hat, die beide zusammen eine nicht ebene Dichtflächenkontur (88) bilden, wobei diese nicht ebene Dichtflächenkontur (88) kongruent zur nicht ebenen Auflageflächenkontur (68)ausgebildet ist; und
- beim Anheben der unteren Formwerkzeughälfte (50) zum Erreichen der Schließstellung des Formwerkzeugs (49) die nicht ebenen Auflageflächenabschnitte (66' und 66") am Spannrahmen, am Federrahmen (57) oder an dem rahmenförmigen Aufbau (2) zwei paralllele, beabstandete, zueinander gegenüberliegend angeordnete Schichtstoff-Randabschnitte (7' und 7") untergreifen, mit sich führen und schließlich nahe an die Dichtfläche (85) einschließlich nicht ebener Dichtflächenkontur (88) der Druckglocke (82) heranführen, wobei das gesamte warme ebene Schichtstoffstück (3) an diesen kongruenten, nicht ebenen Konturen (68 und 88) einachsig senkrecht zur Schichtstoffebene und nur in der ersten Schichtstoffrichtung (R), also monodirektional zu einem, an diese Konturen (68 und 88) angepassten, monodirektional abgeformten Vorformling (W) umgeformt wird.

21. Formwerkzeug nach Anspruch 20,
**dadurch gekennzeichnet, dass**
die an der Auflagefläche (65) des Spannrahmens oder des Federrahmens (57) oder an den Seitenwänden (64', 64") des rahmenförmigen Aufbaus (62) befindlichen nicht ebenen Konturen (67' und 67") dachförmig, regelmäßig oder unregelmäßig gebogen oder gewölbt und mit einem Scheitelpunkt (69) versehen, oder wellenförmig oder mehrstufig ansteigend gestaltet sind.

22. Formwerkzeug nach Anspruch 20 oder 21,
**dadurch gekennzeichnet, dass**
im Verlauf der Hubbewegung der unteren Formwerkzeughälfte (50) der Rahmen (60) des Spannrahmens oder des Federrahmens (57) mit seiner Randzone (61) die Unterseite der rahmenförmigen Palette (30) an deren Innenumfang (32) untergreift, diese Palette (30) mit dem darauf befindlichen Schichtstoff ein Stück weit anhebt und damit vom dem ortsfest gehaltenen Transportrahmen (20) löst und trennt.

23. Formwerkzeug nach einem der Ansprüche 20 bis 22,
**dadurch gekennzeichnet, dass**
ein mit Hilfe von Druckfedern (58) an der Bodenplatte (52) abgestützter Federrahmen (57) vorhanden ist, der einen Rahmen (60) hat, an dem ein rahmenförmiger Aufbau (62) abgestützt und befestigt ist, dessen Seitenwände (64' und 64") die nicht ebenen Auflageflächenabschnitte (66' und 66") zum Umformen des warmen ebenen Schichtstoffstücks (3) zum monodirektional abgeformten Vorformling (W) bereitstellen;
nach der Umformung des warmen ebenen Schichtstoffstücks (3) zum monodirektional abgeformten Vorformling (W) dieser Federrahmen (57) seine obere Totstellung einnimmt;
anschließend die Hubbewegung der unteren Formwerkzeughälfte (50) noch ein Stück weit fortsetzbar ist, wobei die Druckfedern (58) zusammengedrückt werden, ohne den Federrahmen(57) weiter anzuheben; und
während dieser Fortsetzung der Hubbewegung die Form (55) mit ihren Formkonturen (56', 56", 56"') oder das 3D-Trägerteil mit seinen 3D-Trägerteilkonturen wenigstens teilweise durch die Gestalt des warmen Vorformlings (W) hindurch taucht und eine orientierende "mechanische" Positivformung an diesem Vorformling (W) verursacht.

24. Formwerkzeug nach einem der Ansprüche 20 bis 23,
**dadurch gekennzeichnet, dass**
das Dichtmittel an der Dichtfläche (85) der Druckglocke (82) eine strangförmige Profildichtung (90) ist, die einen, in die Nut (89) an der Dichtfläche (85) eingesetzten Körper (91) hat, von dem eine elastische Dichtlippe (92) absteht, die eine äußere Dichtlippenflanke (93) und eine innere Dichtlippenflanke (94) hat;
in der Schließstellung des Formwerkzeugs (49) die Auflagefläche (65) an der unteren Formwerkzeughälfte (50) zur Dichtfläche (85) an der oberen Formwerkzeughälfte (80) einen Abstand einhält, der ausmacht:
[Schichtdicke des umzuformenden Schichtstoffstückes plus (100 µm bis 1200 µm)], so dass ein Spalt zwischen der nicht ebenen Auflagefläche (65) und der nicht ebenen Dichtfläche (85) gebildet ist; und
das unter hohem Druckmitteldruck in die Druckglocke (82) einströmende fluide Druckfluid auf die innere Dichtlippenflanke (94) trifft und die elastische Dichtlippe (92) so verformt, dass diese Dichtlippe (92) diesen Spalt überbrückt und die Randzone am monodirektional abgeformten Vorformling (W) druckdicht gegenüber der Dichtfläche (85) an der Druckglocke (82) abdichtet.

25. Formwerkzeug nach einem der Ansprüche 20 bis 24,
**dadurch gekennzeichnet, dass**
nach Beendigung der isostatischen Hochdruckumformung und Belüftung der Druckglocke (82) die rahmenförmige Palette (30), auf der sich das gebildete Formteil oder das kaschierte 3D-Trägerteil befindet, gegenüber der oberen Formwerkzeughälfte (80) absenkbar und auf dem ortsfest gehaltenen Transportrahmen (20) ablegbar ist; und
daraufhin die obere Formwerkzeughälfte (80) ein Stück weit anhebbar ist, um den Transportrahmen (20) mit dem darauf abgelegten 3D-Formteil oder kaschierten, 3D-Trägerteil störungsfrei aus der Umformzone (B) entnehmen und in die Be- und Entladestation (A) verfahren zu können.

26. Formwerkzeug nach Anspruch 20,
**dadurch gekennzeichnet, dass**
das umzuformende ebene Schichtstoffstück (3) auf einer ebenen rahmenförmigen Palette (30) ablegbar ist, deren Rahmen (31) an seinem Innenumfang (32) mit einer Anzahl beabstandeter, nach innen vorspringender Vorsprünge (33) versehen ist, und die Randzone (6) des Schichtstoffstückes (3) nur auf diesen Vorsprüngen (33) abgelegt wird.

27. Formwerkzeug nach Anspruch 26,
**dadurch gekennzeichnet, dass**
der Spannrahmen oder der Federrahmen (57) oder die Seitenflächen (64' und 64") des auf dem Rahmen (60) des Federrahmens (57) abgestützten und dort befestigten rahmenförmigen Aufbaus (62)
- einen strukturierten Außenumfang (72) und eine nicht ebene Auflagefläche (65) mit einspringenden Aussparungen (74) und nach Außen vorspringenden Tafeln (76) an diesem Außenumfang (72) haben;
- dieser Außenumfang (72) an den Innenumfang (32) am Rahmen (31) der rahmenförmigen Palette (30) so angepasst ist, dass dieser Spannrahmen oder dieser Federrahmen (57) oder dieser rahmenförmige Aufbau (62) in engem Abstand zum Innenumfang (32) des Palettenrahmens (31) bezüglich der ortsfest gehaltenen Palette (30) verschieblich ist;
- die Vorsprünge (33) am Innenumfang (32) des Palettenrahmens (31) in die Aussparungen (74) am Außenumfang (72) des Spannrahmens oder des Federrahmens (57) oder des rahmenförmigen Aufbaus (62) eingreifen;
- die vorspringenden Tafeln (76) am Außenumfang (72) des Spannrahmens oder des Federrahmens (57) oder des rahmenförmigen Aufbaus (62) in die Zwischenräume zwischen je zwei benachbarten Vorsprüngen (33) am Palettenrahmen (31) eingreifen; und
- beim Anheben des Spannrahmens oder des Federrahmens (57) oder des rahmenförmigen Aufbaus (62) bezüglich der ortsfest gehaltenen Palette (30) diese vorspringenden Tafeln (76) am Außenumfang (72) des Spannrahmens oder des Federrahmens (57) oder des rahmenförmigen Aufbaus (62) die Randabschnitte (7' und 7") des ebenen Schichtstoffstückes (3) untergreifen, mit sich führen, und so das Schichtstoffstück (3) auf der Auflagefläche (65) am Spannrahmen oder am Federrahmen (57) oder an dem rahmenförmigen Aufbau (62) ablegen,
- so dass bei einem weiteren Anheben des Spannrahmens oder des Federrahmens (57) oder des rahmenförmigen Aufbaus (62) bezüglich der ortsfest gehaltenen oberen Formwerkzeughälfte (80) das Schichtstoffstück (3) zwischen der nicht ebenen Auflageflächenkontur (68) und der dazu kongruenten nicht ebenen Dichtflächenkontur (88) monodirektional zu einem monodirektional abgeformten Vorformling (W) umgeformt wird.

28. Formwerkzeug nach Anspruch 27,
**dadurch gekennzeichnet, dass,**
an ausgewählten vorspringenden Vorsprüngen (33) am Innenumfang (32) des Palettenrahmens (31) vertikal abstehende Dorne (39) befestigt sind, welche so in, in der Randzone (6) des Schichtstoffstücks (3) ausgesparte, Bohrungen oder Langlöcher eingreifen, dass Teile dieser Randzone (6) auf dem Rahmen (31) der rahmenförmigen Palette (30) gleiten können.

## Claims

1. A method for hot forming a flat laminate piece made from a thermoplastic synthetic material into a 3-D molded part or for coating a 3-D support member, wherein the flat laminate piece (3) is laid down with an edge zone (6) thereof on a frame (31) of a frame-shaped pallet (30) and is heated to a predetermined temperature, and
pressurizing a forming area (8) of the warm laminate piece (3) present within said edge zone (6) of the warm laminate piece (3) with a fluid pressure medium, especially compressed air, under a pressure medium pressure of from 20 bar to 300 bar, and isostatically deforming said forming area (8) within a period less than 5 seconds to the 3-D molded part or laminating said forming area (8) to the 3-D support member,
which step is here shortly termed as isostatic high pressure forming,
**characterized in that**
the flat laminate piece (3) is arranged with its edge zone (6) in such a manner on said frame (31), that parts of the edge zone (6) of the warm flat laminate piece (3) may glide on the frame (31) in a first laminate direction (R); and
initially, two solid, identical or substantially identical, non-planar contours (67' and 67") arranged at a spring-loaded frame (57) or at a tension frame or at a support surface (65) of two parallel, spaced and mutual oppositely disposed side walls (64' and 64") of a frame-shaped structure (62) supported and fastened on the tension frame or on the spring-loaded frame (57)
acting on two parallel, spaced and mutual oppositely arranged laminate piece edge portions (7' and 7") in an uniaxial manner and perpendicular to a laminate piece plane, and deforming the entire warm, flat laminate piece (3) only in said first laminate direction (R), that is monodirectionally, to a warm monodirectionally deformed preform (W); and
then, subsequently, performing the isostatic high pressure forming on/with said warm, monodirectionally deformed preform (W).

2. The method according to claim 1,
**characterized by**
providing a rectangular flat laminate piece (E), having
in a Cartesian coordinate system, longer sides (F) parallel to the X-axis and shorter sides (G) parallel to the Y-axis;
on this flat laminate piece (E) a grid is imaginable, having straight lines (F1 to Fn), which are aligned parallel to the sides (F) and having each distances to each other, and with straight lines (G1 to Gn), which are aligned parallel to the sides (G) and having each distances to each other;
an impact of two spaced solid, identical or substantially identical contours, here, for example each a part-circular contour on a circle with a radius of 30 mm, in a manner uniaxial, perpendicular to the X,Y plane, ie in the Z direction and only in the X direction, that is monodirectional, causes a deformation of the flat laminate piece (E) to a monodirectionally deformed preform (W) having now an additional extension in the Z direction, wherein the original 50 mm long chord (s) has now become a 63 mm long circular arc (k) so that the monodirectionally deformed preform (V) now in the X-direction has 13 mm shorter length than the originally provided laminate piece (E); which is the reason why parts of the original flat laminate piece must be able to glide on a support member carrying the laminate piece;
wherein such a "monodirectional deformation" is characterized and is to be understood that on the monodirectionally deformed preform (V) the original straight lines (F1 to Fn) have now become curved lines (H2 to Hn), while the original straight lines (G1 to Gn) have been preserved as straight lines (G1 to Gn) of original length;
consequently, in the monodirectional deformation of the flat laminate piece (E) in the X direction no deformation of the flat laminate piece (E) and displacement of laminate particles in the thereto orthogonal Y-direction has taken place.

3. The method according to claim 1 or 2,
**characterized in that**
the warm flat laminate piece (3, E) is subjected to a drawing-free monodirectional deformation without elongation or is subjected to a low-drawing monodirectional deformation with a small elongation in the first laminate direction (R, X-direction).

4. The method according to one of claims 1 to 3,
**characterized in that**
the two solid, identical or substantially identical, non-planar contours (67' and 67") are provided on a support surface (65) of two parallel, spaced and mutual oppositely arranged frame sections of a tension frame or of a spring-loaded frame (57) or at a support surface (65) of two parallel, spaced and mutual oppositely disposed side walls (64' and 64") of a frame-shaped structure (62) supported and fastened on the tension frame or on the spring-loaded frame (57); and
said tension frame or said spring-loaded frame (57) is lifted relative to the frame-shaped pallet (30) on which the warm flat laminate piece (3) rests.

5. The method according to one of claims 1 to 4,
**characterized in that**
the two solid, identical or substantially identical, non-planar contours (67' 67") are roof shaped, regularly or irregularly bent or curved and each provided with a vertex (69), or are configured wave-like or multi-stage rising.

6. The method according to one of claims 1 to 5,
wherein the method for hot forming a flat laminate piece made from a thermoplastic synthetic material is carried out with following means and measures:
In a plant with a loading and unloading station (A), with a forming station (B), with a heating station (C) and optionally with a temperature measuring station (D),
a rectangular transport frame (20) is provided in the loading and unloading station (A), this rectangular transport frame (20) is movable, especially slidable along its two longitudinal sides (22' and 22") on a respective straight rail (15), which leads through the entire plant;
a frame-shaped pallet (30) having a frame (31) which surrounds a recess (35), is laid-down on this transport frame (20);
the flat laminate piece (3) to be deformed is arranged in a defined arrangement on this frame-shaped pallet (30), wherein only a laminate piece edge zone (6) rests on the frame (31) of the frame-shaped pallet (30);
the transport frame (20) with the frame-shaped pallet (30) and with the flat laminate piece (3) is moved along the two rails (15) from the loading and unloading station (A) through the forming station (B) into the heating station (C), where the flat laminate piece (3) is heated contactless to a predetermined temperature;
subsequently, the transport frame (20) with the frame-shaped pallet (30) and with the warm flat laminate piece (3) is moved back along the two rails (15) from the heating station (C) into the forming station (B), where the transport frame (20) held at the two rails (15) assumes a defined arrangement with respect to a mold (49), comprising:
- an upper mold half (80) which forms a pressure bell (82) into which a fluid pressure medium, especially compressed air, is insertable under high pressure medium pressure, and which has a circumferential sealing surface (85) in which a circumferential groove (89) is recessed, in which a sealing means is inserted;
- a lower mold half (50) having a bottom plate (52) on which a substructure (54) is supported, on which a mold (55) having form contours (56', 56", 56"') is attached, or on which a 3-D support member, provided with member part contours and to become laminated, is attached;
- this substructure (54) is surrounded by a tension frame supported on the bottom plate (52), or is surrounded by a spring-loaded frame (57) supported by means of compression springs (58), on the bottom plate (52), and the warm, flat, to become deformed laminate piece (3) is supportable on this tension frame or on this spring-loaded frame (57);
- this lower mold half (50) can take a release position remote from the upper mold half (80) and can take a closed position adjacent to the upper mold half (80);
- in this release position, the transport frame (20) with the frame-shaped pallet (30) and with the warm flat laminate piece (3) is insertable between the two mold halves (50 and 80) and assumes such a position in which the tension frame or the spring-loaded frame (57) occupies an arrangement within and below the recess (35) on the frame-shaped pallet (30);
- in this closed position, the warm laminate piece (3) maintains a small distance from the sealing surface (85) on the pressure bell (82) and may laid-down to the sealant, whereby the pressure bell (82) is pressure-tightly sealed relative to the laminate piece (3); and
in this arrangement, a fluid pressure medium, especially compressed air, under a pressure medium pressure of from 20 bar to 300 bar is introduced into the pressure bell (82),
which isostatically attaches the warm laminate piece (3) within a period of less than 5 seconds to the mold contours (56', 56", 56"') or to the 3-D support part contours;
**characterized in that**
- the flat laminate piece (3) rests with its edge zone (6) in such a manner on the frame (31) of the frame-shaped pallet (30) that parts of this edge zone (6) of the warm flat laminate piece (3) may glide on this frame (31) in a first laminate direction (R);
- the tension frame or the spring-loaded frame (57) comprises on two parallel, spaced, mutual oppositely arranged frame sections each one of a supporting surface portion, each having a non-planar contour, which together form a non-planar supporting surface contour (68); or
- the tension frame or the spring-loaded frame (57) has a frame (60) on which a frame-shaped structure (62) is supported and attached which has at two parallel, spaced and mutual oppositely arranged side walls (64' and 64") each one of a supporting surface portion (66' and 66 "), each having a non-planar contour (67' and 67"), which together form a non-planar supporting surface contour (68);
- the pressure bell (82) has on two parallel, spaced, mutual oppositely arranged pressure bell sections (84' and 84") each one of a sealing surface portion (86' and 86"), each having a non-planar contour (87' and 87"), which together form a non-planar sealing surface contour (88), wherein said non-planar sealing surface contour (88) is congruent with said non-planar supporting surface contour (68); and
- when lifting the lower mold half (50) to reach the closed position of the mold (49), the non-planar supporting surface portions (66' and 66") on the tension frame, or on the spring-loaded frame (57) or on the frame-shaped structure (62) contact two parallel, spaced, mutual oppositely arranged laminate edge portions (7' and 7") at their underside, engage and lead these two parallel, spaced, mutual oppositely arranged laminate edge portions (7' and 7") with them and finally place these two parallel, spaced, mutual oppositely arranged laminate edge portions (7' and 7") close to the non-planar sealing surface contour (88) at the sealing surface (85) of the pressure bell (82), which causes the entire warm flat laminate piece (3) at these congruent, non-planar contours (68 and 88) to become deformed uniaxially, perpendicular to the laminate plane and only in the first laminate direction (R), that is monodirectional, to become a monodirectionally deformed preform (W) adapted to these contours (68 and 88).

7. The method according to Claim 6,
**characterized in that**
a spring-loaded frame (57) is provided which is supported on a bottom plate (52) by means of compression springs (58) and which has a frame (60) on which a frame-shaped structure (62) is supported and fastened, which has side walls (64' and 64") which provide the non-planar supporting surface portions (66' and 66") for monodirectionally deforming the warm flat laminate piece (3) to become the monodirectionally deformed preform (W);
subsequently to the deformation of the warm flat laminate piece (3) to the monodirectionally deformed preform (W), the spring-loaded frame (57) has reached its upper dead position;
subsequently, the lifting movement of the lower mold half (50) is continued a further little distance, wherein the compression springs (58) are compressed without further lifting the spring-loaded frame (57); and
during this continuation of the lifting movement, the mold (55) including its forming contours (56', 56", 56"') or the 3-D support part including its 3-D support part contours passes at least partially through the body of the warm preform (W) and causes an orienting "mechanical" positive shaping of this preform (W).

8. The method according to claim 6 or 7,
**characterized in that**
the transport frame (20) along with the frame-shaped pallet (30) and with the warm flat laminate piece (3) placed thereupon is moved from the heating station (C) back into the forming station (B) at the rails (15) and is arranged a little distance below the upper mold half (80) which occupies its lowered position; and
after obtaining the monodirectionally deformed preform (W), the frame-shaped pallet (30) carrying this preform (W) is removed from the transport frame (20), and both, the frame-shaped pallet (30) and deformed preform (W) resting thereupon are lifted a little distance with respect to the frame (60) of the tension frame or of the spring-loaded frame (57)), until the lower mold half (50) has reached its upper dead position at the end of this stroke movement.

9. The method according to one of claims 6 to 8,
**characterized in that**
the sealing means on the sealing surface (85) of the pressure bell (82) is a strand-shaped profile seal (90), having a body (91) inserted in a groove (89) at the sealing surface (85), and from this body (91) an elastic sealing lip (92) is protruding having an outer sealing lip flank (93) and an inner sealing lip flank (94);
in the closed position of the molding tool (49), the support surface (65) on the lower mold half (50) maintains a distance to the sealing surface (85) on the upper mold half (80), this distance makes up:
[layer thickness of the laminate to become deformed plus (100 microns to 1200 microns)],
thus maintaining a gap between the non-planar supporting surface (65) and the non-planar sealing surface (85); and
the fluid pressure medium entering the pressure bell (82) under high pressure medium pressure hits the inner sealing lip flank (94) and deforms the elastic sealing lip (92) in such a way that this sealing lip (92) bridges this gap and pressure-tightly seals an edge zone of the monodirectionally deformed preform (W) against the sealing surface (85) on the pressure bell (82).

10. The method according to one of claims 1 to 9,
**characterized in that**
a laminate piece is used, which consists of a thermoplastic synthetic material which is selected from a group comprising:
- polycarbonates (PC) or co-polycarbonates based on di phenols, especially also based on bisphenol A and modified bisphenol compounds;
- poly- or co-poly acrylates;
- poly- or co-polymethacrylates, here especially poly methyl methacrylate or poly(meth)acrylate (PMMA);
- poly- or copolymers comprising styrene, here especially also impact modified polystyrene, polystyrene-acrylonitrile (SAN) and acrylonitrile-butadiene-styrene terpolymers (ABS);
- thermoplastic polyurethanes (TPU) as a binder agent in multi-layered arrangements;
- poly sulfones, especially poly phenyl sulfones and poly aryl sulfones (PSU);
- polyesters (PE), here especially poly- or co-poly condensates of terephthalic acid, including poly- or co-polyethylene terephthalate [PET or Co PET, glycol-modified PET (PETG)], and poly- or co-polybutylene terephthalate (PBT or CpPBT);
- polyamides (PA);
- polypropylene (PP);
- polyvinyl chloride (PVC); and
- mixtures or blends of the aforementioned materials.

11. The method according to one of claims 1 to 10,
**characterized in that**
the laminate is used in the form of a single-layer plastic film or in the form of a multi-layer composite containing two or more plastic films each individual plastic film has a layer thickness of from 50 microns to 1000 microns, especially a layer thickness of from 200 microns to 750 microns.

12. The method according to one of claims 1 to 10,
**characterized in that**
the laminate is used in the form of a single-layer plastic plate having a layer thickness of from 1000 microns to 10,000 microns, especially a layer thickness of from 3000 microns to 10,000 microns, or
the laminate is used in the form of a multi-layer composite containing one or more plastic plate(s), optionally together with one or more plastic film(s), wherein the total layer thickness of such a multi-layer composite does not exceed 12,000 microns.

13. The method according to one of claims 1 to 12,
**characterized in that**
single-layer or multi-layer laminates are used, having one surface or both surfaces at least partially printed, or metallized and/or otherwise coated, or
in the case of a multi-layered laminate such a printing, metallization and/or other coating may also be sandwiched between two layers of transparent plastic sheets.

14. The method according to one of claims 1 to 13,
**characterized in that**
a laminate piece consisting of thermoplastic synthetic resin before the step of deformation is contactless heated by means of radiant heating so that at least one side of the entire laminate surface to become deformed or the major part of the laminate surface to become deformed assumes a surface temperature ranging from [VST (= Vicat softening temperature) B50 (° C) of this thermoplastic material minus 20 ° C] to [VST B50 (° C) of this thermoplastic material plus 23 ° C].

15. The method according to claim 14,
**characterized in that**
the flat laminate piece is a plate, made of thermoplastic synthetic material having a layer thickness of from 3000 microns to 10,000 microns;
for heating in the heating station (C), this plate is maintained for a period of time between an upper heating field (41) and a lower heating field (42) of a heating device (40), each heating field (41, 42) having a heating screen each comprising a number of individually controllable infrared surface radiators (44, 45', 45");
the two heating screens are maintained at a surface temperature of - on average - in a range between about 120 ° C to 180 ° C above VST B5 (° C) temperature of the used thermoplastic synthetic material; and
the plate to be heated, is placed at ambient temperature between these heating screens, and is maintained for heating between these heating screens during a plate thickness dependent dwell time of [(number plate thickness in mm) x 23 (seconds) + z (seconds)]; wherein z has here a value of from 3 to 60.

16. The method according to claim 14 or 15,
**characterized in that**
the thus heated laminate piece passes on the way from the heating station (C) to the forming station (B) a temperature measuring station (D) equipped with a thermal imaging camera (47); and
the temperature distribution at a laminate surface is scanned by means of this thermal imaging camera (47) and is visualized and/or is displayed in any other way.

17. The method according to one of claims 1 to 16,
**characterized in that**
the hot forming of a single or multi-layer laminate piece, consisting of thermoplastic synthetic material, is used for the preparation of a 3-D molded part.

18. The method according to one of claims 1 to 16,
**characterized in that**
the hot forming of a laminate piece, made of thermoplastic synthetic material, is used for the preparation of a 3-D support member, which is laminated with such a laminate piece, wherein the laminate piece adheres via an adhesive on the 3-D support member.

19. The method according to claim 18,
**characterized in that**
- a blank (11) made of the laminate piece and tailored to the 3-D support member is deposited on a transfer film (10);
- only an edge zone (6) of this transfer film (10) is deposited on the frame (31) of a frame-shaped pallet (30);
- the monodirectional deformation step to obtain the monodirectionally deformed preform is commonly performed with this transfer film (10) and with this laminate piece blank (11);
- only the thus deformed transfer film (10) is clamped between the support surface (65) on the lower mold half (50) and the sealing surface (85) of the upper mold half (80); and
- when pressurized with the high pressure fluid medium, the pressurized fluid medium strikes the transfer film (10), and the transfer film (10) and the laminate piece blank (11) are commonly deformed, whereby the laminate piece blank (11) resting against the transfer film (10) is applied and laminated to the 3-D support member via an adhesive layer (12).

20. Forming tool
for high-pressure forming of a single-layer laminate piece or of a multi-layer laminate piece,
said forming tool comprises an upper mold half (80) which forms a pressure bell (82);
- a fluid pressure medium, especially compressed air, under a pressure medium pressure of from 20 bar to 300 bar may be introduced into said pressure bell (82); and
- this pressure bell (82) has a circumferential sealing surface (85) in which a circumferential groove (89) is recessed, in which a sealing means is inserted; and
- this forming tool comprises a lower mold half (50) having a bottom plate (52) on which a substructure (54) is supported, on which a mold (55) having forming contours (56', 56", 56"') is attached, or on which a 3-D support member provided with 3-D support member part contours is attached, and
the laminate piece (3) pressurized by the fluid pressure medium is to become deformed at these contours; and
- this substructure (54) is surrounded by a tension frame supported on the bottom plate (52), or is surrounded by a spring-loaded frame (57) supported by means of compression springs (58), on the bottom plate (52), and the warm, flat, to become deformed laminate piece (3) may laid-down on this tension frame or on this spring-loaded frame (57); and
- this lower mold half (50) can take a release position remote from the upper mold half (80) and can take a closed position adjacent to the upper mold half (80);
- in this release position, the transport frame (20) with the frame-shaped pallet (30) and with the warm flat laminate piece (3) is insertable between the two mold halves (50 and 80) and assumes such a position in which the tension frame or the spring-loaded frame (57) occupies an arrangement within and below the recess (35) on the frame-shaped pallet (30);
- in this closed position, the warm laminate piece (3) maintains a small distance from the sealing surface (85) on the pressure bell (82) and may laid-down there to the sealant, whereby the pressure bell (82) is pressure-tightly sealed relative to the laminate piece (3); and
in this arrangement, a fluid pressure medium, especially compressed air may be introduced into the pressure bell (82),
which fluid pressure medium isostatically deforms the warm laminate piece (3) within a period f less than 5 seconds to the forming contours (56', 56", 56"') or to the 3-D support part contours;
**characterized in that**
- the tension frame or the spring-loaded frame (57) comprises on two parallel, spaced, mutual oppositely arranged frame sections each one of a supporting surface portion, each having a non-planar contour, which together form a non-planar supporting surface contour (68); or
- the tension frame or the spring frame (57) has a frame (60) on which a frame-shaped structure (62) is supported and attached, which has at two parallel, spaced and mutual oppositely arranged side walls (64' and 64") each one of a supporting surface portion (66' and 66"), each having a non-planar contour (67' and (67"), which together form a non-planar supporting surface contour (68);
- the pressure bell (82) has on two parallel, spaced, mutual oppositely arranged pressure bell sections (84' and 84") each one of a sealing surface portion (86' and 86"), each having a non-planar contour (87' and 87"), which together form a non-planar sealing surface contour (88), wherein said non-planar sealing surface contour (88) is congruent with said non-planar supporting surface contour (68); and
- when lifting the lower mold half (50) to reach the closed position of the mold (49), the non-planar supporting surface portions (66' and 66") on the tension frame, or on the spring frame (57), or on the frame-shaped structure (62) contact two parallel, spaced, mutual oppositely arranged laminate edge portions (7' and 7") at the underside thereof, engage and lead these two parallel, spaced, mutual oppositely arranged laminate edge portions (7' and 7") with them and finally place these two parallel, spaced mutual oppositely arranged laminate edge portions (7' and 7") close to the non-planar sealing surface contour (88) at the sealing surface (85) of the pressure bell (82), which causes the entire warm flat laminate piece (3) at these congruent, non-planar contours (68 and 88) to become deformed uniaxially, perpendicular to the laminate plane and only in the first laminate direction (R), that is monodirectional, to become a monodirectionally deformed preform (W) adapted to these contours (68 and 88).

21. The forming tool according to claim 21,
**characterized in that**
the two solid, identical or substantially identical, non-planar contours (67'and 67") provided at the support surface of the tension frame or of the spring-loaded frame (57) or at the side walls (64', 64") of the frame-shaped structure (62) are roof shaped, regularly or irregularly bent or curved and each provided with a vertex (69), or are configured wave-like or multi-stage rising.

22. The forming tool according to claim 20 or 21,
**characterized in that**
in course of the lifting movement of the lower mold half (50), an edge zone (61) of the frame (60) of the tension frame or of the spring-loaded frame (57) engages the underside of the frame-shaped pallet (30) at an inner circumference (32) thereof and lifts this frame-shaped pallet (30) with the laminate piece thereupon a little distance and thus separates this frame-shaped pallet (30) with the laminate piece thereupon from the stationary held transport frame (20).

23. The forming tool according to one of claims 20 to 22,
**characterized in that**
a spring-loaded frame (57) is provided which is supported on a bottom plate (52) by means of compression springs (58) and which has a frame (60) on which a frame-shaped structure (62) is supported and fastened, which has side walls (64' and 64") which provide the non-planar supporting surface portions (66' and 66") for deforming the warm flat laminate piece (3) to the monodirectionally deformed preform (W);
subsequently to the deformation of the warm flat laminate piece (3) to the monodirectionally deformed preform (W), the spring-loaded frame (57) has reached its upper dead position;
subsequently, the lifting movement of the lower mold half (50) is continued a further little distance, wherein the compression springs (58) are compressed without further lifting the spring-loaded frame (57); and
during this continuation of the lifting movement, the mold (55) including its forming contours (56', 56", 56'") or the 3-D support part including its 3-D support part contours passes at least partially through the body of the warm preform (W) and causes an orienting "mechanical" positive shaping of this preform (W).

24. The forming tool according to one of claims 20 to 23,
**characterized in that**
the sealing means on the sealing surface (85) of the pressure bell (82) is a strand-shaped profile seal (90), having a body (91) inserted in a groove (89) at the sealing surface (85), and from this body (91) an elastic sealing lip (92) is protruding having an outer sealing lip flank (93) and an inner sealing lip flank (94); in the closed position of the molding tool (49), the support surface (65 at the lower mold half (50) maintains a distance to the sealing surface (85) on the upper mold half (80), this distance makes up:
[layer thickness of the laminate to become deformed plus (100 microns to 1200 microns)],
thus maintaining a gap between the non-planar supporting surface (65) and the non-planar sealing surface (85); and
the fluid pressure medium entering the pressure bell (82) under high pressure medium pressure hits the inner sealing lip flank (94) and deforms the elastic sealing lip (92) in such a way, that this sealing lip (92) bridges this gap and pressure-tightly seals an edge zone of the monodirectionally deformed preform (W) against the sealing surface (85) on the pressure bell (82).

25. The forming tool according to one of claims 20 to 24,
**characterized in that**
after completion of the isostatic high pressure forming step and aeration of the pressure bell (82), the frame-shaped pallet (30) and the molded part resting thereupon or the laminated 3-D support member resting thereupon is lowerable relative to the upper mold half (80) and may be laid-down on the stationary held transport frame (20); and
then, the upper mold half (80) is liftable a little distance to smoothly remove the transport frame (20) with the 3-D molded part resting thereupon, or with the laminated 3-D support part resting thereupon from the forming station (B) and to drive it into the loading and unloading station (A).

26. The forming tool according to claim 20,
**characterized in that**
the flat laminate piece (3) to become deformed can be placed on a flat frame-shaped pallet (30) having a frame (31) which is provided (32) with a number of spaced, inwardly projecting projections (33) on its inner periphery (32); and the edge zone (6) of the laminate piece (3) is deposited only on these projections (33).

27. The forming tool according to claim 26,
**characterized in that**
the tension frame or the spring-loaded frame (57) or the side walls (64' and 64") of the frame-shaped structure (62) deposited and fastened on the spring-loaded frame (57) comprise
- a structural outer circumference (72) and a non-planar support surface (65) having re-entering recesses (74) and outwardly projecting panels (76) on said outer circumference (72);
- this outer circumference (72) is adapted to an inner circumference (32) of the frame (31) of the frame-shaped pallet (30) in such a manner that this tension frame or this spring-loaded frame (57) or this frame-shaped structure (62) is displaceable in close proximity to the inner circumference (32) of the pallet frame (31) relative to the stationary held pallet (30);
- the projections (33) on the inner circumference (32) of the pallet frame (31) engage into the recesses (74) on the outer circumference (72) of the tension frame or of the spring-loaded frame (57) or of the frame-shaped structure (62);
- the projecting panels (76) on the outer circumference (72) of the tension frame or of the spring-loaded frame (57) or of the frame-shaped structure (62) engage into those spaces provided between each two adjacent projections (33) on the pallet frame (31); and
- upon lifting the tension frame or the spring-loaded frame (57) or the frame-shaped structure (62) relative to the stationary held pallet (30), these projecting panels (76) on the outer circumference (72) of the tension frame or of the spring-loaded frame (57) or of the frame-shaped structure (62) contact the edge portions (7' and 7") of the flat laminate piece (3) at the underside thereof, engage and lead these edge portions (7' and 7") along with them and thus lay-down the laminated piece (3) on the support surface (65) of the tension frame or of the spring-loaded frame (57) or of the frame-shaped structure (62);
- so that a further lifting of the tension frame or of the spring-loaded frame (57) or of the frame-shaped structure (62) relative to the stationary held upper mold half (80) will monodirectionally deform the laminate piece (3) between the non-planar support surface contour (68) and the congruent non-planar sealing surface contour (88) to become a monodirectionally deformed preform (W).

28. The forming tool according to claim 27,
**characterized in that**
vertically projecting mandrels (39) are fastened on selected protruding projections (33) on the inner circumference (32) of the pallet frame (31), and these projecting mandrels (39) engage into holes or slots recessed within the edge zone (6) of the laminate piece (3) in such a manner, that parts of this edge zone (6) may glide on the frame (31) of the frame-shaped pallet (30).

## Revendications

1. Procédé de transformation à chaud d'une pièce en matériau stratifié plane en matière plastique thermoplastique en une pièce conformée en 3D ou de revêtement d'une pièce de support en 3D,
dans lequel on dépose la pièce (3) en matériau stratifié plane, par sa zone (6) de bord, sur le cadre (31) d'une palette (30) en forme de cadre et on la chauffe à une température donnée à l'avance et
on soumet la surface (8) de forme, se trouvant à l'intérieur de cette zone (6) de bord, de la pièce (3) en matériau stratifié plane chaude à un agent sous pression fluide, notamment de l'air comprimé, sous une pression de 20 bar à 300 bar et, dans un laps de temps plus petit que 5 secondes, on la transforme isostatiquement en la pièce conformée en 3D ou on revêt la pièce de support en 3D,
ce qui sera désigné ici brièvement comme une transformation isostatique sous haute pression,
**caractérisé en ce que**
l'on met la pièce (3) en matériau stratifié plane, par sa zone (6) de bord, sur ce cadre (31), de manière à ce que des parties de cette zone (6) de bord de la pièce (3) en matériau stratifié plane chaude puisse glisser sur ce cadre (31) dans une première direction (R) de matériau stratifié ; et
d'abord, deux contours (67', 67'') fixes non plans pareils ou dans une grande mesure pareils, qui se trouvent sur un cadre (57) à ressort ou sur un cadre de serrage ou sur la surface (65) d'application de deux parois (64' et 64'') latérales parallèles à distance l'une de l'autre et opposées l'une à l'autre d'une structure (62) en forme de cadre, qui s'appuie et est fixée sur le cadre (57) à ressort ou sur le cadre de serrage,
agissent uni-axialement, perpendiculairement au plan du matériau stratifié, sur deux parties (7' et 7'') de bord de la pièce en matériau stratifié, parallèles, à distance l'une de l'autre et opposées l'une à l'autre et toute la pièce (3) plane en matériau stratifié chaude n'est transformée que dans cette première direction (R) de matériau stratifié, donc mono-directionnellement, en une pré-ébauche (V) chaude et déformée mono-directionnellement ; et
on effectue ensuite la transformation isostatique sous haute pression sur cette pré-ébauche (W) chaude et déformée mono-directionnellement.

2. Procédé suivant la revendication 1,
**caractérisé en ce que**
l'on se procure une pièce (E) en matériau stratifié plane rectangulaire, qui, dans un système de coordonnées cartésien, a des grands côtés (F) parallèles à l'axe X et des petits côtés (G) parallèles à l'axe Y ;
sur cette pièce (E) en matériau stratifié plane, peut être figuré par la pensée un quadrillage ayant des droites (F1 à Fn) parallèles, équidistantes et dirigées parallèlement au côtés (F), ainsi que des droites (G1 à Gn) parallèles, équidistantes et dirigées parallèlement aux côtés (G) ;
une action de deux contours non plans identiques, fixes, à distance, par exemple dans ce cas de respectivement un contour en forme de partie d'un cercle d'un rayon r = 30 mm, provoque uni-axialement perpendiculairement au plan XY, donc dans la direction Z, et seulement dans la direction X, donc mono-directionnellement, une transformation de la pièce (E) en matériau stratifié plane en une pré-ébauche (V) déformée mono-directionnellement, qui a alors une étendue supplémentaire dans la direction Z, dans lequel, à partir de la corde (s), d'une longueur à l'origine de 50 mm, on obtient maintenant un arc (k) de cercle d'une longueur de 63 mm, puisque la pré-ébauche (V) déformée mono-directionnellement a maintenant, dans la direction X, une longueur plus petite de 13 mm que la pièce (E) en matériau stratifié plane utilisée à l'origine, puisque des parties de cette pièce en matériau stratifié plane à l'origine doivent pouvoir glisser sur un support maintenant cette pièce en matériau stratifié, une telle « transformation monodirectionnelle » étant caractérisée et ainsi à comprendre, **en ce que**, sur la pré-ébauche (V) déformée mono-directionnellement, les droites (F2 à Fn) d'origine sont devenues maintenant des lignes (H2 à Hn) incurvées, tandis que les droites (G1 à Gn) d'origine continuent à rester des droites (G1 à Gn) ayant la longueur d'origine ;
il s'ensuit que, dans la transformation monodirectionnelle de la pièce (E) en matériau stratifié plane, il ne se produit pas dans la direction X de transformation de la pièce (E) en matériau stratifié plane et il se produit un déplacement de particules de matériau stratifié dans la direction Y, qui lui est orthogonale.

3. Procédé suivant la revendication 1 ou 2,
**caractérisé en ce que**
l'on effectue, sur la pièce (3, E) en matériau stratifié plane chaude, une transformation monodirectionnelle sans étirage ou avec peu d'étirage dans la première direction (R, direction X) du matériau stratifié.

4. Procédé suivant l'une des revendications 1 à 3,
**caractérisé en ce que**
les deux contours (67' et 67'') non plans, fixes, identiques ou dans une grande mesure identiques, de la surface (65) de support, se trouvent sur la surface (65) de support de deux parties de cadre parallèles, à distance l'une de l'autre et opposées l'une à l'autre d'un cadre de serrage ou d'un cadre (57) à ressort ou se trouvent sur la surface (65) de support de deux parois (64' et 64*''*) latérales, parallèles à distance et opposées l'une à l'autre d'une structure (62) en forme de cadre, qui s'appuie et est fixée sur le cadre de serrage ou sur le cadre (57) à ressort et ce cadre de serrage ou ce cadre (57) à ressort est soulevé, par rapport à la palette (30) en forme de cadre, sur laquelle s'applique la pièce (3) en matériau stratifié plane chaude.

5. Procédé suivant l'une des revendications 1 à 4,
**caractérisé en ce que**
les deux contours (67' et 67'') non plans, fixes, identiques ou dans une grande mesure identiques, sont en forme de toit, sont incurvés régulièrement ou irrégulièrement ou sont cintrés régulièrement ou irrégulièrement et sont pourvus chacun d'un point (69) culminant, ou sont conformés de manière sinueuse ou de manière ascendante en plusieurs étages.

6. Procédé suivant l'une des revendications 1 à 5,
dans lequel on effectue le procédé de transformation à chaud d'une pièce en matériau stratifié en matière thermoplastique, par les moyens et le mesures suivants :
dans une installation, ayant un poste (A) de chargement et de déchargement, ayant un poste (B) de transformation, un poste (C) de chauffage et, éventuellement, un poste (D) de mesure de la température, on met à disposition, dans le poste (A) de chargement et de déchargement, un cadre (20) de transport rectangulaire, qui est mobile le long de ses deux grands côtés (22' et 22'') sur, respectivement, un rail (15) rectiligne, notamment en glissant, qui passe dans toute l'installation ;
sur ce cadre (20) de transport, on dépose une palette (30) en forme de cadre, dont le cadre (31) entoure un évidement (35) ;
sur cette palette (30) en forme de cadre, on dépose, suivant un agencement défini, la pièce (3) en matériau stratifié plane à transformer, seulement une zone (6) de bord de la pièce en matériau stratifié s'appliquant au cadre (31) de la palette (30) en forme de cadre ; on déplace le cadre (20) de transport avec la palette (30) en forme de cadre et la pièce (3) en matériau stratifié plane le long des deux rails (15) du poste (A) de chargement et de déchargement, en passant par le poste (B) de déformation, au poste (C) de chauffage, où on porte la pièce (3) en matériau stratifié plane sans contact à une température donnée à l'avance ;
on ramène ensuite, le long des deux rails (15), du poste (C) de chauffage au poste (B) de transformation, le cadre (20) de transport avec la palette (30) en forme de cadre et la pièce (3) en matériau stratifié plane chaude, poste de transformation où le cadre (20) de transport, maintenu sur les deux rails (15), prend un agencement défini par rapport à un outil (49) de moulage, qui a :
- une moitié (80) supérieure d'outil de moulage, qui forme une cloche (82) sous pression, dans laquelle un agent sous pression fluide, notamment de l'air comprimé, peut être introduit sous une pression haute d'agent sous pression et qui a une surface (85) d'étanchéité faisant le tour, dans laquelle est aménagée une rainure (89) faisant le tour, dans laquelle est inséré un joint d'étanchéité ;
- une moitié (50) inférieure d'outil de moulage, qui a une plaque (52) de fond, sur laquelle est appuyée une sous-structure (54), sur laquelle est fixé un moule (55), pourvu de contours (56', 56'', 56''') de moule ou une pièce de support en 3D à revêtir, pourvue de contours de pièce de support ;
- cette sous-structure (54) est entourée d'un cadre de serrage appuyé sur la plaque (52) de fond ou d'un cadre (57) à ressort appuyé sur la plaque (52) de fond à l'aide de ressorts (58) de compression, cadre sur lequel la pièce (3) en matériau stratifié plane chaude à transformer peut être déposée ;
- cette moitié (50) inférieure d'outil de moulage peut prendre une position de dégagement éloignée de la moitié (80) supérieure de l'outil de moulage, ainsi qu'une position de fermeture voisine de la moitié (80) supérieure de l'outil de moulage ;
- dans cette position dégagée, le cadre (20) de transport peut être introduit avec la palette (30) de cadre et avec la pièce (3) en matériau stratifié plane chaude entre les deux moitiés (50 et 80) de l'outil de moulage et prendre une position, dans laquelle le cadre de serrage ou le cadre (57) à ressort prend une position à l'intérieur et en dessous de l'évidement (35) de la palette (30) en forme de cadre ;
- dans cette position de fermeture, la pièce (3) en matériau stratifiée chaude conserve une distance petite à la surface (85) d'étanchéité de la cloche (82) sous pression et peut y être appliqué au joint d'étanchéité, la cloche (82) sous pression étant rendu étanche d'une manière à la pression par rapport à la pièce (3) en matériau stratifié ; et
dans cette position, on introduit, dans la cloche (82) sous pression, un agent sous pression fluide, notamment de l'air comprimé, sous une pression de l'agent sous pression de 20 bar à 300 bar,
qui conforme la pièce (3) en matériau stratifié chaude en un laps de temps plus petit que 5 secondes, isostatiquement aux contours (56', 56'', 56*'''*) du moule ou aux contours de la pièce support en 3D.
**caractérisé en ce que**
- la pièce (3) en matériau stratifié plane s'applique, par sa zone (6) de bord, au cadre (31) de la palette (30) en forme de cadre, de manière à ce que des parties de cette zone (6) de bord de la pièce (3) en matériau stratifié plane chaude puissent glisser sur ce cadre (31) dans une première direction (R) du matériau stratifié ;
- le cadre de serrage ou le cadre (57) à ressort a, sur deux parties de cadre parallèles, à distance l'une de l'autre et opposées l'une à l'autre, respectivement, une partie de surface de support ayant un contour, qui n'est pas plan, les deux ensemble formant un contour (68) de surface de support non plan ; ou
- le cadre de serrage ou le cadre (57) à ressort a un cadre (60), sur lequel est appuyée et fixée une structure (62) en forme de cadre, qui a, sur deux parois (64' et 64*''*) latérales, parallèles, à distance et opposées l'une à l'autre, respectivement, une partie (66' et 66'') de surface de support ayant un contour (67' et 67'') non plan, les deux ensemble formant un contour (68) de surface de support non plan ;
- la cloche (82) sous pression a, sur deux parties (84' et 84'') de cloche sous pression, parallèles, à distance et opposées l'une à l'autre, respectivement une partie (86' et 86'') de surface d'étanchéité, ayant un contour (87' et 87'') non plan, les deux ensemble formant un contour (88) de surface d'étanchéité non plan, ce contour (88) de surface d'étanchéité non plan étant congruent au contour (68) de surface de support non plan ; et
- lorsque l'on soulève la moitié (50) inférieure de l'outil de moulage, pour obtenir la position de fermeture de l'outil (49) de moulage, les parties (66' et 66'') de surface de support non planes du cadre de serrage, du cadre (57) à ressort ou de la structure (2) en forme de cadre, prennent, par en dessous, des parties (7'et 7'') de bord parallèles, à distance et opposées l'une à l'autre de matériau stratifié, les entraînent avec elles et, finalement, les amènent près de la surface (85) d'étanchéité, y compris le contour (88) de surface d'étanchéité non plan de la cloche (82) sous pression, toute la pièce (3) en matériau stratifié plane chaude étant transformée sur ses contours (68 et 88) congruents non plans, uni-axialement, perpendiculairement au plan du matériau stratifié et seulement dans la première direction (R) du matériau stratifié, donc mono-directionnellement, en une pré-ébauche (W) déformée mono-directionnellement et adaptée à ces contours (68 et 88).

7. Procédé suivant la revendication 6,
**caractérisé en ce que**
l'on utilise un cadre (57) à ressort, qui est appuyé à l'aide de ressorts (58) de compression sur la plaque (52) de fond et qui a un cadre (60), sur lequel est appuyée et fixée une structure (62) en forme de cadre, dont les parois (64' et 64*''*) latérales mettent à disposition les parties (66' et 66*''*) de surface d'appui non planes pour transformer la pièce (3) en matériau stratifié plane chaude en la pré-ébauche (W) déformée mono-directionnellement ;
après la transformation de la pièce (3) en matériau stratifié plane chaude en la pré-ébauche (W) déformée mono-directionnellement, ce cadre (57) à ressort a atteint son point mort haut ;
ensuite le mouvement d'ascension de la moitié (50) inférieure de l'outil de moulage est continué encore un peu, les ressorts (58) de compression étant comprimés, sans que le cadre (57) à ressort soit soulevé davantage ; et
pendant cette continuation du mouvement d'ascension, le moule (55), avec ses contours (56', 56'', 56*'''*) de moule ou la pièce de support en 3D, avec ses contours de pièce de support en 3D, plonge, au moins en partie, dans la forme de la pré-ébauche (W) chaude et provoque un formage positif « mécanique » orienté de cette pré-ébauche (W).

8. Procédé suivant la revendication 6 ou 7,
**caractérisé en ce que**
le cadre (20) de transport, ramené du poste (C) de chauffage au poste (B) de transformation, ensemble avec la palette (3) en forme de cadre et la pièce (3) en matériau stratifié plane chaude, qui s'y applique, est mis sur les rails (15), un peu en dessous de la moitié (80) supérieure de l'outil de moulage prenant sa position abaissée ; et
après production de la pré-ébauche (W) déformée mono-directionnellement, la palette (30) en forme de cadre, portant cette pré-ébauche (W) est, conjointement avec cette pré-ébauche (W), séparée du cadre de transport et soulevée un peu du cadre (60), du cadre de serrage ou du cadre (57) à ressort jusqu'à ce que la moitié (50) inférieure de l'outil de moulage ait atteint, à la fin de sa course, son point mort haut.

9. Procédé suivant l'une de revendications 6 à 8,
**caractérisé en ce que**
le moyen d'étanchéité, sur la surface (85) d'étanchéité de la cloche (82) sous pression, est une garniture (90) profilée en forme de cordon, qui a un corps (91) inséré dans la rainure (89) de la surface (85) d'étanchéité, dont part une lèvre (92) d'étanchéité élastique, qui a un flanc (93) extérieur de lèvre d'étanchéité et un flanc (94) intérieur de lèvre d'étanchéité ;
dans la position de fermeture de l'outil (49) de moulage, la surface (65) de support, sur la moitié (50) inférieure de l'outil de moulage, prend, par rapport à la surface (85) d'étanchéité sur la moitié (80) supérieure de l'outil de moulage, une distance, qui représente : [épaisseur de couche de la pièce en matériau stratifié à déformer plus (100 µm à 1200 pm)], de manière à former une fente entre la surface (65) de support non plane et la surface (85) d'étanchéité non plane ; et
le fluide sous pression, pénétrant sous haute pression dans la cloche (82) sous pression, arrive sur le flanc (94) de lèvre d'étanchéité intérieure et déforme la lèvre (92) d'étanchéité élastique, de manière à ce que cette lèvre (92) d'étanchéité recouvre cette fente et rende étanche la zone de bord de la pré-ébauche (W) déformée mono-directionnellement vis-à-vis de la pression par rapport à la surface (85) d'étanchéité de la cloche (82) sous pression.

10. Procédé suivant l'une des revendications 1 à 9,
**caractérisé en ce que**
l'on utilise une pièce en matériau stratifié, qui est en matière plastique thermoplastique choisie dans le groupe qui comprend :
- les polycarbonates (PC) ou les copolycarbonates à base de diphénol, notamment également à base de bisphénol A et de composés modifiés du bisphénol ;
- les polyacrylates et copolyacrylates ;
- les polyméthacrylates et les copolyméthacrylates, dans ce cas notamment, le poly(méthylacrylate de méthyle), (polyméthacrylate, PMMA) ;
- les polymères ou les copolymères avec du styrène, dans ce cas notamment également du polystyrène de grande résistance au chocs, du polystyrène acrylonitrile (SAN) et des terpolymères d'acrylonitrile de butadiène et de styrène (ABS) ;
- des polyuréthanes thermoplastiques (TPU) comme liants en agencement en plusieurs couches ;
- des polysulfones, dans ce cas notamment la polyphénylsulfone et la polyarylsulfone (PSU) ;
- les polyesters (PE), dans ce cas notamment les polycondensats et les copolycondensats de l'acide téréphtalique, y compris les polytéréphtalates d'éthylène ou copolytéréphtalates d'éthylène [PET ou CoPET, les PET modifiés au glycol (PETG)] et les polytéréphtalates de butylène ou les copolytéréphtalates de butylène (PBT ou CpPBT) ;
- les polyamides (PA) ;
- le polypropylène (PP) ;
- le poly(chlorure de vinyle (PVC) ; et
- des mélanges ou des associations des matières mentionnées ci-dessus.

11. Procédé suivant l'une des revendications 1 à 10,
**caractérisé en ce que**
l'on utilise le matériau stratifié sous la forme d'une feuille de matière plastique à une couche ou sous la forme d'un composite à plusieurs couches composé de deux ou plusieurs feuilles de matière plastique, chaque feuille individuelle de matière plastique ayant une épaisseur de couche de 5 µm à 1000 µm, notamment une épaisseur de couche de 200 µm à 750 µm.

12. Procédé suivant l'une des revendications 1 à 10,
**caractérisé en ce que**
l'on utilise le matériau en couche sous la forme d'une plaque à une seule couche en matière plastique thermoplastique, qui a une épaisseur de couche de 1000 µm à 10.000 µm, notamment une épaisseur de couche de 3000 µm à 10.000 µm ou sous la forme d'un composite à plusieurs couches composé d'une ou de plusieurs plaques en matière plastique, le cas échéant ensemble avec une ou plusieurs feuilles en matière plastique, respectivement, en matière plastique thermoplastique, l'épaisseur de couche totale d'un composite de ce genre ne dépassant pas 12.000 µm.

13. Procédé suivant l'une des revendications 1 à 12,
**caractérisé en ce que**
l'on utilise un matériau stratifié à une seule couche ou à plusieurs couches, qui est imprimé, métallisé et/ou sinon revêtu d'une autre façon, au moins en partie, sur une face ou sur les deux faces ou, dans le cas d'un matériau stratifié à plusieurs couches, une impression, métallisation et/ou un autre revêtement de ce genre peut être prévu également en sandwich entre deux couches de matière plastique transparentes.

14. Procédé suivant l'une des revendications 1 à 13,
**caractérisé en ce que**
l'on chauffe, sans contact, à l'aide d'un chauffage par rayonnement, avant la transformation, un matériau stratifié en matière plastique thermoplastique, afin qu'au moins une face de toute la surface conformée ou de la partie prépondérante de la surface conformée de la pièce en matériau stratifié à transformer prenne une température de surface dans la plage de [VST (= point de ramollissement Vicat) B50 (°C) de cette matière plastique moins 20 °C] jusqu'à [VST B50 (°C) de cette matière plastique plus 23°C] .

15. Procédé suivant la revendication 14,
**caractérisé en ce que**
la pièce en matériau stratifié plane est une plaque en matière plastique thermoplastique ayant une épaisseur de couche de 3000 µm à 10.000 µm ;
on maintient cette plaque pour le chauffage dans le poste (C) de chauffage pendant un laps de temps entre un champ (41) supérieur de chauffage et un champ (42) inférieur de chauffage d'un dispositif (40) de chauffage, chaque champ (41, 42) de chauffage ayant un écran de chauffage constitué d'un certain nombre de spots (44, 45', 45'') plats infrarouge pouvant être commandés individuellement ;
on maintient les deux écrans de chauffage chacun à une température de surface, en moyenne comprise entre environ 120°C à 180°C au-dessus du VST 50B (°C) de la matière plastique respective ; et
on maintient la plaque à chauffer introduite à la température ambiante entre ces écrans de chauffage pendant un temps de séjour, qui dépend de l'épaisseur de la plaque, de [(valeur numérique de l'épaisseur de la plaque en mm) x 23 (secondes) + z (secondes)] entre ces écrans de chauffage pour effectuer le chauffage de la plaque jusqu'à la température de transformation ; z a, dans ce cas, une valeur de 3 à 60.

16. Procédé suivant la revendication 14 ou 15n
**caractérisé en ce que**
la pièce en matériau stratifié ainsi chauffée passe sur le chemin allant du poste (C) de chauffage au poste (B) de transformation dans un poste (D) de mesure de la température, dans lequel, à l'aide d'une caméra (47) d'imagerie thermique, la répartition de la température, sur une surface de la pièce en matériau stratifié, est échantillonnée, rendue visible et/ou représentée d'une autre façon.

17. Procédé suivant l'une des revendications 1 à 16,
**caractérisé en ce que**
l'on utilise la transformation à chaud d'une pièce en matériau stratifié en une matière plastique thermoplastique à une couche ou à plusieurs couches, pour fabriquer une pièce moulée en 3D.

18. Procédé suivant l'une des revendications 1 à 16,
**caractérisé en ce que**
l'on utilise la transformation à chaud d'une pièce en matériau stratifié en matière plastique thermoplastique pour la fabrication d'une pièce de support en 3D, qui est revêtue d'une pièce en matériau stratifié, le matériau stratifié adhérant à la pièce de support en 3D par une colle.

19. Procédé suivant la revendication 18,
**caractérisé en ce que**
- on dépose, sur une feuille (10) de transfert, sur une découpe (11) en matériau stratifié adaptée à la partie de support en 3D ;
- on dépose seulement une zone (6) de bord de cette feuille (10) de transfert sur le cadre (31) d'une palette (30) en forme de cadre ;
- on effectue, sur la feuille (10) de transfert et la découpe (11) en matériau stratifié, conjointement, la transformation monodirectionnelle en la pré-ébauche déformée monodirectionnellement ;
- on serre seulement la feuille (10) de transfert ainsi déformée entre la surface (65) de support de la moitié (50) inférieure de l'outil de moulage et la surface (85) d'étanchéité de la moitié (80) supérieure de l'outil de moulage ; et
- en alimentant en le fluide sous pression à haute pression, le fluide sous pression arrive sur la feuille (10) de transfert et transforme conjointement la feuille (10) de transfert ensemble avec la découpe (11) en matériau stratifié, la découpe (11) en matériau stratifié s'appliquant à la feuille (10) de transfert étant appliquée par l'intermédiaire d'une couche (12) de colle à la partie de support en 3D et la revêtant.

20. Outil de moulage
pour la transformation sous haute pression d'une pièce en matériau stratifié à une couche ou à plusieurs couches, comprenant une moitié (80) supérieure d'outil de moulage, qui forme une cloche (82) sous pression,
- dans laquelle un agent fluide sous pression, notamment de l'air comprimé, peut être introduit sous une pression de l'agent sous pression de 20 bar à 300 bar, et
- qui a une surface (85) d'étanchéité faisant le tour, dans laquelle est ménagée une rainure (89) faisant le tour, dans laquelle est inséré un moyen d'étanchéité ; et
comprenant une moitié (50) inférieure d'outil de moulage,
- qui a une plaque (52) de fond, qui est appuyée sur une sous-structure (54), à laquelle un moule (55), pourvu de contours (56', 56*''*, 56*'''*) de moule, ou une partie de support en 3D à revêtir, pourvue de contours de pièce de support en 3D, est fixé, sur lesquels contours la pièce (3) en matériau stratifié, soumise à l'agent sous pression fluide, est conformée ; et
- cette sous-structure (54) est entourée d'un cadre de serrage appuyé sur la plaque (62) de fond ou d'un cadre (57) à ressort appuyé sur des ressorts (58) de compression sur la plaque (52) de fond, cadre sur lequel la pièce (3) en matériau stratifié chaude à conformer peut être déposée ; et
cette moitié (50) inférieure d'outil de moulage peut prendre une position de dégagement éloignée de la moitié (80) supérieure de l'outil de moulage, ainsi qu'une position de fermeture voisine de la moitié (80) supérieure de l'outil de moulage ; dans lequel
- dans cette position dégagée, le cadre (20) de transport peut être introduit avec la palette (30) de cadre et avec la pièce (3) en matériau stratifié plane chaude entre les deux moitiés (50 et 80) de l'outil de moulage et prendre une position, dans laquelle le cadre de serrage ou le cadre (57) à ressort prend une position à l'intérieur et en dessous de l'évidement (35) de la palette (30) en forme de cadre ;
- dans cette position de fermeture, la pièce (3) en matériau stratifié chaude conserve une distance petite à la surface (85) d'étanchéité de la cloche (82) sous pression et peut y être appliquée au moyen d'étanchéité, la cloche (82) sous pression étant rendue étanche vis-à-vis de la pression par rapport à la pièce (3) en matériau composite ; et
- dans cet agencement dans la cloche (82) sous pression, un agent sous pression fluide, notamment de l'air comprimé, peut être introduit sous une pression de l'agent sous pression de 20 bar à 300 bar, laquelle conforme la pièce (3) chaude en matériau stratifié en un laps de temps plus petit que 5 secondes, isostatiquement, aux contours (56', 56*''*, 56*'''*) du moule ou au contour de la pièce de support en 3D ;
**caractérisé en ce que**
- le cadre de serrage ou le cadre (57) à ressort a, sur deux parties de cadre parallèles, à distance l'une de l'autre et opposées l'une à l'autre, respectivement, une partie de surface de support ayant un contour, qui n'est pas plan, les deux ensemble formant un contour (68) de surface de support non plan ; ou
- le cadre de serrage ou le cadre (57) à ressort a un cadre (60), sur lequel est appuyée et fixée une structure (62) en forme de cadre, qui a, sur deux parois (64' et 64*''*) latérales, parallèles, à distance et opposées l'une à l'autre, respectivement, une partie (66' et 66*''*) de surface de support ayant un contour (67' et 67'') non plan, les deux ensemble formant un contour (68) de surface de support non plan ;
- la cloche (82) sous pression a, sur deux parties (84' et 84'') de cloche sous pression, parallèles, à distance et opposées l'une à l'autre, respectivement une partie (86' et 86'') de surface d'étanchéité, ayant un contour (87' et 87'') non plan, les deux ensemble formant un contour (88) de surface d'étanchéité non plan, ce contour (88) de surface d'étanchéité non plan étant congruent au contour (68) de surface de support non plan ; et
- lorsque l'on soulève la moitié (50) inférieure de l'outil de moulage, pour atteindre la position de fermeture de l'outil (49) de moulage, les parties (66' et 66*''*) de surface de support non planes du cadre de serrage, du cadre (57) à ressort ou de la structure (2) en forme de cadre, prennent, par en dessous, des parties (7'et 7'') de bord parallèles, à distance et opposées l'une à l'autre de matériau stratifié, les entraînent avec elles et, finalement, les amènent près de la surface (85) d'étanchéité, y compris le contour (88) de surface d'étanchéité non plan de la cloche (82) sous pression, toute la pièce (3) en matériau stratifié plane chaude étant transformée sur ses contours (68 et 88) congruents non plans, uni-axialement, perpendiculairement au plan du matériau stratifié et seulement dans la première direction (R) du matériau stratifié, donc mono-directionnellement, en une pré-ébauche (W) déformée mono-directionnellement et adaptée à ces contours (68 et 88).

21. Outil de moulage suivant la revendication 1,
**caractérisé en ce que**
les contours (67' et 67'') non plans, se trouvant sur la surface (65) de support du cadre de serrage ou du cadre (57) à ressorts ou sur les parois (64', 64*''*) latérales de la structure (62) en forme de cadre, sont en forme de toit, incurvés ou cintrés régulièrement ou irrégulièrement et sont pourvus d'un point (69) culminant ou sont sinueux ou conformés montant en plusieurs étages.

22. Outil de moulage suivant la revendication 20 ou 21,
**caractérisé en ce qu'**
au cours du mouvement de levée de la moitié (50) inférieure de l'outil de moulage, le cadre (60) du cadre de serrage ou du cadre (57) à ressorts prend par en-dessous, par sa zone (61) de bord, le côté inférieur de la palette (30) en forme de cadre sur son pourtour (32) intérieur, soulève un peu cette palette (30) avec le matériau stratifié qui s'y trouve et, ainsi, la détache et la sépare du cadre (20) de transport maintenu à poste fixe.

23. Outil de moulage suivant l'une des revendications 20 à 22,
**caractérisé en ce qu'**
il y a un cadre (57) à ressorts, appuyé sur la plaque (52) de fond à l'aide de ressorts (58) de compression, qui a un cadre (60), sur lequel est appuyée et fixée une structure (62) en forme de cadre, dont les parois (64' et 64'') latérales mettent à disposition les parties (66' et 66'') de surface d'appui non planes pour transformer la pièce (3) en matériau stratifié plane chaude en la pré-ébauche (W) déformée mono-directionnellement ;
après la transformation de la pièce (3) en matériau stratifié plane chaude en la pré-ébauche (W) déformée monodirectionnellement, ce cadre (57) à ressorts prend sa position de point mort haut ;
ensuite, le mouvement de levée de la moitié (50) inférieure de l'outil de moulage peut être continué encore un peu, les ressorts (58) de compression étant comprimés, sans soulever davantage le cadre (57) à ressort ; et
pendant cette continuation du mouvement de levée, le moule (55), par ses contours (56', 56'', 56*'''*) de moule ou la partie de support en 3D par ses contours de pièce de support en 3D, plonge, au moins en partie dans la forme de la pré-ébauche (W) chaude et provoque un formage positif « mécanique » orienté sur cette pré-ébauche (W).

24. Outil de moulage suivant l'une des revendications 20 à 23,
**caractérisé en ce que**
le moyen d'étanchéité, sur la surface (85) d'étanchéité de la cloche (82) sous pression, est une garniture (90) profilée en forme de cordon, qui a un corps (91) inséré dans la rainure (89) de la surface (85) d'étanchéité, dont part une lèvre (92) d'étanchéité élastique, qui a un flanc (93) extérieur de lèvre d'étanchéité et un flanc (94) intérieur de lèvre d'étanchéité ;
dans la position de fermeture de l'outil (49) de moulage, la surface (65) de support, sur la moitié (50) inférieure de l'outil de moulage, prend, par rapport à la surface (85) d'étanchéité sur la moitié (80) supérieure de l'outil de moulage, une distance, qui représente : [épaisseur de couche de la pièce en matériau stratifié à déformer plus (100 µm à 1200 µm)], de manière à former une fente entre la surface (65) de support non plane et la surface (85) d'étanchéité non plane ; et
le fluide sous pression, pénétrant sous haute pression dans la cloche (82) sous pression, arrive sur le flanc (94) de lèvre d'étanchéité intérieure et déforme la lèvre (92) d'étanchéité élastique, de manière à ce que cette lèvre (92) d'étanchéité recouvre cette fente et rende étanche la zone de bord de la pré-ébauche (W) déformée mono-directionnellement vis-à-vis de la pression par rapport à la surface (85) d'étanchéité de la cloche (82) sous pression.

25. Outil de moulage suivant l'une des revendications 20 à 24,
**caractérisé en ce que**,
après que la transformation isostatique sous haute pression est finie et que la cloche (82) sous pression est alimentée en air, la palette (30) en forme de cadre, sur laquelle se trouve la pièce moulée formée ou la pièce de support en 3D revêtue, peut être abaissée par rapport à la moitié (80) supérieure de l'outil de moulage et être déposée sur le cadre (20) de transport maintenu à poste fixe ; et
ensuite, la moitié (80) supérieure de l'outil de moulage peut être levée un peu plus pour pouvoir retirer, sans perturbation de la zone (B) de transformation, le cadre (20) de transport avec la pièce moulée en 3D qui y est déposée ou la pièce de support en 3D revêtue et pour pouvoir l'envoyer au poste (A) de chargement et de déchargement.

26. Outil de moulage suivant la revendication 20,
**caractérisé en ce que**
la pièce (3) en matériau stratifié plane à transformer peut être déposée sur une palette (30) plane en forme de cadre, dont le cadre (31) est pourvu, sur son pourtour (32) intérieur, d'un certain nombre de saillies (33) à distance en saillie vers l'intérieur et la zone (6) de bord de la pièce (3) en matériau stratifié n'est déposé que sur ces saillies (33).

27. Outil de moulage suivant la revendication 26,
**caractérisé en ce que**
le cadre de serrage ou le cadre (57) à ressort ou les surfaces (64' et 64*''*) latérales de la structure (62) en forme de cadre, appuyés au cadre (60) du cadre (57) à ressort et y étant fixés,
- ont un pourtour (72) extérieur structuré et une surface (65) de support non plane, ayant des évidements (74) en saillie vers l'intérieur et des panneaux (76) en saillie vers l'extérieur sur ce pourtour (72) extérieur
- ce pourtour (72) extérieur est adapté au pourtour (32) intérieur du cadre (31) de la palette (30) en forme de cadre, de manière à ce que ce cadre de serrage ou ce cadre (57) à ressort ou cette structure (62) en forme de cadre puissent se déplacer en contact étroit avec le pourtour (32) intérieur du cadre (31) de palette par rapport à la palette (30) maintenue à poste fixe ;
- les saillies (33) du pourtour (32) intérieur du cadre (31) de la palette pénètrent dans les évidements (74) du pourtour (72) extérieur du cadre de serrage ou du cadre (57) à ressort ou de la structure (62) en forme de cadre ;
- les panneaux (76) en saillie du pourtour (72) extérieur du cadre de serrage ou du cadre (57) à ressort ou de la structure (62) en forme de cadre pénètrent dans les espaces intermédiaires entre, respectivement, deux saillies (33) voisines du cadre (31) de palette ; et
- lorsque le cadre de serrage ou le cadre (57) à ressort ou la structure (62) en forme de cadre est levé par rapport à la palette (30) maintenue à poste fixe, ces panneaux (76) en saillie, sur le pourtour (72) extérieur du cadre de serrage ou du cadre (57) à ressort ou de la structure (62) en forme de cadre, prennent par en-dessous les parties (7' et 7'') de bord de la pièce (3) en matériau stratifié plane, les entraînent et déposent ainsi la pièce (3) en matériau stratifié sur la surface (65) de support du cadre de serrage ou du cadre (57) à ressort ou de la structure (62) en forme de cadre,
- de sorte que, lorsque le cadre de serrage ou le cadre (57) à ressort ou la structure (62) en forme de cadre est levé davantage, par rapport à la moitié (80) supérieure de l'outil de moulage maintenu à poste fixe, la pièce (3) en matériau stratifié est transformée entre le contour (68) non plan de surface de support et le contour (88) de surface d'étanchéité non plan, qui en est congruent monodirectionnellement en une pré-ébauche (W) conformée monodirectionnellement.

28. Outil de moulage suivant la revendication 27,
**caractérisé en ce que**
sur des saillies (33) en saillie sélectionnées du pourtour (32) intérieur du cadre (31) de la palette sont fixées des broches (39) en saillie verticalement, qui pénètrent ainsi dans des trous ou des boutonnières ménagés dans la zone (6) de bord de la pièce (3) en matériau stratifié, de manière à ce que des parties de cette zone (6) de bord puisse glisser sur le cadre (31) de la palette (30) en forme de cadre.
